(19) Europäisches Patentamt
European Patent Office
Office européen des brevets

(11) **EP 4 753 261 A1**

(12) **EUROPEAN PATENT APPLICATION**
published in accordance with Art. 153(4) EPC

(43) Date of publication:
03.06.2026 Bulletin 2026/23

(21) Application number: 24846087.5

(22) Date of filing: 26.07.2024

(51) International Patent Classification (IPC):
H04N 19/30 (2014.01)        H04N 19/597 (2014.01)
H04N 19/70 (2014.01)        H04N 19/174 (2014.01)

(52) Cooperative Patent Classification (CPC):
H04N 19/174; H04N 19/30; H04N 19/597;
H04N 19/70

(86) International application number:
PCT/KR2024/010947

(87) International publication number:
WO 2025/023786 (30.01.2025 Gazette 2025/05)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.07.2023 KR 20230097205

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) A point cloud data decoding method and device are disclosed. The point cloud data decoding method according to embodiments may comprise the steps of: receiving geometry data, attribute data, and signaling information; decoding the geometry data on the basis of the signaling information; and decoding the attribute data on the basis of the signaling information and the decoded geometry data.

FIG. 36

**Description**

[Technical Field]

Embodiments relate to a method and device for processing point cloud content.

[Background Art]

Point cloud content is content represented by a point cloud, which is a set of points belonging to a coordinate system representing a three-dimensional space(or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

In other words, a high throughput is required to transmit and receive data of the point cloud. Accordingly, in the process of transmitting and receiving the point cloud data, in which encoding for compression and decoding for decompression are performed, the computational operation is complicated and time-consuming due to the large volume of the point cloud data.

[Disclosure]

[Technical Problem]

An object of the present disclosure devised to solve the above-described problems is to provide devices and methods for efficiently transmitting/receiving a point cloud.

An object of the embodiments is to provide a device and a method for resolving latency and encoding/decoding complexity.

Another object of the embodiments is to provide a device and a method for efficiently providing a scalable service by performing a neighbor search in units of sub-groups.

The technical objectives are not limited to the aforementioned ones, and the scope of the embodiments can be extended to other technical objectives that can be inferred by those skilled in the art based on the entire description.

[Technical Solution]

To achieve these objects and other advantages and in accordance with the purpose of the present disclosure, as embodied and broadly described herein, a method of decoding point cloud data may include receiving geometry data, attribute data, and signaling information, decoding the geometry data based on the signaling information, and decoding the attribute data based on the signaling information and the decoded geometry data.

According to embodiments, the decoding of the geometry data may include receiving the geometry data on a sub-group basis, and reconstructing geometry data within a sub-group to be decoded based on the signaling information and occupancy map information corresponding to the sub-group.

According to embodiments, the reconstructing may include, based on that a boundary of a bounding box of the sub-group mismatches a boundary of the occupancy map information, updating the boundary of the occupancy map information based on the boundary of the bounding box of the sub-group, searching for neighbor nodes of a current node to be decoded within the sub-group based on the updated boundary of the occupancy map information and generating a neighbor pattern, and reconstructing geometry data of the current node based on the neighbor pattern.

According to embodiments, the updating may include, based on that a minimum value of the boundary of the bounding box of the sub-group is greater than a minimum value of the boundary of the occupancy map information, updating the minimum value of the boundary of the occupancy map information to the minimum value of the boundary of the bounding box of the sub-group, and, based on a maximum value of the boundary of the bounding box of the sub-group is less than a maximum value of the boundary of the occupancy map information, updating the maximum value of the boundary of the occupancy map information to the maximum value of the boundary of the bounding box of the sub-group.

According to embodiments, a device for decoding point cloud data may include a receiver configured to receive geometry data, attribute data, and signaling information, a geometry decoder configured to decode the geometry data based on the signaling information, and an attribute decoder configured to decode the attribute data based on the signaling information and the decoded geometry data.

According to embodiments, the geometry decoder is configured to receive the geometry data on a sub-group basis, and reconstruct geometry data within a sub-group to be decoded based on the signaling information and occupancy map information corresponding to the sub-group.

According to embodiments, the geometry decoder is configured to update, based on that a boundary of a bounding box of the sub-group mismatches a boundary of the occupancy map information, the boundary of the occupancy map information based on the boundary of the bounding box of the sub-group, search for neighbor nodes of a current node to be decoded within the sub-group based on the updated boundary of the occupancy map information and generate a neighbor pattern, and reconstruct geometry data of the current node based on the neighbor pattern.

According to embodiments, the geometry decoder is configured to update, based on that a minimum value of the boundary of the bounding box of the sub-group is greater than a minimum value of the boundary of the occupancy map information, the minimum value of the boundary of the occupancy map information to the minimum value of the boundary of the bounding box of the sub-group, and update, based on a maximum value of the boundary of the bounding box of the sub-group is less than a maximum value of the boundary of the occupancy map information, the maximum value of the boundary of the occupancy map information to the maximum value of the boundary of the bounding box of the sub-group.

According to embodiments, a method of encoding point cloud data may include encoding geometry data, encoding attribute data, and transmitting the encoded geometry data, the encoded attribute data, and signaling information.

According to embodiments, the encoding of the geometry data may include partitioning the geometry data on a sub-group basis, and compressing geometry data within a sub-group to be encoded based on occupancy map information corresponding to the sub-group.

According to embodiments, the compressing may include, based on that a boundary of a bounding box of the sub-group mismatches a boundary of the occupancy map information, updating the boundary of the occupancy map information based on the boundary of the bounding box of the sub-group, searching for neighbor nodes of a current node to be encoded within the sub-group based on the updated boundary of the occupancy map information and generating a neighbor pattern, and compressing geometry data of the current node based on the neighbor pattern.

According to embodiments, the updating may include, based on that a minimum value of the boundary of the bounding box of the sub-group is greater than a minimum value of the boundary of the occupancy map information, updating the minimum value of the boundary of the occupancy map information to the minimum value of the boundary of the bounding box of the sub-group, and, based on a maximum value of the boundary of the bounding box of the sub-group is less than a maximum value of the boundary of the occupancy map information, updating the maximum value of the boundary of the occupancy map information to the maximum value of the boundary of the bounding box of the sub-group.

According to embodiments, a device for encoding point cloud data may include a geometry encoder configured to encode geometry data, an attribute encoder configured to encode attribute data, and a transmitter configured to transmit the encoded geometry data, the encoded attribute data, and signaling information.

According to embodiments, the geometry encoder is configured to partition the geometry data on a sub-group basis, and compress geometry data within a sub-group to be encoded based on occupancy map information corresponding to the sub-group.

According to embodiments, the geometry encoder is configured to update, based on that a boundary of a bounding box of the sub-group mismatches a boundary of the occupancy map information, the boundary of the occupancy map information based on the boundary of the bounding box of the sub-group, search for neighbor nodes of a current node to be encoded within the sub-group based on the updated boundary of the occupancy map information and generate a neighbor pattern, and compress geometry data of the current node based on the neighbor pattern.

According to embodiments, the geometry encoder is configured to update, based on that a minimum value of the boundary of the bounding box of the sub-group is greater than a minimum value of the boundary of the occupancy map information, the minimum value of the boundary of the occupancy map information to the minimum value of the boundary of the bounding box of the sub-group, and update, based on a maximum value of the boundary of the bounding box of the sub-group is less than a maximum value of the boundary of the occupancy map information, the maximum value of the boundary of the occupancy map information to the maximum value of the boundary of the bounding box of the sub-group.

[Advantageous Effects]

A device and a method according to embodiments may provide a high-quality point cloud service.

A device and a method according to embodiments may achieve various video codec schemes.

A device and a method according to embodiments may provide general-purpose point cloud content, such as for an autonomous driving service.

A device and a method according to embodiments may provide improved parallel processing and scalability by performing spatially adaptive partitioning of point cloud data for independent encoding and decoding of the point cloud data.

A device and a method according to embodiments may improve point cloud encoding and decoding performance by performing encoding and decoding by partitioning point cloud data into tiles and/or slices and signaling data required for the same.

A device and a method according to embodiments may partition and transmit compressed data for point cloud data according to a certain criterion. In addition, when layered coding is used, the compressed data may be partitioned and transmitted according to layers. Accordingly, the storage and transmission efficiency of a transmission device may increase.

A device and a method according to embodiments may increase the efficiency of scalable geometry encoding/decoding by performing a neighbor search based on a sub-group boundary and a boundary of a geometry occupancy atlas during geometry encoding/decoding.

A device and a method according to embodiments may improve geometry encoding and decoding performance by adjusting the boundary of the geometry occupancy atlas based on a sub-group boundary and performing a neighbor search during geometry encoding.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure.

FIG. 1 illustrates an example of a point cloud content providing system according to embodiments.

FIG. 2 is a block diagram illustrating a point cloud content providing operation according to embodiments.

FIG. 3 illustrates an example of a point cloud encoder according to embodiments.

FIG. 4 illustrates an example of an octree and an occupancy code according to embodiments.

FIG. 5 illustrates an example of a point configuration for each LOD according to embodiments.

FIG. 6 illustrates another example of a point configuration for each LOD according to embodiments.

FIG. 7 illustrates an example of a point cloud decoder according to embodiments.

FIG. 8 illustrates an example of a transmission device according to embodiments.

FIG. 9 illustrates an example of a reception device according to embodiments.

FIG. 10 illustrates an example of a structure capable of interworking with a point cloud data transmission/reception method/device according to embodiments.

FIGS. 11 and 12 are diagrams illustrating processes of encoding, transmitting, and decoding point cloud data according to embodiments.

FIG. 13 is a diagram illustrating an example of a layer-based point cloud data configuration according to embodiments.

FIG. 14(a) illustrates a bitstream structure of geometry data according to embodiments, and FIG. 14(b) illustrates a bitstream structure of attribute data according to embodiments.

FIG. 15 is a diagram illustrating an example of a bitstream configuration for delivering a bitstream on a layer-by-layer basis according to embodiments.

FIG. 16 illustrates an example of a bitstream alignment method used when a geometry bitstream and an attribute bitstream are multiplexed into a single bitstream according to embodiments.

FIG. 17 illustrates another example of a bitstream alignment method used when a geometry bitstream and an attribute bitstream are multiplexed into a single bitstream according to embodiments.

FIGS. 18(a) to 18(c) are diagrams illustrating examples of symmetrical geometry-attribute selection according to embodiments.

FIGS. 19(a) to 19(c) are diagrams illustrating examples of asymmetrical geometry-attribute selection according to embodiments.

FIGS. 20(a) to 20(c) illustrate an example of a method of configuring slices containing point cloud data according to embodiments.

FIGS. 21(a) and 21(b) illustrate a geometry coding layer structure according to embodiments.

FIG. 22 illustrates a layer group and sub-group structure according to embodiments.

FIGS. 23(a) to 23(c) illustrate a representation of layer group-based point cloud data according to embodiments.

FIG. 24 illustrates a point cloud data transmission/reception device/method according to embodiments.

FIG. 25 is a flowchart illustrating an example of an encoding method of an encoder according to embodiments.

FIG. 26 is a flowchart illustrating an example of a decoding method of a decoder according to embodiments.

FIG. 27 is a diagram illustrating another example of a point cloud transmission device according to embodiments.

FIG. 28 is a diagram illustrating another example of a point cloud reception device according to embodiments.

FIG. 29 illustrates a bitstream configuration according to embodiments.

FIGS. 30A and 30B illustrate an example of a syntax structure of a sequence parameter set according to embodiments.

FIG. 31 illustrates an example of a syntax structure of a dependent geometry data unit header according to embodiments.

FIG. 32 illustrates an example of a syntax structure of a layer group structure inventory according to embodiments.

FIG. 33 illustrates another example of a syntax structure of a dependent geometry data unit header according to embodiments.

FIG. 34 illustrates an example of a syntax structure of a geometry data unit header according to embodiments.

FIG. 35 illustrates an example of a syntax structure of a dependent geometry data unit header according to embodiments.

FIG. 36 is a diagram illustrating an example of updating an atlas range according to embodiments.

FIG. 37 is a diagram illustrating an example of providing a service by compressing geometry and attributes of point cloud data according to embodiments.

FIG. 38 is a diagram illustrating another example of providing a service by compressing geometry and attributes of point cloud data according to embodiments.

FIG. 39 is a diagram illustrating yet another example of providing a service by compressing geometry and attributes of point cloud data according to embodiments.

FIG. 40 is a flowchart illustrating a point cloud data transmission method according to embodiments.

FIG. 41 is a flowchart illustrating a point cloud data reception method according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

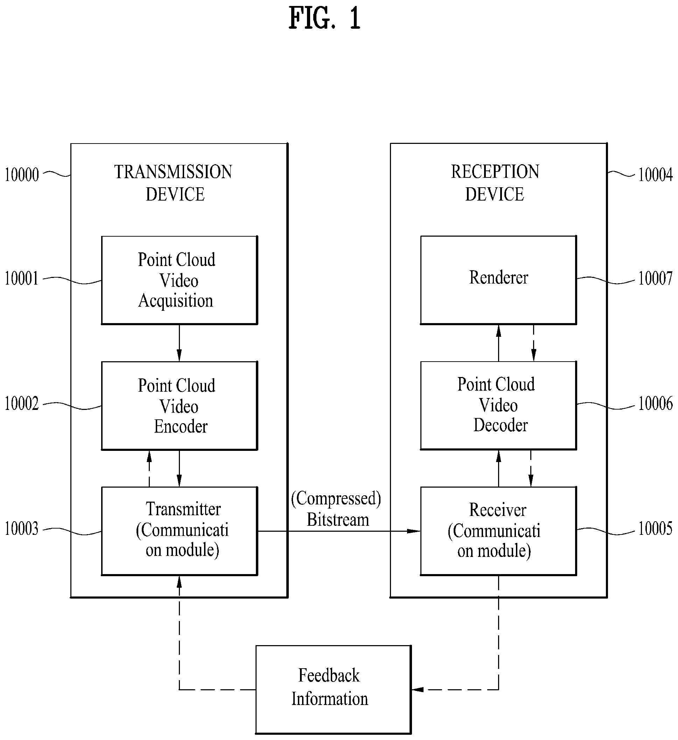

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. In one embodiment, the renderer 10007 may render the decoded point cloud video data according to a viewport or the like. The renderer 10007 may render not only the point cloud video data but also audio data to output point cloud content. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to the embodiments may represent information about a position, orientation, angle, and motion of a user's head. The reception device 10004 according to the embodiments may calculate viewport information based on the head orientation information. The viewport information is information about a region of a point cloud video that the user is viewing (that is, a region that the user is currently viewing). That is, the viewport information is information about a region that the user is currently viewing in the point cloud video. In other words, the viewport or viewport region may represent a region that the user is viewing in the point cloud video. A viewpoint is a point that the user is viewing in the point cloud video, and may represent a center point of the viewport region. That is, the viewport is a region centered on a viewpoint, and the size and shape of the region may be determined by a field of view (FOV). Accordingly, the reception device 10004 may extract the viewport information based on a vertical or horizontal FOV supported by the device as well as the head orientation information. In addition, the reception device 10004 may perform gaze analysis or the like based on the head orientation information and/or the viewport information to determine the way the user consumes a point cloud video, a region at which the user gazes in the point cloud video, and the gaze time. According to embodiments, the reception device 10004 may transmit feedback information including the result of the gaze analysis to the transmission device 10000. According to embodiments, a device such as a VR/XR/AR/MR display may extract a viewport region based on the position/orientation of a user's head and a vertical or horizontal FOV supported by the device. According to embodiments, the head orientation information and the viewport information may be referred to as feedback information, signaling information, or metadata.

The feedback information according to the embodiments may be acquired in the rendering and/or display process. The feedback information may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The feedback information may not only be transmitted to the transmitting side, but also be consumed at the receiving side. That is, the point cloud content providing system may process (encode/decode/render) point cloud data based on the feedback information. For example, the point cloud video decoder 10006 and the renderer 10007 may preferentially decode and render only the point cloud video for a region currently viewed by the user, based on the feedback information, namely, the head orientation information and/or the viewport information.

Furthermore, the reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, transmission system or the like, and the reception device 10004 may be called a decoder, a receiving device, a receiver, receiving system or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

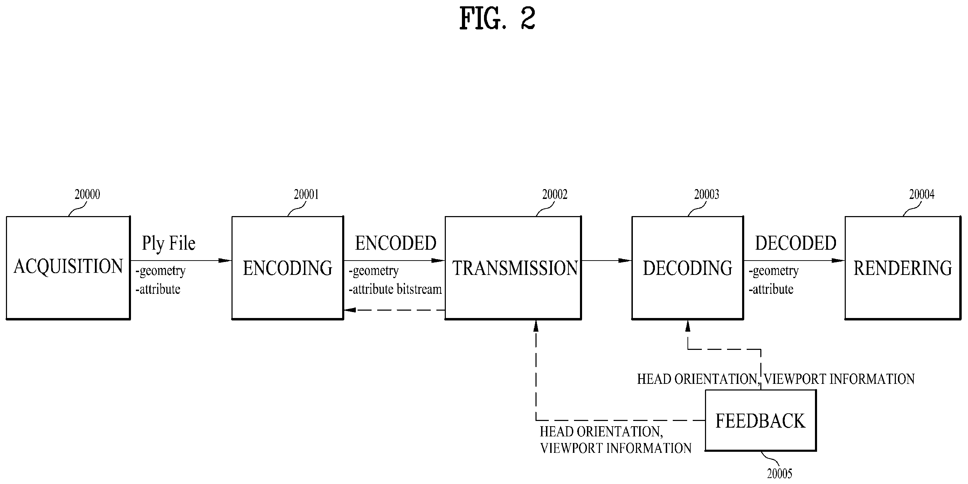

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

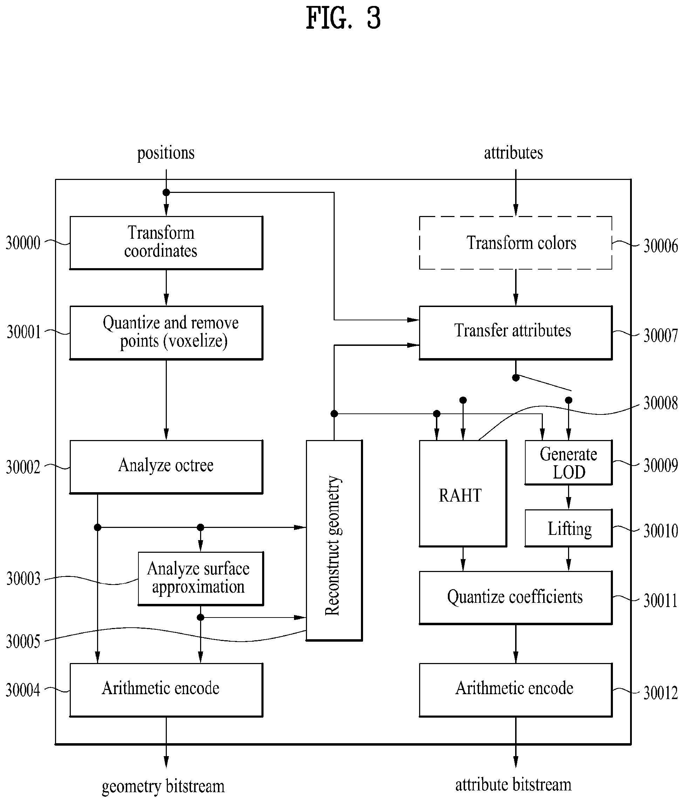

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud video encoder according to the embodiments includes a coordinate transformer (Transform coordinates) 30000, a quantizer (Quantize and remove points (voxelize)) 30001, an octree analyzer (Analyze octree) 30002, a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transfer attributes) 30007, a RAHT transformer 30008, an LOD generator (Generated LOD) 30009, a lifting transformer (Lifting) 30010, a coefficient quantizer (Quantize coefficients) 30011, and/or an arithmetic encoder (Arithmetic encode) 30012. In the point cloud encoder of FIG. 3, the coordinate transformer 30000, the quantizer 30001, the octree analyzer 30002, the surface approximation analyzer 30003, the arithmetic encoder 30004, and the geometry reconstructor 30005 may be grouped together and referred to as a geometry encoder. The color transformer 30006, the attribute transformer 30007, the RAHT transformer 30008, the LOD generator 30009, the lifting transformer 30010, the coefficient quantizer 30011, and/or the arithmetic encoder 30012 may be grouped together and referred to as an attribute encoder.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

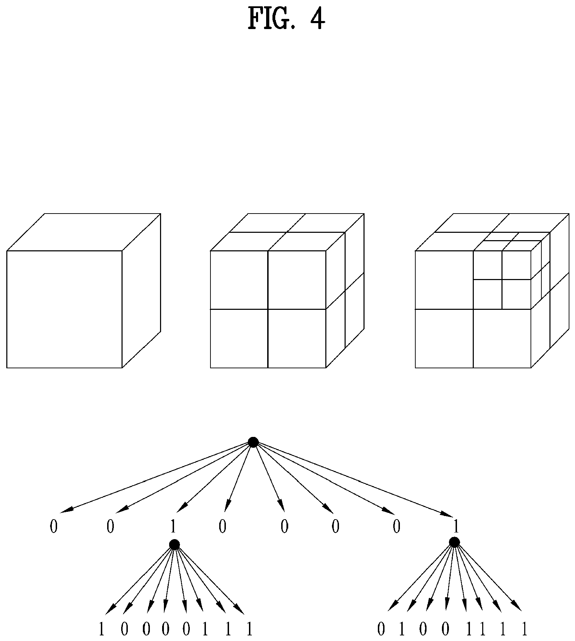

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$\mathrm{d} = Ceil\left(Log2\left(Max\left(x^{int}_n, y^{int}_n, z^{int}_n, n = 1, \dots, N\right) + 1\right)\right)$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$① \begin{bmatrix} \mu_x \\ \mu_y \\ \mu_z \end{bmatrix} = \frac{1}{n}\sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table] Triangles formed from vertices ordered 1,...,n

[Table 1]

| *n* | Triangles |
| --- | --- |
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |

(continued)

| n | Triangles |
|---|---|
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

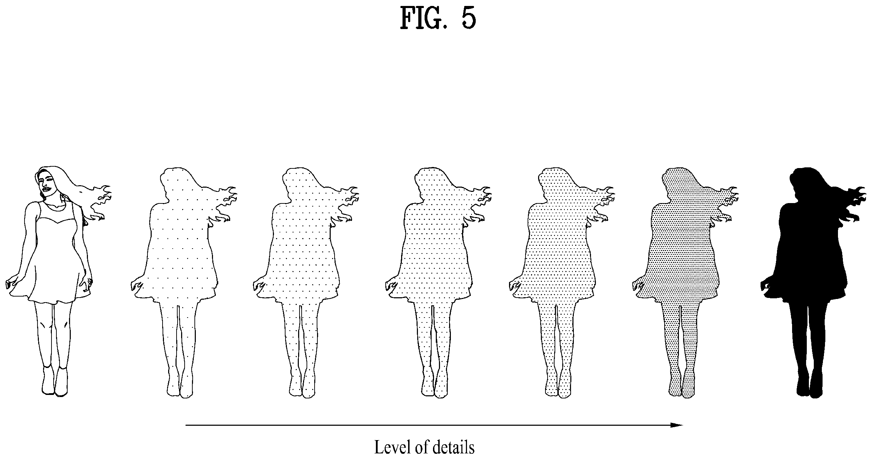

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

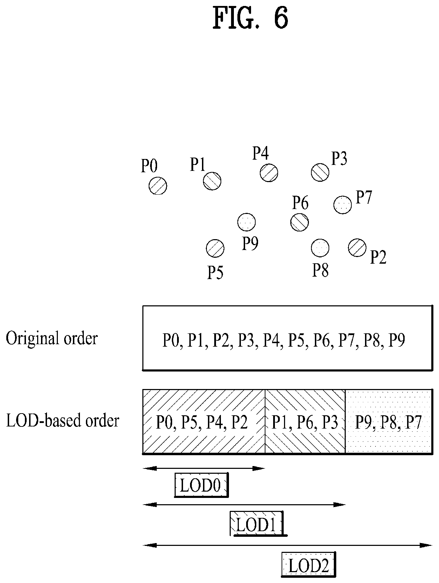

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In

FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, attribute prediction residuals, or the like) obtained by subtracting a predicted attribute (or attribute value) of each point from the attribute (attribute value) of each point. The quantization process is shown in Tables 2 and 3 below.

[Table 2]

| |
|---|
| int PCCQuantization(int value, int quantStep) { |
| if( value >=0) { |
| return floor(value / quantStep + 1.0 / 3.0); |
| } else { |

(continued)

| return -floor(-value / quantStep + 1.0 / 3.0); |
| } |
| } |

[Table 3]

| int PCCInverseQuantization(int value, int quantStep) { |
| if( quantStep ==0) { |
| return value; |
| } else { |
| return value * quantStep; |
| } |
| } |

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level 1. $g_{l_{x,y,z}}$ may be calculated based on $g_{l+1_{2x,y,z}}$ and $g_{l+1_{2x+1,y,z}}$. The weights for $g_{l_{2x,y,z}}$ and $g_{l_{2x+1,y,z}}$ are w1 = $w_{l_{2x,y,z}}$ and w2 = $w_{l_{2x+1,y,z}}$.

$$\begin{bmatrix} g_{l-1_{x,y,z}} \\ h_{l-1_{x,y,z}} \end{bmatrix} = T_{w1\,w2} \begin{bmatrix} g_{l_{2x,y,z}} \\ g_{l_{2x+1,y,z}} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high.0000000000-pass coefficients at each step are quantized and subjected to entropy coding (e.g., encoding by the arithmetic encoder 40012). The weights are calculated as $w_{l-1_{x,y,z}} = w_{l2_{x,y,z}} + w_{l2_{x+1,y,z}}$. The root node is created through the $g_{10,0,0}$ and $g_{10,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

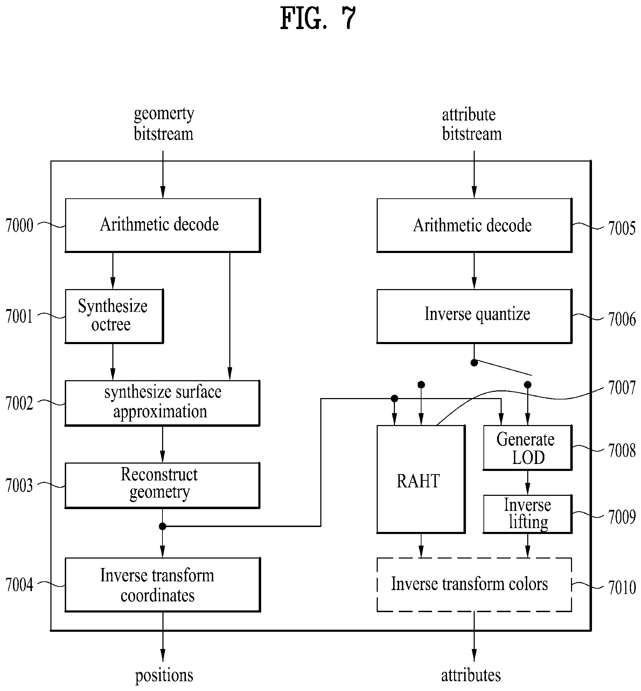

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

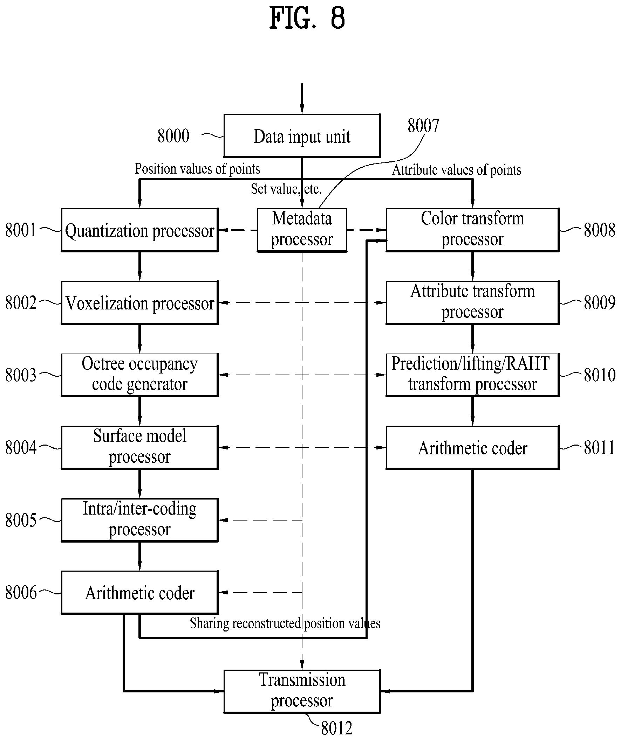

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquisition unit 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

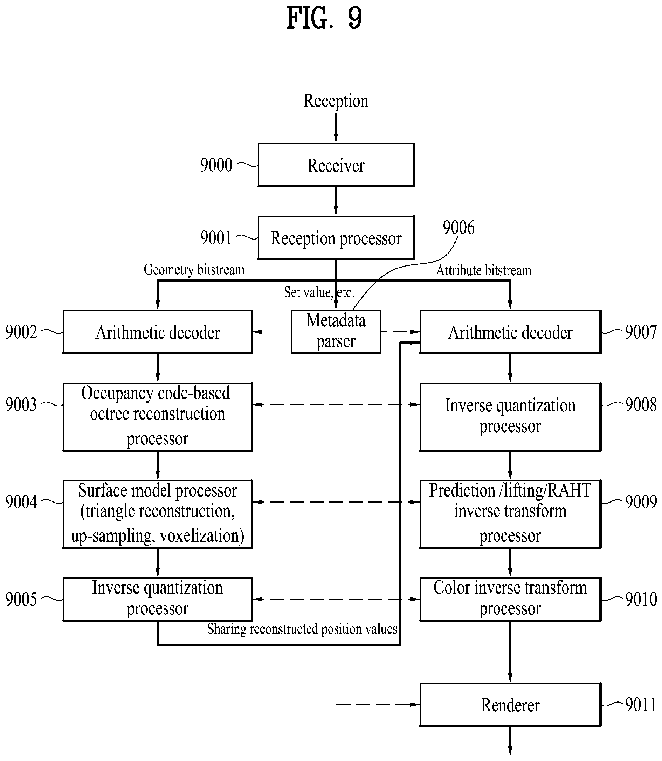

FIG. 9 illustrates a reception device according to embodiments.

The reception device illustrated in FIG. 9 is an example of the reception device 10004 of FIG. 1. The reception device illustrated in FIG. 9 may perform one or more of the operations and methods the same as or similar to those of the point cloud decoder described with reference to FIGS. 1 to 8.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 8, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to at least one of FIGS. 1 to 8, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009 of FIG. 7. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010 of FIG. 7. The renderer 9011 according to the embodiments may render the point cloud data.

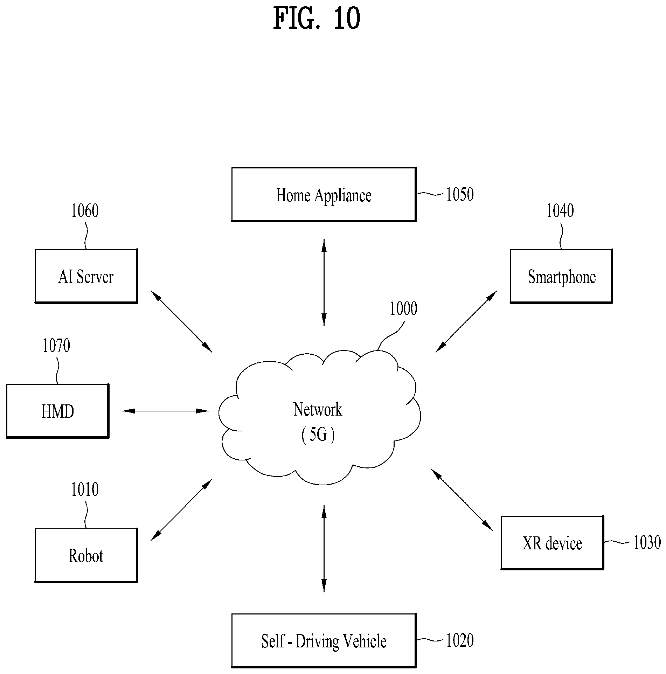

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

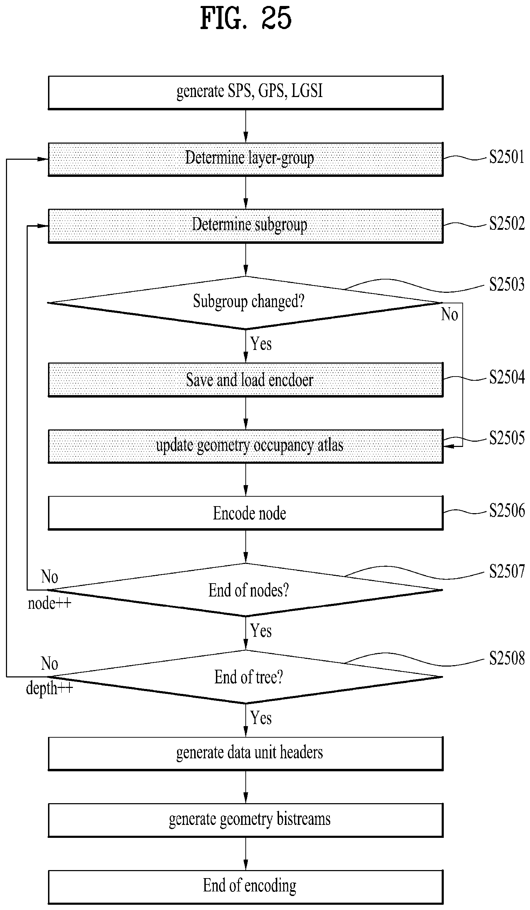

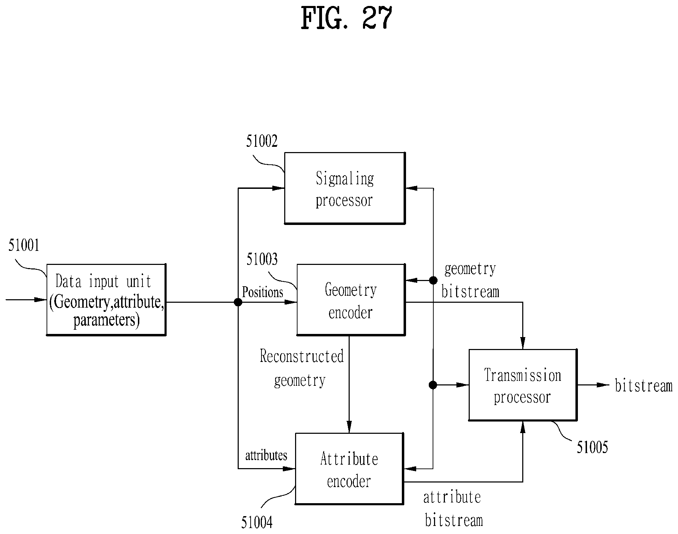

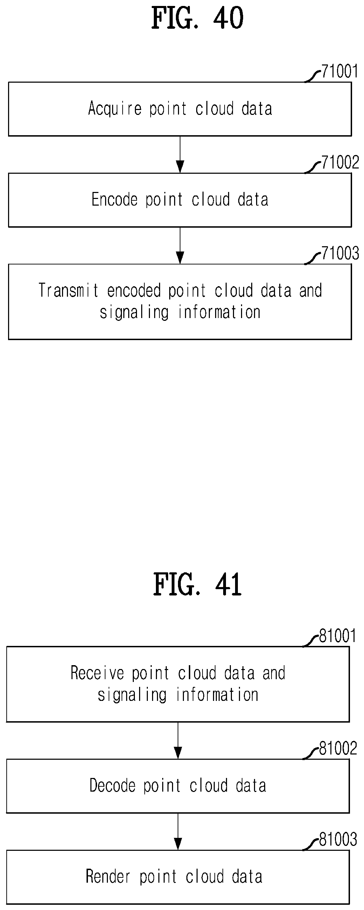

The point cloud data transmission method/device according to the embodiments is construed as a term referring to the transmission device 10000, point cloud video encoder 10002, and transmitter 10003 of FIG. 1, the acquisition 20000-encoding 20001-transmission 20002 of FIG. 2, the point cloud video encoder of FIG. 3, the transmission device of FIG. 8, the device of FIG. 10, the encoding method of FIG. 25, the transmission device of FIG. 27, the transmission method of FIG. 40, and the like.

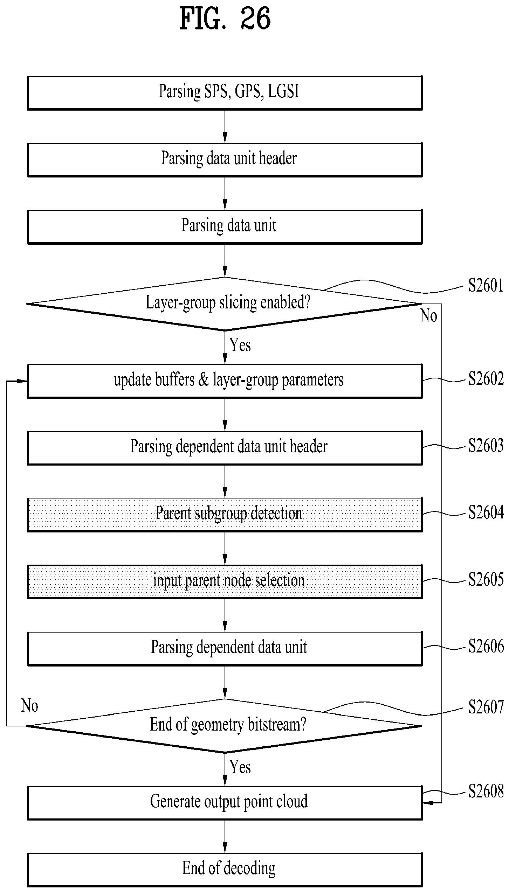

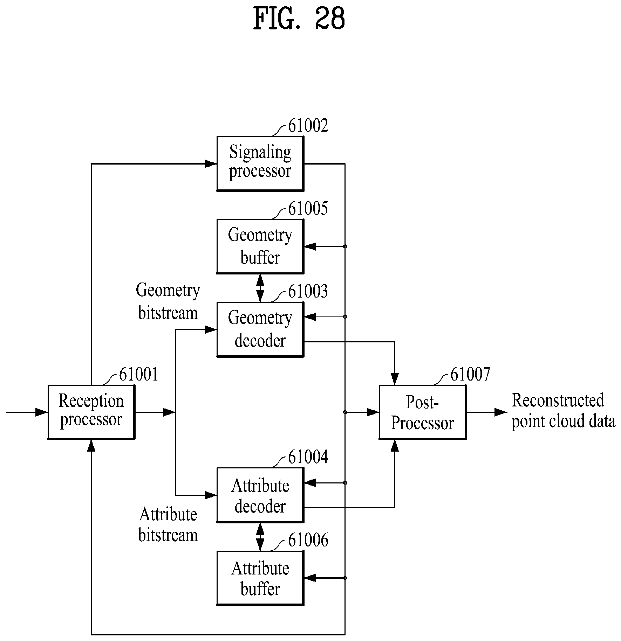

The point cloud data reception method/device according to the embodiments is construed as a term referring to the reception device 10004, receiver 10005, and point cloud video decoder 10006 of FIG. 1, the transmission 20002-decoding 20003-rendering 20004 of FIG. 2, the point cloud video decoder of FIG. 7, the reception device of FIG. 9, the device of FIG. 10, the decoding method of FIG. 26, the reception device of FIG. 28, the reception method of FIG. 41, and the like.

The point cloud data transmission reception method/device according to the embodiments may be simply referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

The method/device according to the embodiments may process point cloud data in consideration of scalable transmission.

Regarding the method/device according to the embodiments, disclosed herein is a method for efficiently supporting selective decoding of a part of data according to receiver performance or transmission speed in transmitting/receiving point cloud data. In particular, the present disclosure proposes techniques for increasing the efficiency of scalable coding, wherein the encoder at the transmitting end may selectively deliver information required by a decoder at the receiving side for compressed data, and the decoder may decode the same, wherein the coding unit may be configured as independent slices in the sense of tree levels, LODs, layer group units, and the like.

In particular, the present disclosure proposes a method for increasing the efficiency of scalable coding among point cloud data compression methods. Here, scalable coding is a technique for gradually changing the resolution of data according to the request/processing speed/performance/transmission bandwidth of the receiver, etc. such that the compressed data may be efficiently delivered from the transmitting side and decoded at the receiving side. To this end, packing for effectively delivering point cloud data configured based on layers may be applied along with the technology of the present disclosure. In particular, proposed herein is a method of configuring slice segments to be more suitable for scalable PCC services and transmitting/receiving the same when a direct compression mode is used for position compression. Additionally, a compression method for efficient storage and transmission of large point cloud data that is widely distributed and has high point density may be used.

Referring to the point cloud data transmission/reception device (which may be referred to simply as an encoder/decoder) according to the embodiments shown in FIGS. 3 and 7, point cloud data is composed of a set of points. Each of the points includes geometry information (or geometry or geometry data) and attribute information (or an attribute or attribute data). The geometry information is three-dimensional position information (xyz) about each point. That is, the position of each point is represented by parameters in a coordinate system representing a three-dimensional space (e.g., parameters (x, y, z) of three axes representing the space, such as the X-axis, Y-axis, and Z-axis). The attribute information represents the color (RGB, YUV, etc.), reflectance, normal vectors, transparency, and the like of the points. In point cloud compression (PCC), octree-based compression is performed to efficiently compress non-uniform distribution in a three-dimensional space, and attribute information is compressed based on the octree-based compression. The point cloud video encoder and the point cloud video decoder shown in S. 3 and 7 may process the operation(s) according to embodiments through respective components.

According to embodiments, the transmission device compresses the geometry information (e.g., position) and attribute information (e.g., color/brightness/reflectance, etc.) about the point cloud data and transmits the compressed information to the reception device. The point cloud data may be configured according to an octree structure that has layers according to the degree of detail or levels of detail (LoDs). Then, scalable point cloud data coding and representation may be performed based the configuration. In this case, only a part of the point cloud data may be decoded or represented according to the performance of the reception device or the transfer rate. However, there is currently no method to remove unnecessary data in advance.

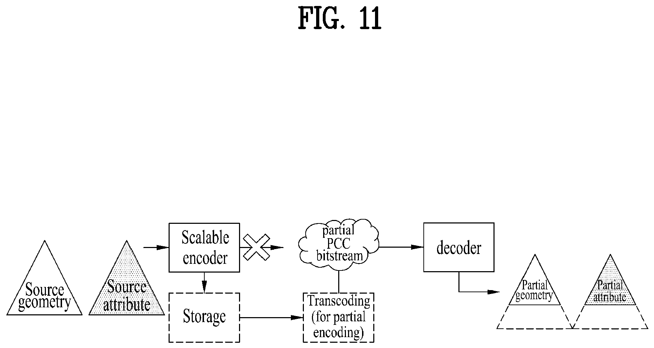

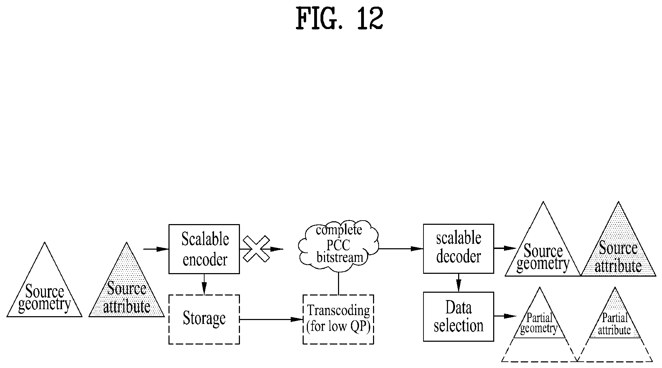

In other words, in the case where only a part of the scalable point cloud compression bitstream needs to be transmitted (e.g., only a part of the layers are decoded in scalable decoding), the necessary part cannot be selected and sent. Accordingly, the transmission device should re-encode the necessary part after decoding as shown in FIG. 11, or the reception device should selectively apply the necessary data after decoding when the entire data is delivered to the reception device as shown in FIG. 12.

However, in the case of FIG. 11, a delay may occur due to the time for decoding and re-encoding. In the case of FIG. 12, bandwidth efficiency may be degraded due to transmission of unnecessary data to the reception device. Further, when a fixed bandwidth is used, data quality may need to be lowered to transmit data.

Accordingly, the methods/devices according to the embodiments may provide slices such that the point cloud may be divided into regions for processing.

In particular, in the case of octree-based position compression, entropy-based compression and direct compression may be used together. In this regard, proposed herein is a slice configuration for efficiently utilizing scalability.

Also, regarding the methods/devices according to the embodiments, a slice segmentation structure of point cloud data may be defined, and a scalable layer and slice structure for scalable transmission may be signaled.

The methods/devices according to embodiments may divide and process a bitstream in specific units for efficient bitstream delivery and decoding.

The methods/devices according to the embodiments may enable selective transmission and decoding of layered point cloud data in a bitstream unit.

The unit according to the embodiments may be referred to as an LOD, a layer, a slice, or the like. The LOD is the same term as LOD in attribute data coding, but may mean a data unit for a layered structure of a bitstream in another sense. The LOD may be a concept corresponding to one depth or a bundle of two or more depths based on the layer structure of point cloud data, for example, depths (levels) of an octree or multiple trees. Similarly, a layer is provided to generate a unit of a sub-bitstream. It is a concept that corresponds to one depth or a bundle of two or more depths, and may correspond to one LOD or two or more LODs. Also, a slice is a unit for configuring a unit of a sub-bitstream, and may correspond to one depth, a part of one depth, or two or more depths. Also, a slice may correspond to one LOD, a part of one LOD, or two or more LODs. According to embodiments, the LOD, the layer, and the slice may correspond to each other or one of the LOD, the layer, and the slice may be included in another one. Also, a unit according to embodiments may include an LOD, a layer, a slice, a layer group, or a subgroup, and may be referred to interchangeably with each other. According to embodiments, in an octree structure, a layer, a depth, a level, and a depth level may have the same meaning.

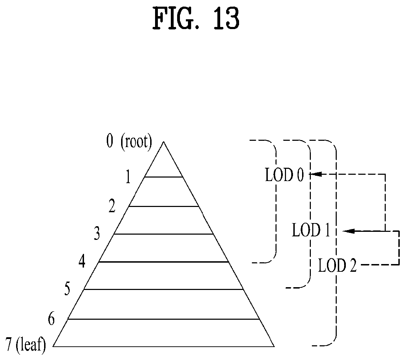

FIG. 13 is a diagram illustrating an example of a layer-based point cloud data configuration according to embodiments. FIG. 13 illustrating an example of an octree structure in which the depth level of a root node is set to 0 and the depth level of a leaf node is set to 7.

The methods/devices according to the embodiments may configure layer-based point cloud data as shown in FIG. 13 to encode and decode the point cloud data.

Layering of point cloud data according to embodiments may have a layer structure in terms of SNR, spatial resolution, color, temporal frequency, bit depth, or the like depending on the application field, and may configure layers in a direction in which data density increases based on the octree structure or LOD structure.

That is, when the LOD is generated based on the octree structure, the LOD may be defined to increase in a direction in which the detail increases, that is, in a direction in which the octree depth level increases. In the present disclosure, a layer may have the same meaning as a level, a depth, and a depth level.

Referring to FIG. 13, for example, in an octree structure having 7 depth levels except the root node level (or root level), LOD 0 is configured to include levels from the root node level to the octree depth level 4, and LOD 1 is configured to include levels from the root node level to octree depth level 5, and LOD 2 is configured to include levels from root node level to octree depth level 7.

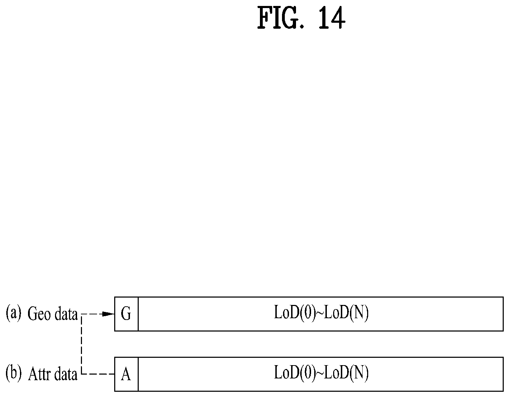

FIG. 14-(a) illustrates a bitstream structure of geometry data according to embodiments, and FIG. 14-(b) illustrates a bitstream structure of attribute data according to embodiments.

A method/device according to embodiments may generate LODs based on the layering of the octree structure as shown in FIG. 13 and configure a geometry bitstream and an attribute bitstream as shown in FIGS. 14-(a) and 14-(b).

The transmission device according to the embodiments may divide a bitstream acquired through point cloud compression into a geometry bitstream and an attribute bitstream according to data types to transmit the bitstream.

In this case, each bitstream may be composed of slices and transmitted. According to embodiments, each of the geometry bitstream (e.g. FIG. 14-(a)) and the attribute bitstream (e.g. FIG. 14-(b)) may be configured as one slice and delivered regardless of the layer information or LoD information. In this case, to use only some of the layers or LoDs, an operation of decoding the bitstream, an operation of selecting only a part to be used and removing unnecessary parts, and an operation of re-encoding based on only necessary information should be performed.

The present disclosure proposes a method of dividing a bitstream into layers (or LoDs) to avoid such unnecessary intermediate operations.

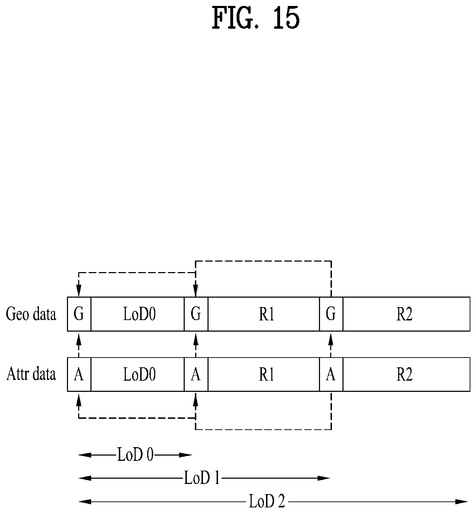

FIG. 15 is a diagram illustrating an example of a bitstream configuration for delivering a bitstream divided into layers (or LoDs) according to embodiments.

For example, in the case of LoD-based PCC technology, a lower LoD is included in a higher LoD. That is, the higher LoD includes all points of the lower LoD. In addition, when information on points included in the current LoD but not included in the previous LoD, namely, new points added to each LoD is defined as R (rest or retained), the transmission device may divide the initial LoD information and the information R newly included in each LoD into independent units (e.g. slices) and transmit the same, as shown in FIG. 15.

In other words, a set of new points added to configure each LoD compared to the previous LoD may be defined as information R. FIG. 15 illustrates an example in which LoD1 includes LoD0 and information R1, and LoD2 includes LoD1 and information R2.

According to an embodiment, points sampled for one or more octree depth levels may be determined as data belonging to information R. That is, a set of points sampled for one or more octree depth levels (that is, points matched to an occupied node) may be defined as information R. According to another embodiment, points sampled for one octree depth level may be divided into a plurality of pieces of information R according to a predetermined criterion. In this case, various criteria for dividing one octree depth level into a plurality of pieces of information R may be considered as follows. For example, when one octree depth level is divided into M pieces of information R, the M pieces of information R may be configured such that the data in information R may have consecutive Morton codes, or may be grouped such that the data in information R have the same remainder obtained by dividing the Morton code order index by M. Alternatively, M pieces of information R may be configured by grouping data at the same position when grouped as sibling nodes. According to another embodiment, if necessary, some of the sampled points at a plurality of octree depth levels may be determined as information R.

In the example of FIG. 15, a geometry bitstream and an attribute bitstream are each divided into three slices according to embodiments. Each slice includes a header and a payload (also called a data unit) containing actual data (e.g., geometry data, attribute data). The header may contain information about a corresponding slice. In addition, the header may further contain reference information related to a previous slice, a previous LoD, or a previous layer for LoD configuration.

For example, referring to FIG. 15, the geometry bitstream is divided into a slice carrying geometry data belonging to LoD0, a slice carrying geometry data belonging to information R1, and a slice carrying geometry data belonging to information R2. The attribute bitstream is divided into a slice carrying attribute data belonging to LoD0, a slice carrying attribute data belonging to information R1, and a slice carrying attribute data belonging to information R2.

The reception method/device according to the embodiments may receive a bitstream divided into LODs or layers, and may efficiently decode only data to be used without a complicated intermediate process.

In this regard, various embodiments may be applied to transmit the bitstream.

For example, the geometry bitstream and the attribute bitstream may be delivered respectively. Alternatively, the geometry bitstream and the attribute bitstream may be multiplexed into one bitstream to be delivered.

When each bitstream contains LoD0 and one or more pieces of information R, the order of delivery of LoD0 and the one or more pieces of information R may vary.

In the example of FIG. 15, the geometry bitstream and the attribute bitstream are delivered, respectively. In this case, LoD0 including the geometry bitstream and two pieces of information R (R1, R2) are delivered sequentially, and LoD0 including the attribute bitstream and two pieces of information R (R1, R2) are delivered sequentially.

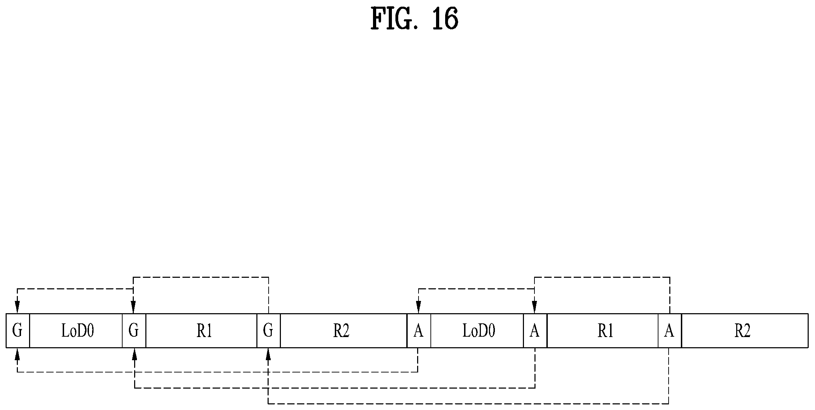

FIG. 16 illustrates an exemplary bitstream sorting used when a geometry bitstream and an attribute bitstream are multiplexed into one bitstream according to embodiments.

The transmission method/device according to the embodiments may serially transmit geometry data and attribute data as shown in FIG. 16 in transmitting a bitstream. In this operation, depending on the type of data, the entire geometry data (or geometry information) may be transmitted first, and then attribute data (or referred to as attribute information) may be transmitted. In this case, the geometry data may be quickly reconstructed based on the transmitted bitstream information.

Referring to FIG. 16, for example, the layers (LODs) containing the geometry data may be positioned first in the bitstream, and the layers (LODs) containing the attribute data may be positioned after the geometry layers. Since the attribute data is dependent on the geometry data, the layers (LODs) containing the geometry data may be positioned before the layers (LODs) containing the attribute data. FIG. 16 illustrates an example in which LoD0 containing geometry data and two pieces of information R (R1, R2) are sequentially delivered, and then LoD0 containing attribute data and two pieces of information R (R1, R2) are sequentially delivered. In this regard, the positions may be changed according to embodiments. In addition, reference may be made between the geometry headers, and may also be made between the attribute headers and the geometry headers.

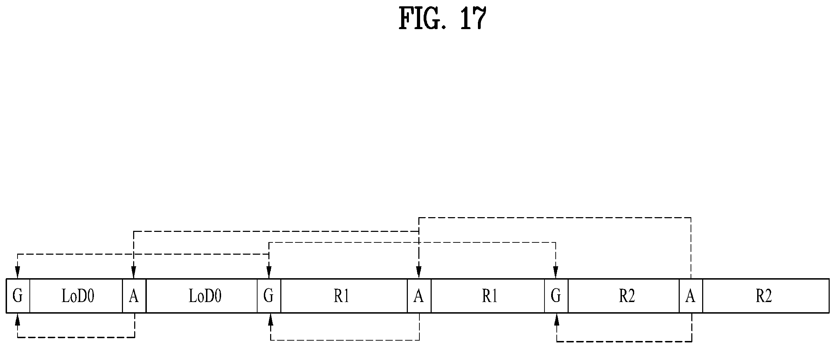

FIG. 17 illustrates another exemplary bitstream sorting method when a geometry bitstream and an attribute bitstream are multiplexed into one bitstream according to embodiments.

In transmitting a bitstream, the transmission method/device according to the embodiments may serially transmit geometry data and attribute data as shown in FIG. 17. In this case, bitstreams constituting the same layer containing geometry data and attribute data may be bundled and transmitted. In this case, when a compression technique for parallel decoding of geometry and attributes is used, the decoding execution time may be shortened. In this regard, information that needs to be processed first (low LoD and geometry should precede attributes) may be disposed first.

FIG. 17 illustrates an example of transmitting LoD0 containing geometry data, LoD0 containing attribute data, information R1 containing geometry data, information R1 containing attribute data, information R2 containing geometry data, and information R2 containing attribute data in this order. In this case, the positions may be changed according to embodiments. In addition, reference may be made between the geometry headers and may also be made between the attribute headers and the geometry headers.

The transmission/reception method/device according to the embodiments may efficiently select a layer (or LoD) desired in the application field at a bitstream level in transmitting and receiving a bitstream. In the bitstream sorting method according to the embodiments, when grouping and transmitting geometry information as shown in FIG. 16, there may be an empty part in the middle after selecting the bitstream level. In this case, the bitstream may need to be re-disposed.

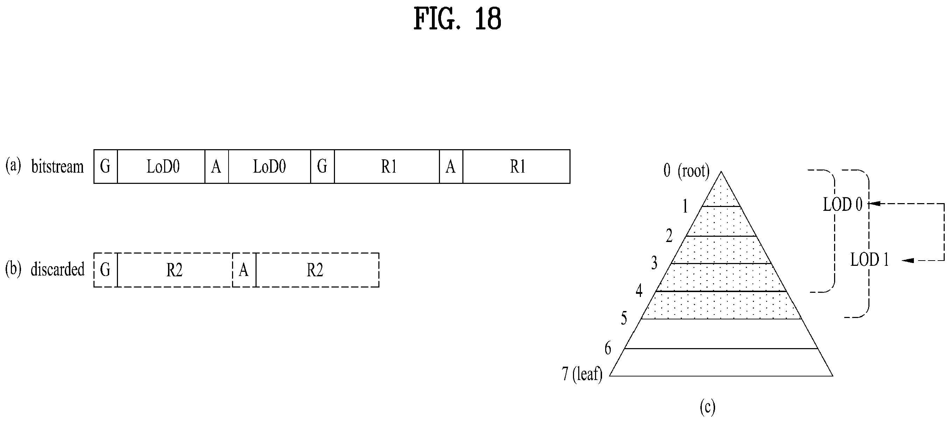

By bundling and transmitting the geometry data and attribute data according to layers as shown in FIG. 17, necessary information may be selectively delivered and/or unnecessary information may be selectively removed according to an application field, as shown in FIGS. 18-(a) to 18-(c) or FIGS. 19-(a) to 19-(c).

FIGS. 18-(a) to 18-(c) are diagrams illustrating an example of symmetric geometry-attribute selection according to embodiments.

For example, referring to FIGS. 18-(a) to 18-(c), when a part of the bitstream needs to be selected according to embodiments, the transmission device selects and transmits data only up to LoD1 (i.e., LoD0+R1), and information R2 corresponding to the upper layer (i.e., the new part of LoD2) is removed from the bitstream and not transmitted. In the case of symmetric geometry-attribute selection, geometry data and attribute data of the same layer are simultaneously selected and transmitted, or simultaneously selected and removed.

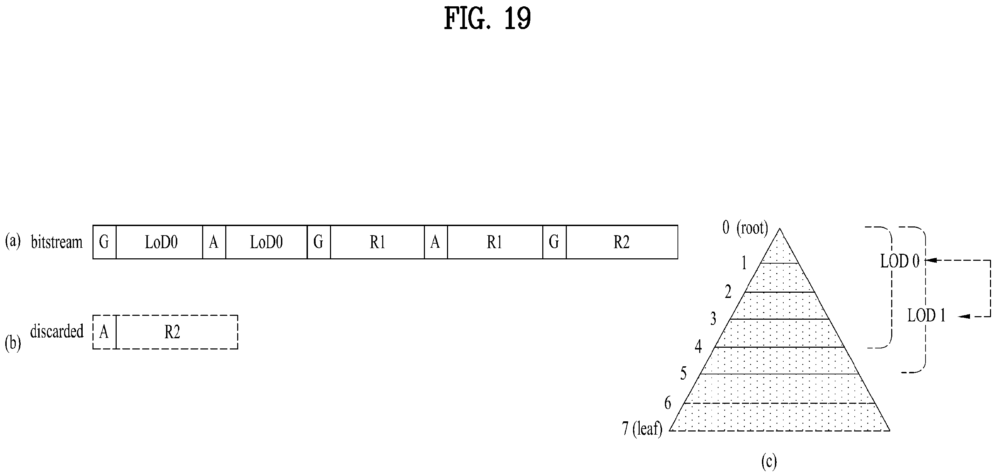

FIGS. 19-(a) to 19-(c) are diagrams illustrating an example of asymmetric geometry-attribute selection according to embodiments. In the case of asymmetric geometry-attribute selection, only one of the geometry data and the attribute data of the same layer is selected and transmitted or removed.

For example, referring to FIGS.190-(a) to 19-(c), when a part of the bitstream needs to be selected according to embodiments, the transmission device selects and transmits LoD1 (LoD0 +R1) containing geometry data and attribute data, LoD1 (LoD0 +R1) containing attribute data, and R2 containing geometry data, and removes R2 containing attribute data from the bitstream so as not to be transmitted. In other words, for the attribute data, data other than the data of the upper layer (R2) is selected and transmitted. For the geometry data, data of all layers (from level 0 (root level) to level 7 (leaf level) in the octree structure) is transmitted.

When a part of a bitstream needs to be selected according to embodiments, a part of the bitstream may be selected using the symmetric geometry-attribute selection method of FIGS. 18-(a) to 18-(c), the asymmetric geometry-attribute selection method of FIGS. 19-(a) to 19-(c), or the combination of the symmetric geometry-attribute selection method and the asymmetric geometry-attribute selection method.

The segmentation of a bitstream, selection of a part of the bitstream, and the like described above are intended to support scalability of point cloud data.

When point cloud data is represented in an octree structure and divided into LODs (or layers), scalable encoding/decoding (scalability) may be supported.

The scalability function according to the embodiments may include slice-level scalability and/or octree-level scalability.

LoD according to the embodiments may be used as a unit indicating a set of one or more octree layers. Also, the LoD may mean a bundle of octree layers to be configured on a slice-by-slice basis.

The LOD according to the embodiments may be used in a broad sense, such as a unit for dividing data in detail, beyond the meaning of the LOD in attribute encoding/decoding.

That is, spatial scalability by an actual octree layer (or scalable attribute layer) may be provided for each octree layer. However, when scalability is configured in the slice level before bitstream parsing, the selection may be performed in the LoD level.

For example, referring to FIG. 13, in an octree structure, the levels from the root level to level 4 correspond to LoD0, and the levels from the root level to level 5 correspond to LoD1. Also, the levels from the root level to level 8 (i.e., leaf level) correspond to LoD2.

In other words, in the example of FIG. 13, when scalability is used in the slice level, the provided scalable operation corresponds to three steps of LoD0, LoD1, and LoD2, and a scalable operation that may be provided in the decoding operation by the octree structure corresponds to 8 steps from the root level to the leaf level.

According to embodiments, when LoD0 to LoD2 are composed of respective slices, the transcoder (see FIG. 11) of the receiver or transmitter may select only LoD0, select only LoD1, or select LoD2 for scalable processing. In FIG. 13, LoD1 includes LoD0, and LOD2 includes LoD1 and LoD2.

For example, when only LoD0 is selected, the maximum octree level is 4, and one scalable layer may be selected from among octree layers 0 to 4 in the decoding operation. In this case, the reception device may consider a node size obtainable through the maximum octree level (or depth) as a leaf node, and may transmit the node size through signaling information.

For example, when LoD1 is selected, layer 5 may be added. Thus, the maximum octree level may be 5, and one scalable layer may be selected from among octree layers 0 to 5 in the decoding operation. In this case, the reception device may consider a node size obtainable through the maximum octree level (or depth) as a leaf node, and may transmit the node size through signaling information. According to embodiments, octree depths, octree layers, and octree levels may be units into which data is divided in detail.

For example, when LoD2 is selected, layers 6 and 7 may be added. Thus, the maximum octree level may be 7, and one scalable layer may be selected from among octree layers 0 to 7 in the decoding operation. In this case, the reception device may consider a node size obtainable through the maximum octree level (or depth) as a leaf node, and may transmit the node size through signaling information.

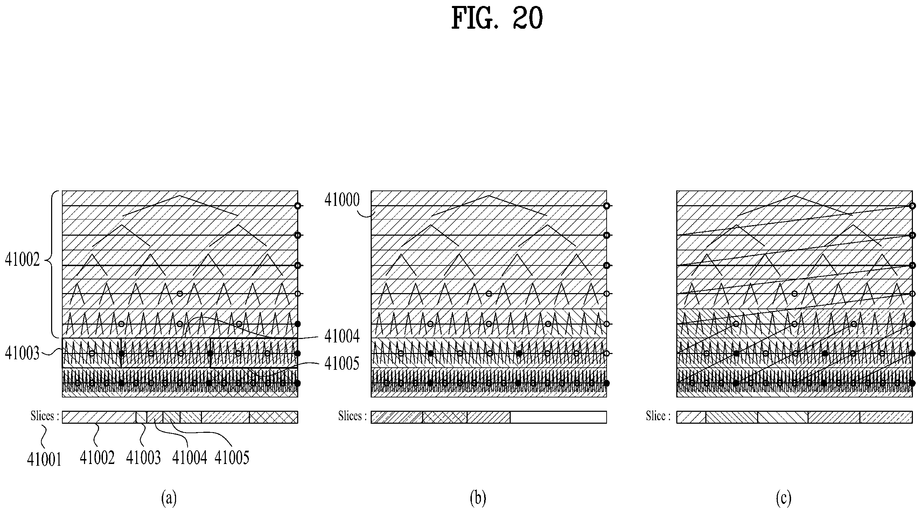

FIGS. 20-(a) to 20-(c) illustrate exemplary methods of configuring slices including point cloud data according to embodiments.

The transmission method/device/encoder according to the embodiments may configure a G-PCC bitstream by segmenting the bitstream in a slice structure. A data unit for detailed data representation may be a slice.

For example, one or more octree layers (or depths) may be matched to one slice.

The transmission method/device according to the embodiments, for example, the encoder, may configure a bitstream based on slices 41001 by scanning nodes (points) included in an octree in the direction of a scan order 41000. A slice may include nodes of one or more levels in the octree structure, may include only nodes of a specific level, or may include only some nodes of a specific level. Alternatively, it may include only some nodes of one or more levels.

FIG. 20-(a) illustrates an exemplary octree structure composed of 7 slices. In this example, a slice 41002 may include nodes of level 0 to level 4, and a slice 41003 may include some nodes of level 5. A slice 41004 may include some other nodes of level 5, and a slice 41005 may include some other nodes of level 5. That is, in FIG. 20-(a), level 5 is divided into three slices. Similarly, in FIG. 20-(a), level 6 (i.e., the leaf level) is also divided into three slices. In other words, a slice may be composed of some nodes of a specific level.

FIG. 20-(b) illustrates an exemplary octree structure composed of four slices. In this example, one slice includes the nodes of level 0 to level 3 and some nodes of level 4, and another slice includes the other nodes of level 4 and some nodes of level 5. In addition, another slice includes the other nodes of level 5 and some nodes of level 6, and the other slice includes the other nodes of level 6.

FIG. 20-(c) illustrates an exemplary octree structure composed of five slices. One slice is composed of the nodes of level 0 to level 3, and four slices are composed of the nodes of level 4 to level 6. That is, a slice includes some nodes of level 4, some nodes of level 5, and some nodes of level 6. In other words, in levels 4 to 6, a slice may include some data of level 4 and data of level 5 or level 6 corresponding to a child node of the data.

In other words, as shown in FIGS. 20-(b) and 20-(c), when multiple octree layers are matched to a slice, only some nodes of each of the layers may be included in the slice. When multiple slices constitute a geometry/attribute frame in this way, information necessary for the reception device to configure layers may be transmitted to the reception device through signaling information. For example, the signaling information may include information about the layers included in each slice and information about the nodes included in each layer.

The encoder and the device corresponding to the encoder according to the embodiments may encode the point cloud data, and generate and transmit a bitstream containing the encoded data and signaling information (or parameter information) related to the point cloud data.

Further, in generating a bitstream, the bitstream may be generated based on the bitstream structure (e.g., see FIGS. 14 to 20, etc.) according to the embodiments. Accordingly, the reception device, the decoder, a corresponding device, or the like according to the embodiments may receive and parse the bitstream configured to be suitable for selective decoding of some data, thereby decoding and efficiently providing only a part of the point cloud data.

Next, scalable transmission of point cloud data will be described.

The point cloud data transmission method/device according to the embodiments may scalably transmit a bitstream containing point cloud data, and the point cloud data reception method/device according to the embodiments may scalably receive the bitstream and decode the same.

When the bitstream having the structure illustrated in FIGS. 11 to 20 is used for scalable transmission, signaling information for selecting a slice required by the reception device may be transmitted to the reception device. The scalable transmission may not mean transmitting or decoding the entire bitstream, but may mean transmitting or decoding only a part of the bitstream. Accordingly, low-resolution point cloud data may be provided.

When the scalable transmission is applied to an octree-based geometry bitstream according to embodiments, point cloud data should be allowed to be configured based on only information about layers up to a specific octree layer for the bitstream of each octree layer (FIG. 13) from the root node to the leaf node.

To this end, a target octree layer should not have a dependency on lower octree layer information. This may be a constraint applied to geometry coding/attribute coding in common.

In addition, in scalable transmission, a scalable structure used for the transmission/reception device to select a scalable layer needs to be transmitted to the reception device. Considering the octree structure according to the embodiments, all octree layers may support scalable transmission, or scalable transmission may be allowed only for a specific octree layer and lower layers. For example, when some of the octree layers are included, signaling information may be delivered to the reception device to indicate a scalable layer in which the slice is included. Thus, the reception device may determine whether the slice is necessary/unnecessary in the bitstream stage. In the example of FIG. 20-(a), level 0 (i.e., root level) to level 4 41002 may constitute one scalable layer without supporting scalable transmission, and the lower octree layers may be matched to scalable layers in a one-to-one correspondence manner. In general, scalability may be supported for a part corresponding to the leaf node. As shown in FIG. 20-(c), when multiple octree layers are included in a slice, it may be defined that one scalable layer shall be configured for the layers.

In this case, scalable transmission and scalable decoding may be used separately depending on the purpose. According to embodiments, the scalable transmission may be used in order for the transmitting/reception device to select information up to a specific layer without involving the decoder. According to embodiments, scalable decoding may be used to select a specific layer during coding. That is, the scalable transmission may support selection of necessary information in a compressed state without involving the decoder (i.e., in the bitstream stage), such that the transmission or reception device may determine a specific layer. On the other hand, in the case of scalable decoding, encoding/decoding may be supported for information only up to a necessary part in the encoding/decoding process. Therefore, scalable decoding may be used in an operation such as scalable representation.

In this case, the layer configuration for scalable transmission may be different from the layer configuration for scalable decoding. For example, the lower three octree layers including the leaf node may constitute one layer in terms of scalable transmission. On the other hand, in terms of scalable decoding, when all layer information is included, scalable decoding may be enabled for each of the leaf node layer, leaf node layer-1 and leaf node layer-2.

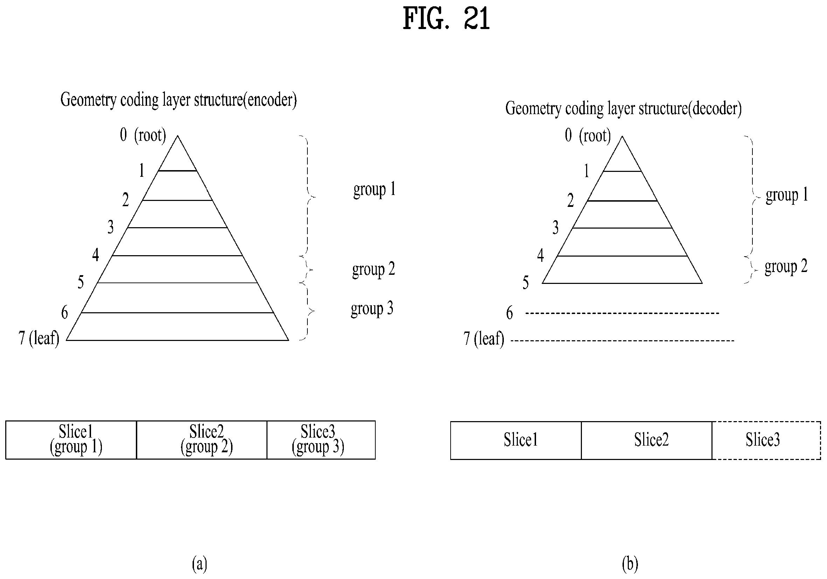

FIGS. 21-(a) and 21-(b) illustrate geometry coding layer structures according to embodiments. In particular, FIG. 21-(a) illustrates an example of three slices generated by the layer group structure at an encoder at the transmitter side, and FIG. 21-(b) illustrates an example of a partially decoded output using two slices at a decoder at the receiving side.

When fine granularity slicing (FGS) is enabled, a G-PCC bitstream may be sliced into multiple sub-bitstreams. Here, fine granularity slicing may be referred to as layer group based slicing. To effectively use the layering structure of G-PCC, each slice may include coded data from a partial coding layer or a partial region. Using the segmentation or partitioning of slices paired with the coding layer structure, use cases of scalable transmission or spatial random access may be supported in an efficient manner.

Layer group based slice segmentation

In fine granularity slicing, each slice segment may contain data coded from a layer group defined as follows.

A layer group may be defined as a group of contiguous tree layers, wherein the start and end depths of the group of tree layers may be arbitrary numbers in the tree depth, and the start depth may be less than the end depth. The order of the data coded in a slice segment may be the same as the order of the data coded in a single slice.

For example, considering a geometry coding layer structure with eight coding layers as shown in FIG. 21-(a), there are three layer groups, each of which is matched to a different slice. More specifically, layer group 1 for coding layers 0 to 4 is matched to slice 1, layer group 2 for coding layer 5 4 is matched to slice 2, and layer group 3 for coding layers 6 and 7 4 is matched to slice 3. When the first two slices (i.e., slices 1 and 2) are transmitted or selected, the decoded output will be partial layers 0 to 5, as shown in FIG. 21-(b). By using slices in the layer group structure, partial decoding of coding layers may be supported without accessing the entire bitstream.

The bitstream and point cloud data according to the embodiments may be generated based on coding layer-based slice segmentation. By slicing the bitstream at the end of the coding layer in the encoding process, the method/device according to the embodiments may select a related slice, thereby supporting scalable transmission or partial decoding.

FIG. 21-(a) shows a geometry coding layer structure with 8 layers in which each slice corresponds to a layer group. Layer group 1 includes coding layers 0 to 4. Layer group 2 includes coding layer 5. Layer group 3 is a group for coding layers 6 and 7. When a geometry (or attribute) has a tree structure having eight levels (depths), a bitstream may be hierarchically configured by grouping data corresponding to one or more levels (depths). Each group may be included in one slice.

FIG. 21-(b) shows the decoded output when selecting two slices from among three slices. When the decoder selects group 1 and group 2, partial layers of levels (depths) 0 to 5 of the tree are selected. That is, partial decoding of coding layers may be supported by using the slices of the layer group structure, even without accessing the entire bitstream.

For the partial decoding process according to the embodiments, the encoder may generate three slices based on the layer group structure. The decoder according to the embodiments may select two slices from among the three slices and perform partial decoding.

A bitstream according to embodiments may include layer group-based slices. Each slice may include a header containing signaling information related to point cloud data (i.e., geometry data and/or attribute data) included in the slice. The reception method/device according to the embodiments may select slices and decode point cloud data contained in the payload of the slices based on the header included in the selected slices.

A method/device according to embodiments may further divide the layer group into several subgroups in consideration of use cases of spatial random access in addition to the layer group structure. The subgroups are mutually exclusive, and a set of subgroups may be the same as a layer group. Since the points of each subgroup form a boundary in the spatial domain, a subgroup may be represented by subgroup bounding box information. Based on spatial information, the layer group and subgroup structure may support access to a region of interest (ROI) by selecting slices that cover the ROI. By efficiently comparing the ROI with the bounding box information about each slice, spatial random access within a frame or tile may be supported.

A method/device according to embodiments may configure slices for delivering point cloud data, as shown in FIG. 21-(a).

According to embodiments, the entire coded bitstream may be included in a single slice. For multiple slices, each slice may contain a sub-bitstream. The order of the slices may be the same as the order of the sub-bitstreams. Also, each slice may be matched to a layer group in a tree structure.

Further, slices may not affect previous slices, just as higher layers of the geometry tree do not affect lower layers.

The segmented slices according to the embodiments are efficient in terms of error robustness, effective transmission, support of region of interest, and the like.

1) Error resilience

Compared to a single slice structure, segmented slices may be more robust to errors. In other words, when a slice contains the entire bitstream of a frame, data loss may affect the entire frame data. On the other hand, when the bitstream is segmented into multiple slices, at least one slice that is not affected by a loss even when at least one slice is lost may be decoded.

2) Scalable transmission

In the present disclosure, multiple decoders having different capabilities may be supported.

When coded point cloud data (i.e., a point cloud compression (PCC) bitstream) is contained in a single slice, the LOD of the coded point cloud data may be determined prior to encoding. Accordingly, multiple pre-encoded bitstreams having different resolutions of the point cloud data may be independently transmitted, which may be inefficient in terms of large bandwidth or storage space.

When the coded point cloud data (i.e., the PCC bitstream) is contained in segmented slices, the single bitstream may support decoders of different levels. From the decoder perspective, the reception device may select target layers and may deliver the partially selected bitstream to the decoder. Similarly, by using a single bitstream without partitioning the entire bitstream, a partial bitstream may be efficiently generated by the transmission device.

3) Region based spatial scalability

In terms of the G-PCC requirement according to embodiments, region based spatial scalability may be defined as follows: a compressed bitstream is composed of one or more layers, and thus a specific ROI may have a higher density with additional layers, and layers may be predicted from lower layers.

To support this requirement, it is necessary to support region-wise different detailed representation of regions. For example, in VR/AR applications, in a VR/AR application, far objects may be represented with lower precision, and nearer objects may be represented with higher precision. Further, the decoder may increase the resolution of the interested area at the request. This operation may be implemented using the geometry octree and the scalable structure of G-PCC such as the scalable attribute coding scheme.

According to embodiments, decoders should access the entire bitstream based on the current slice structure containing the entire geometry or attributes, which may cause inefficiency in terms of bandwidth, memory, and decoder. On the other hand, when the bitstream is segmented into multiple slices, and each slice contains sub-bitstreams according to scalable layers, the decoder according to the embodiments may efficiently select slices before parsing the bitstream, as needed.

A method/device according to embodiments may generate a layer group using a tree structure (or layer structure) of the point cloud data.

Referring to FIG. 21-(a) as an example, there are eight layers in a geometry coding layer structure (e.g., an octree structure), and three slices may be used to contain one or more layers. A group represents a group of layers. When scalable attribute coding is used, the tree structure is identical to the geometry tree structure. The same octree-slice mapping may be used to create attribute slice segments.

A layer group according to the embodiments represents a bundle of layer structure units generated in G-PCC coding, such as an octree layer or an LoD layer.

A sub-group may be represented as a set of neighboring nodes within a layer group. For example, it may be configured as a set of nodes neighboring each other by Morton code order, a set of neighboring nodes based on distance, or a set of neighboring nodes based on coding order. Nodes in a parent-child relationship may also be present within a subgroup.

When subgroups are defined, a boundary occurs in the middle of the layer, and a parameter such as entropy_continuation_enabled_flag may be signaled to indicate whether entropy continuation is maintained at the boundary. Continuation may also be maintained by referencing the previous slice through ref_slice_id.

The tree structure according to the embodiments may be an octree structure, and the attribute layer structure or attribute coding tree according to the embodiments may include a level of detail (LOD) structure. In other words, the tree structure for the point cloud data may include layers corresponding to depths or levels, and the layers may be grouped.

A method/device according to the embodiments (e.g., the octree analyzer 30002 or LOD generator 30009 of FIG. 3, the octree synthesizer 7002 or LOD generator 7008 of FIG. 7) may generate an octree structure of geometry or an LOD tree structure of attributes. Further, the point cloud data may be grouped based on layers of the tree structure.

Referring to FIG. 21-(a), multiple layers are grouped into first to third groups. A group may be further divided to form subgroups.

According to embodiments, a slice may contain coded data from a layer group. Here, the layer group is defined as a group of consecutive tree layers. The start and end depths of the tree layers may be specific numbers in the tree depth, wherein the number for the start is less than that for the end.

While FIG. 21-(a) illustrates the geometry coding layer structure as an example of a tree structure, a coding layer structure for attributes may also be created in a similar manner.

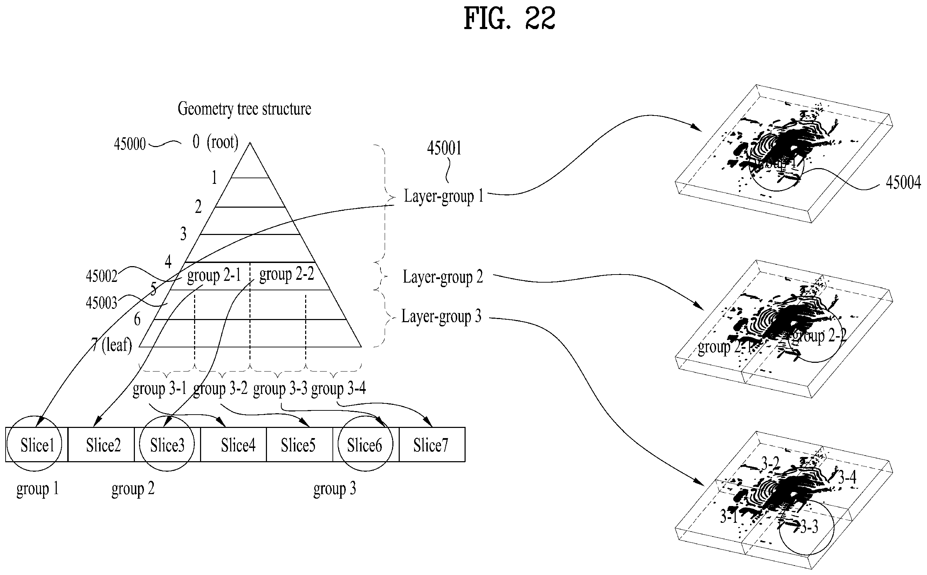

FIG. 22 is a diagram illustrating a layer group and subgroup structure according to embodiments.

Referring to FIG. 22, point cloud data and bitstreams may be distinguished and represented by bounding boxes.

In FIG. 22, a subgroup structure and bounding boxes corresponding to the subgroups are shown. Layer group 2 is divided into two subgroups (group2-1 and group2-2), which are included in different slices, and layer group 3 is divided into four subgroups (group3-1, group3-2, group3-3, and group3-4), which are contained in different slices. Given the slices of the layer groups and subgroups along with the bounding box information, spatial access may be performed by 1) comparing the bounding box of each slice with the ROI, 2) selecting a slice where the subgroup bounding box overlaps with the ROI, and 3) decoding the selected slice.

When an ROI is considered in region 3-3, slices 1, 3, and 6 are selected as subgroup bounding boxes of layer group 1 and subgroups 2-2 and 3-3 that cover the ROI. It is assumed for effective spatial access that there is no dependency between subgroups from the same layer group. In live streaming or low-latency use cases, time efficiency may be increased by performing selection and decoding when each slice segment is received.

In encoding geometry and/or attributes, a method/device according to embodiments may present data as a tree 2200 composed of layers (which may be referred to as depths, levels, or the like). Point cloud data corresponding to layers (depths/levels) may be grouped into layer groups (or groups) 45000. Layer group 2 may be further divided (segmented) into two subgroups 45002, and layer group 3 may be further divided (segmented) into four subgroups 45003. Each subgroup may be configured as a slice to generate a bitstream.

The reception device according to the embodiments may receive a bitstream, select a specific slice from the bitstream, and decode a bounding box corresponding to a subgroup included in the selected slice. For example, when slice 1 is selected, a bounding box 45004 corresponding to layer group 1 may be decoded. Layer group 1 may be data corresponding to the largest region. When additionally displaying an detailed region for layer group 1, a method/device according to the embodiments may select slice 3 and/or slice 6, and hierarchically and partially access the bounding box (point cloud data) of subgroup 2-2 and/or subgroup 3-3 for the detailed region included in the region of layer group 1.

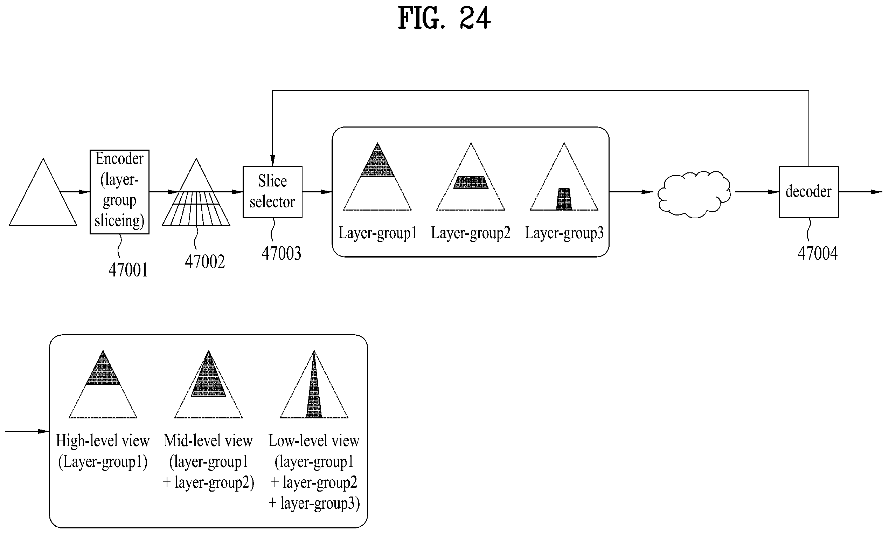

The encoding and decoding of point cloud data using the layer groups and subgroups of FIG. 22 may be performed by the transmission/reception devices of FIG. 1, the encoding and decoding of FIG. 2, the transmission device/method of FIG. 3, the reception device/method of FIG. 7, the transmission/reception device/method of FIGS. 8 and 9, the devices of FIG. 10, the transmission/reception methods of FIGS. 24, 25, or 27, the transmission/reception devices of FIG. 28, and the transmission/reception methods of FIGS. 40 and 41.

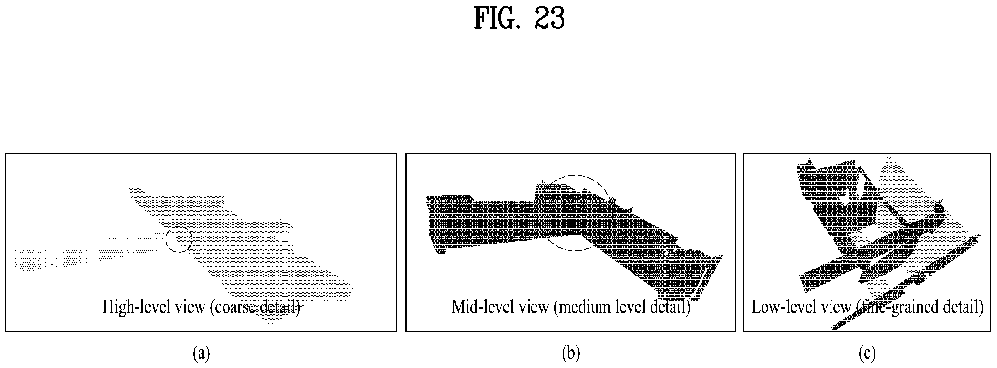

FIGS. 23-(a) to 23-(c) illustrate representations of layer group-based point cloud data according to embodiments.

Devices/methods according to embodiments may provide efficient access to large-scale point cloud data or dense point cloud data through layer group slicing based on scalability and spatial access capabilities. Point cloud data may take a significant amount of time to render or display content due to the high number of points and the large size of the data. Therefore, as an alternative approach, the level of detail may be adjusted based on the viewer's interest. For example, when the viewer is far away from a scene or object, structural or global region information is more important than local detailed information. On the other hand, when the viewer moves closer to a specific region or object, detailed information about the ROI is needed. Using an adaptive approach, the renderer according to embodiments may efficiently provide data of sufficient quality to the viewer. FIGS. 23-(a) to 23-(c) illustrate an example of increasing detail for three levels of viewing distance that changes based on ROI.

The high-level view in FIG. 23-(a) shows a coarse detail, the mid-level view in FIG. 23-(b) shows a medium-level detail, and the low-level view in FIG. 23-(c) shows a fine-grained detail.

FIG. 24 illustrates a point cloud data transmission/reception device/method according to embodiments.

Multi-resolution ROI may be supported when layer group slicing is used to generate a G-PCC bitstream.

Referring to FIG. 24, multi-resolution ROIs may be supported by the scalability and spatial accessibility of hierarchical slicing. In FIG. 24, the encoder 47001 at the transmitting side may generate bitstream slices of spatial subgroups of each layer group or bitstream slices of octree layer groups. Upon request, slices matching the ROI of each resolution are selected and transmitted to the receiving side. The size of the entire bitstream is reduced compared to the tile-based approach, as it does not include details beyond the requested ROI. At the receiving side, the decoder 47004 may combine the slices to produce three outputs, for example, 1) a high-level view output from a layer group; 2) a mid-level view output from selected subgroups of layer group 1 and layer group 2; and 3) a low-level view output of good quality details from selected subgroups of layer groups 2 and 3 and layer group 1. The outputs may be generated progressively, and therefore the receiver may provide a viewing experience such as zooming that progressively increases the resolution from the high-level view to the low-level view.

The encoder 47001 may correspond to a geometry encoder and/or an attribute encoder as a point cloud encoder according to embodiments. The encoder may slice the point cloud data based on layer groups (or groups). A layer may be referred to as a depth of a tree, a level of LOD, or the like. As shown in part 47002, the depth of the octree of the geometry and/or the level of the attribute layer may be divided into layer groups (or subgroups).

The slice selector 47003, in connection with the encoder 47001, may select a segmented slice (or sub-slices) and selectively and partially transmit data such as layer group 1 to layer group 3.

The decoder 47004 may decode the selectively and partially transmitted point cloud data. For example, it may decode layer group 1 (which has a high depth/layer/level or an index of 0, or is close to the root) for the high-level view. Also, decoding may be performed by increasing the index of the depth/level over layer group 1 alone based on layer group 1 and layer group 2 for the mid-level view. Further, decoding may be performed based on layer group 1 to layer group 3 for the low-level view.

Referring to FIG. 24, the encoder 47001 according to the embodiments may receive point cloud data as input and slice the same into layer groups. That is, the point cloud data may be hierarchically structured and divided into layer groups. The hierarchical structure may refer to an octree structure or a level of detail (LoD). Part 47002 represents the point cloud data divided into layer groups. The slice selector 47003 may select layer groups (or corresponding slices), and the selected slices are transmitted to the decoder 47004 at the receiving side. The decoder 47004 may reconstruct only layer group 1, reconstruct layer groups 1 and 2, or reconstruct all received layer groups by combining the received slices as desired by the user. The layer groups are hierarchical and have different levels of detail. Reconstructing only layer group 1 may result in a broader range of reconstruction and coarse detail. Reconstructing all layer groups 1 to 3 may result in a narrower range of reconstruction and fine detail.

As described above, the input of the encoder for layer group slicing consists of point cloud data and parameter information (e.g., Sequence Parameter Set (SPS), Geometry Parameter Set (GPS), and Layer-Group Slicing Inventory (LGSI)) describing the structural information about the layer group slicing. At the beginning of each tree depth, the layer group of the target tree depth is determined using layer group structure parameters. When the layer group index is used, the sub-group index of each node is determined using a sub-group bounding box. When the sub-group for a node changes, the context state and buffer used in the previous sub-group encoder are stored, and the context state and buffer of the current sub-group encoder are loaded. Using a separate encoder for each sub-group allows the context state to persist within the sub-group. Furthermore, to restrict neighbor nodes to belong to the same sub-group as the current node, the geometry occupancy atlas is updated by considering the sub-group boundary on top of the atlas boundary. Both methods enable each coded bitstream to be decoded independently by the decoder without node information from neighbor sub-groups. This process is performed recursively for all nodes at all tree depths. Upon reaching the end of the nodes at the target tree depth, fine-granularity slices, which match the sub-groups of each layer group one-to-one, are generated. In the present disclosure, fine-granularity slices may be referred to as layer group-based slices.

The encoding operation of the encoder may be performed by at least one or a combination of the transmission device of FIG. 1, the encoding of FIG. 2, the transmission device/method of FIG. 3, the transmission device/method of FIGS. 8 and 9, the devices of FIG. 10, the encoding method of FIG. 25, the transmission device of FIG. 27, or the transmission method of FIG. 40.

The decoding operation of the decoder may be performed by at least one or a combination of the reception device of FIG. 1, the decoding of FIG. 2, the reception device/method of FIG. 7, the reception device/method of FIGS. 8 and 9, the devices of FIG. 10, the decoding method of FIG. 26, the reception device of FIG. 28, or the reception method of FIG. 41.

FIG. 25 is a flowchart illustrating an example of an encoding method of an encoder according to embodiments. That is, FIG. 25 illustrates an encoding process for layer group slicing, which enables an encoded bitstream to be decoded independently by a decoder without node information from neighbor sub-groups. The encoding method of FIG. 25 may be performed by the transmission device of FIG. 1, the encoding of FIG. 2, the transmission device/method of FIG. 3, the transmission device/method of FIG. 8, the devices of FIG. 10, the transmission device of FIG. 27, or a combination thereof.

An encoder according to embodiments generates parameter information such as SPS, GPS, and LGSI, and determines a layer group and a sub-group (S2501, S2502). Then, it checks whether the sub-group changes (S2503), and whenever the sub-group changes, it stores information used to encode point cloud data within the sub-group and loads necessary information to perform efficient encoding (S2504). For example, context information may be stored and then loaded for use during the next encoding. That is, when the sub-group for a node changes, the context state and buffer used by the previous sub-group encoder are stored, and the context state and buffer of the current sub-group encoder are loaded. In addition, the geometry occupancy atlas is updated according to the encoding (S2505). Specifically, to restrict neighbor nodes to belong to the same sub-group as the current node, the geometry occupancy atlas is updated by considering the sub-group boundary as well as the atlas boundary. Then, the node of the sub-group is encoded (S2506). When this process is repeated and all nodes at all depths within the occupancy tree are encoded (S2507, S2508), that is, when the end of the nodes at the target tree depth is reached, geometry data unit headers are generated, and a geometry bitstream containing parameter information, geometry data unit headers, geometry data units, and the like is generated. In other words, fine-granularity slices that match the sub-groups of each layer group one-to-one are produced. In the present disclosure, the terms geometry occupancy atlas, geometry atlas, and atlas are used interchangeably with the same meaning.

The following is a detailed description of the operations (S2501 to S2504) for determining layer groups and sub-groups and storing and loading information (layer group and subgroup determination).

As mentioned in the encoder process above, storing and loading the encoder state is necessary to guarantee independent decoding of each sub-group. To provide flexible sub-group partitioning, this process is performed for each node of the tree layer.

For each tree layer, the layer group of that tree layer is determined and fixed for all tree depths within that layer group. Since the layer group is a set of continuous tree layers, the layer group index changes at the start of the layer group. The sub-group is determined based on the determined layer group. Since the sub-group is a group of nodes bounded by a sub-group bounding box, the sub-group of a node is found by comparing the node position with the sub-group bounding box. Whenever a sub-group or layer group changes, the encoder state of the previous sub-group is stored for later use, and the encoder state of the current sub-group is loaded for continuous encoding.

The pseudo code below is an example of an encoding process for each layer, layer group, and sub-group of a tree structure, including the process of storing and loading the encoder state whenever each layer group and sub-group changes. That is, when the tree depth is 0, the first layer group and sub-group are initialized, and the current encoder state is loaded. When the tree depth reaches the number of layers in the current layer group, the process moves to the next layer group, and the encoder state is stored and loaded. Through this process, nodes within each layer group are processed, and the encoder state is stored and loaded whenever the sub-group changes.

pseudo code:

```
for (depth = 0; depth < maxDepth; depth++) {
// determine layer-group index
if (depth == 0) {
curLayerGroupId = 0;
curSubgroupId = 0;
load current context state;
sum_layers = numLayersPerLayerGroup[curLayerGroupId];
}
else if (depth == sum_layers) {
prevLayerGroupId = curLayerGroupId++;
prevSubgroupId = curSubgroupId;
curSubgroupId = 0;
save previous encoder state;
load current encoder state;
sum_layers += numLayersPerLayerGroup[curLayerGroupId];
}
else if (numSubgroupsMinus1[curLayerGroupId] > 0) {
prevSubgroupId = curSubgroupId;
curSubgroupId = 0;
save previous encoder state;
reload current encoder state;
}
for (all nodes in curLayerGroupId) {
// determine subgroup index
if (!(nodePos >= bbox_min && nodePos < bbox_max)) {
for (i = 0; i<=numSubgroupsMinus1[curLayerGroupId]; ++) {
if (nodePos >= bbox_min[i] && nodePos < bbox_max[i]){

prevSubgroupId = curSubgroupId;
curSubgroupId = i;
// save and load encoder
save previous encoder state;
if (first node of the current subgroup)
load reference encoder state;
else
reload current encoder state;
break;
} } } }
}
```

The following is a detailed description of the geometry occupancy atlas update operation (S2505).

_maxRange and _minRange are defined in the MortonMap3D class to account for sub-group boundaries within the geometry occupancy atlas. When the geometry occupancy atlas is within a sub-group, the minimum and maximum ranges are initially set to 0 and the length of an edge of the cube, respectively. When the minimum boundary of the sub-group is greater than the minimum value of the geometry occupancy atlas, _minRange is set to the minimum value of the sub-group boundary. Additionally, when the maximum boundary of the sub-group is less than the maximum value of the geometry occupancy atlas, _maxRange is set to the maximum value of the sub-group boundary. By utilizing these ranges (_maxRange and _minRange), the part of the atlas that overlaps with the sub-group bounding box is considered active, and nodes within this active region are used as neighbors. This ensures that FGSs (i.e., layer group-based slices) can be decoded by the decoder of the reception device without requiring node information from neighbor sub-groups.

The pseudo-code below illustrates an example of the sub-group boundary process when updating the aforementioned geometry occupancy atlas. Specifically, the pseudo-code shows the process of calculating the range for setting the sub-group boundary in the MortonMap3D class. The setRange method calculates the minimum and maximum boundaries of the sub-group and assigns the same to the variables _minRange and _maxRange. This range is calculated for each axis in the 3D space. _maxRange[m] represents the maximum range for the m-th axis of the sub-group, set by considering the atlas origin and the cube size. _minRange[m] represents the minimum range for the m-th axis of the sub-group; if it is greater than the atlas origin, that value is set, otherwise, it is set to 0. Through this process, the sub-group is positioned within a specific part of the atlas, and the part of the atlas overlapping with the sub-group bounding box may be considered an active region, enabling efficient data processing.

```
pseudo code:
class MortonMap3D {
setRange( )  {
for (m = 0; m < 3; m++) {
// _maxRange
if (bboxMax < atlasOrigin + _cubeSize)
_maxRange[m] = bboxMax - atlasOrigin;
Else
_maxRange[m] = _cubeSize;
// _minRange
if (bboxMin > atlasOrigin)
_minRange[m] = bboxMin - atlasOrigin;
Else
_minRange[m] = 0;
}  }
}
```

Through these operations, the range of the geometry occupancy atlas used for geometry coding is updated by considering the sub-group boundaries. The geometry occupancy atlas is a Look-Up Table (LUT) created for a specific range of neighbor nodes to improve the speed of tasks such as geometry neighbor searches. If the position of the current node falls outside the geometry occupancy atlas range, a new update must be performed.

In the encoder and decoder operations, if the sub-group boundary exists within the atlas boundary, the atlas boundaries (_maxRange, _minRange) are updated to match the sub-group boundary. This allows for the boundary alone to be modified and used without a full atlas update, even when the sub-group within the atlas changes.

Here, _maxRange and _minRange represent the minimum and maximum values of the actually usable range within the atlas. atlasOrigin and cubeSize represent the starting position and size of the geometry occupancy atlas, respectively. Furthermore, bboxMin and _bboxMax represent the minimum and maximum values of the bounding box position for a specific layer group and sub-group.

FIG. 26 is a flowchart illustrating an example of a decoding method of a decoder according to embodiments. That is, FIG. 26 illustrates a decoder process for layer group slicing according to embodiments.

FIG. 26 may follow the reverse process of FIG. 25.

The decoding method of FIG. 26 may be performed by the reception device of FIG. 1, the decoding of FIG. 2, the reception device/method of FIG. 7, the reception device/method of FIG. 9, the devices of FIG. 10, the decoder of FIG. 28, or a combination thereof.

According to embodiments, the decoder parses parameter information (e.g., SPS, GPS, LGSI, etc.), geometry data unit headers, and geometry data units from the received geometry bitstream. The decoding process of the layer group slicing reference SW for the first Fine Granularity Slice (FGS) is identical to conventional geometry slice decoding (parameter set parsing, data unit header parsing, and data unit decoding). In the present disclosure, parameter information, parameter(s), and parameter set(s) are used interchangeably with the same meaning.

After the parsing process is performed, when layer group slicing is enabled (S2601), the next dependent geometry data unit is considered an FGS for the first slice (i.e., if they have the same Slice_id). Considering context reference and node inheritance between a parent (i.e., higher) sub-group and a child sub-group, it is assumed that the order of FGSs is sorted in ascending order according to layer_group_id and subgroup_id.

Before decoding a dependent data unit, the context state of the previous slice, output nodes, and layer group parameters are stored in a buffer for the next slices (S2602). That is, the buffers and layer group parameters are updated. After parsing the dependent data unit header (S2603), the parent sub-group of the current sub-group is detected (S2604). According to embodiments, the parent sub-group of the current sub-group is detected by finding a sub-group whose sub-group bounding box is a superset of the current sub-group bounding box. Once the parent sub-group is determined, the parent (i.e., higher) nodes of the current dependent data unit are selected (S2605). When the parent (i.e., higher) nodes of the current dependent data unit are selected in operation S2605, the dependent data unit is parsed (S2606). Then, by using the selected nodes as initial nodes of the decoding process, the current dependent data unit is decoded up to the tree layer covered by the current layer group. The decoding process of the dependent data unit is repeatedly performed until the end of the geometry bitstream (S2607). When the decoding of the dependent data unit is completed, an output point cloud is generated, and the decoding process ends (S2608).

The following describes the additional process of finding parent sub-groups and parent nodes in more detail.

The decoder according to embodiments parses parameter information such as SPS, GPS, and LGSI contained in the bitstream. It parses information signaled in a data unit header included in a slice such as an FGS. Based on the header information, it parses the point cloud data contained in the data unit. When layer group slicing is activated, the decoder updates buffers and layer group parameters and parses data unit header information related to a dependent data unit that is dependent on a higher data unit. It detects a parent sub-group and selects parent nodes. It then parses the dependent data unit. The following is a detailed description of the parent sub-group detection operation (S2604).

In the decoding of fine-granularity slices (i.e., layer group-based slices), the nodes of the parent sub-group are used as inputs for child sub-groups to provide continuous decoding at layer group boundaries. This may be derived using the parent-child spatial relationship due to the hierarchical structure of layer group slicing. That is, a child sub-group is a subset of a parent sub-group where the child sub-group's bounding box is spatially exclusive to the bounding boxes of other child sub-groups within the same layer group.

Based on this relationship, a slice with a parent sub-group may be detected by finding a spatial superset of the current slice. By utilizing the subgroup_bbox_origin and subgroup_bbox_size signaled in the data unit header, the parent sub-group may be identified by comparing this information with the bounding box information related to the sub-groups at the previous layer-group level.

The pseudo-code below is an example of the aforementioned parent sub-group detection process.

```
pseudo code:
parentLayerGroup = curLayerGroup - 1;
for (i = 0; i < numSubgroups[parentLayerGroup]; i++) {
if (_bboxMin[parentLayerGroup][i] <= curBboxMin
&& _bboxMax[parentLayerGroup][i] > curBboxMin) {
parentSubgroup = i;
break;
}
}
```

In other words, as described above, the present disclosure may enable the inference of a parent sub-group based on the spatial relationship between parent and child sub-groups without additional signaling.

From the encoder's perspective, child sub-groups may be defined by partitioning the bounding box of a parent sub-group. Since a child sub-group is a sub-region of the parent sub-group, the encoder is allowed to infer the parent sub-group index through the method described above.

From the decoder's perspective, if the bounding box of a parent sub-group is a superset of the bounding box of a child sub-group, the corresponding sub-group index is determined as the parent sub-group index.

In the pseudo-code above, parentLayerGroup is the index of the higher layer group related to the current layer group.

parentSubgroup is the sub-group index of the sub-group that has a parent-child relationship with the current sub-group.

curLayerGroup is the current layer group.

numSubgroups is the number of sub-groups belonging to a layer group.

_bboxMin and _bboxMax are the minimum and maximum values of the bounding box position for a specific layer group and sub-group.

curBboxMin is the minimum value of the bounding box position of the sub-group currently being coded.

The following is a detailed description of the input parent node selection operation (S2605).

In the decoding of dependent slices, the output nodes of the parent sub-group are used as inputs for the decoding of the child sub-groups. If the sub-group bounding boxes of the parent and child sub-groups are identical, all nodes generated in the parent sub-group are used. Conversely, if the sub-group bounding box of the child sub-group is a subset of the parent sub-group, the decoders select the actual parent nodes. To identify the parent nodes, the present disclosure compares each node of the parent sub-group with the bounding box boundaries of the child sub-group.

The pseudo-code below is an example of the aforementioned parent node selection process. That is, only nodes within a specific range (bbox_min and bbox_max) are selected as parent nodes. For example, a node is added as a parent node only when the node's position (node.Pos) is greater than or equal to the minimum value of the bounding box (bbox_min) and less than the maximum value (bbox_max).

```
pseudo code:
for (node = inNodes.begin(); node != inNodes.end(); node++) {
if (node.Pos >= bbox_min && node.Pos < bbox_max)
fifo.emplace_back(node);
else
continue;


}
```

FIG. 27 is a diagram illustrating another example of a point cloud transmission device according to embodiments. The elements of the point cloud transmission device shown in FIG. 27 may be implemented by hardware, software, a processor, and/or a combination thereof.

According to embodiments, the point cloud transmission device may include a data input unit 51001, a signaling processor 51002, a geometry encoder 51003, an attribute encoder 51004, and a transmission processor 51005.

The geometry encoder 51003 and the attribute encoder 51004 may perform some or all of the operations described in relation to the point cloud video encoder 10002 of FIG. 1, the encoding 20001 of FIG. 2, the point cloud video encoder of FIG. 3, the point cloud video encoder of FIG. 8, the encoding of FIG. 25, and the encoding of FIG. 40.

The data input unit 51001 according to embodiments receives or acquires point cloud data. The data input unit 51001 may perform some or all of the operations of the point cloud video acquisition unit 10001 of FIG. 1 or the data input unit 8000 of FIG. 8.

The data input unit 51001 outputs the positions of points of the point cloud data to the geometry encoder 51003 and outputs the attributes of the points to the attribute encoder 51004. In addition, it outputs parameters to the signaling processor 51002. According to embodiments, the parameters may be provided to the geometry encoder 51003 and the attribute encoder 51004.

The geometry encoder 51003 performs geometry compression on a layer-group basis using the positions of the input points. The geometry encoder 51003 performs entropy encoding on the compressed geometry information and outputs the encoded information to the transmission processor 51005 in the form of a geometry bitstream.

The geometry encoder 51003 reconstructs geometry information based on the positions changed through the compression and outputs the reconstructed (or decoded) geometry information to the attribute encoder 51004.

According to embodiments, the geometry encoder 51003 constructs an octree using the positions of the input points, performs layer-group-based slicing on the octree, selects one or more slices, and then compresses geometry information related to the selected one or more slices. Layer-group-based slicing and slice-level geometry compression according to the embodiments have been described in detail with reference to FIGS. 11 to 25, and thus a description thereof will be omitted below to avoid redundancy.

The attribute encoder 51004 compresses attribute information based on positions on which geometry encoding has not been performed and/or the reconstructed geometry information. In one embodiment, the attribute information may be coded using any one or a combination of RAHT coding, LOD-based predictive transform coding, and lifting transform coding. The attribute encoder 51004 performs entropy encoding on the compressed attribute information and outputs the encoded information to the transmission processor 51005 in the form of an attribute bitstream.

The signaling processor 51002 generates and/or processes signaling information necessary for encoding/decoding/rendering of the geometry information and attribute information and provides the same to the geometry encoder 51003, the attribute encoder 51004, and/or the transmission processor 51005. Alternatively, the signaling processor 51002 may receive the signaling information generated by the geometry encoder 51003, the attribute encoder 51004, and/or the transmission processor 51005. The signaling processor 51002 may provide information fed back from the reception device (e.g., head orientation information and/or viewport information) to the geometry encoder 51003, the attribute encoder 51004, and/or the transmission processor 51005.

In the present disclosure, signaling information including layer-group-based slicing related information (layer-group structure inventory (LGSI)) may be signaled and transmitted in units of a parameter set (SPS: sequence parameter set, GPS: geometry parameter set, APS: attribute parameter set, TPS: tile parameter set (also referred to as tile inventory), etc.) and/or a data unit (i.e., slice). That is, it may be signaled and transmitted in a coding unit (or compression unit or prediction unit) of each image, such as a slice or a tile.

The transmission processor 51005 may perform the same or similar operations and/or transmission methods as the transmission processor 8012 of FIG. 8, or perform the same or similar operations and/or transmission methods as the transmitter 10003 of FIG. 1. For details thereof, which are omitted below, refer to the descriptions of FIG. 1 or 8.

The transmission processor 51005 may multiplex the geometry bitstream output from the geometry encoder 51003, the attribute bitstream output from the attribute encoder 51004, and the signaling bitstream output from the signaling processor 51002 into a single bitstream and transmits the bitstream or may encapsulate the bitstream into a file or segment to be transmitted. In one embodiment of the present disclosure, the file may be in the ISOBMFF file format.

According to embodiments, the file or segment may be transmitted to a reception device or stored in a digital storage medium (e.g., USB, SD, CD, DVD, Blu-ray, HDD, SSD, etc.). The transmission processor 51005 according to embodiments is capable of wired/wireless communication with the reception device over a 4G, 5G, or 6G network. In addition, the transmission processor 51005 may perform necessary data processing operations according to a network system (e.g., a 4G, 5G, or 6G communication network system). Furthermore, the transmission processor 51005 may transmit the encapsulated data in an On Demand manner.

FIG. 28 is a diagram illustrating another example of a point cloud reception device according to embodiments. The elements of the point cloud reception device shown in FIG. 28 may be implemented by hardware, software, a processor, and/or a combination thereof.

According to embodiments, the point cloud reception device may include a reception processor 61001, a signaling processor 61002, a geometry decoder 61003, an attribute decoder 61004, a geometry buffer 61005, an attribute buffer 61006, and a post-processor 61007.

The reception processor 61001 according to the embodiments may receive a single bitstream or may receive a geometry bitstream, an attribute bitstream, and a signaling bitstream, respectively. When a file and/or segment is received, the reception processor 61001 according to the embodiments may decapsulate the received file and/or segment and output a bitstream for the same.

When a single bitstream is received (or decapsulated), the reception processor 61001 according to the embodiments may demultiplex a geometry bitstream, an attribute bitstream, and/or a signaling bitstream from the single bitstream, and output the demultiplexed signaling bitstream to the signaling processor 61002, the geometry bitstream to the geometry decoder 61003, and the attribute bitstream to the attribute decoder 61004.

When a geometry bitstream, an attribute bitstream, and/or a signaling bitstream are received (or decapsulated), respectively, the reception processor 61001 according to the embodiments may deliver the signaling bitstream to the signaling processor 61002, the geometry bitstream to the geometry decoder 61003, and the attribute bitstream to the attribute decoder 61004.

The reception processor 61001 according to the embodiments may distinguish the geometry bitstream and the attribute bitstream in units of slices or sub-groups based on the signaling information processed by the signaling processor 61002. It may deliver the geometry bitstream in units of slices/sub-groups to the geometry decoder 61003 and the attribute bitstream in units of slices/sub-groups to the attribute decoder 61004. For example, the input of the geometry decoder 61003 may include a fine granularity slice bitstream (or a layer-group-based slice bitstream) and a layer-group structure.

The signaling processor 61002 may parse and process information included in signaling information, such as, for example, SPS, GPS, APS, TPS, and metadata, from the input signaling bitstream, and may provide the information to the reception processor 61001, geometry decoder 61003, attribute decoder 61004, geometry buffer 61005, attribute buffer 61006, and post-processor 61007. In another embodiment, signaling information contained in a geometry data unit header and/or an attribute data unit header may also be pre-parsed by the signaling processor 61002 before decoding the corresponding slice (or sub-group) data. In the present disclosure, the geometry buffer 61005 may store nodes belonging to the current sub-group and/or nodes belonging to the parent sub-group of the current sub-group for geometry decoding. Furthermore, before the dependent data unit is decoded, the context state of the previous slice, output nodes, and layer group parameters are stored in the geometry buffer 61005 for subsequent slices (S2602). In addition, the attribute buffer 61006 may include nodes belonging to the current sub-group and/or nodes belonging to the parent sub-group of the current sub-group for attribute decoding.

According to embodiments, the signaling processor 61002 may also parse and process information signaled in the sequence parameter set and/or the geometry data unit header (e.g., information related to layer-group-based slicing), and provide the processed information to the geometry decoder 61003 and the geometry buffer 61005.

According to embodiments, the signaling processor 61002 may also parse and process information signaled in the sequence parameter set and/or the attribute data unit header (e.g., information related to layer-group-based slicing), and provide the processed information to the attribute decoder 61004 and the attribute buffer 61006.

According to embodiments, the geometry decoder 61003 may reconstruct the geometry by performing the reverse process of the geometry encoder 51003 of FIG. 27 on the compressed geometry bitstream based on the signaling information (e.g., layer-group-based slicing related information). The geometry decoding performed by the geometry decoder 61003 when layer group slicing is enabled has been described in detail with reference to FIGS. 11 to 23 and FIG. 26, and thus a description thereof is omitted below to avoid redundancy.

The geometry information restored (or reconstructed) by the geometry decoder 61003 is provided to the attribute decoder 61004.

The attribute decoder 61004 restores attributes by performing the reverse process of the attribute encoder 51004 of FIG. 27 on the compressed attribute bitstream based on the signaling information and the reconstructed geometry information.

According to embodiments, the attribute decoder 61004 may perform LoD generation and NN search on a sub-group basis.

According to embodiments, the post-processor 61007 may reconstruct and display/render point cloud data by matching the geometry information (i.e., positions) reconstructed and output by the geometry decoder 61003 with the attribute information reconstructed and output by the attribute decoder 61004.

Hereinafter, the slice structure for the layer configuration and the signaling method for scalable transmission, as described above, will be detailed.

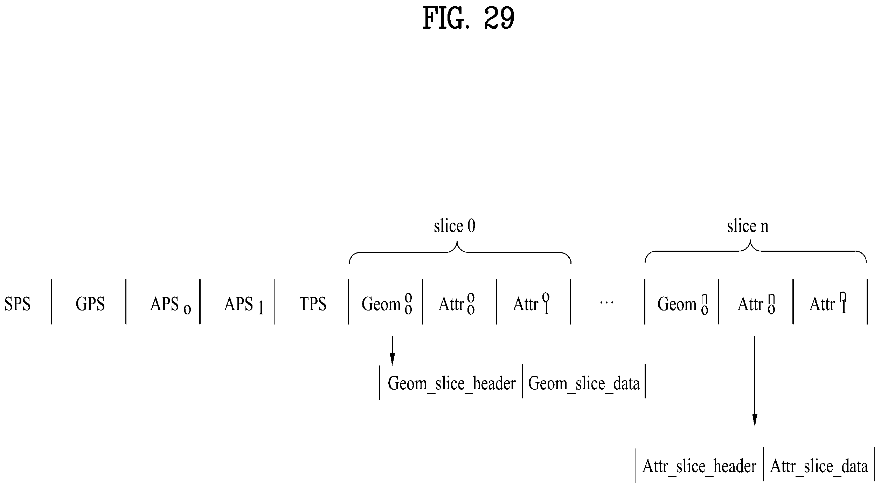

FIG. 29 illustrates a bitstream configuration according to embodiments.

A method/device according to embodiments may generate a bitstream as shown in FIG. 29. The bitstream may contain encoded geometry data and attribute information, and also contain parameter information.

Syntax and semantics related to the parameter information are as follows.

Information on divided slices according to embodiments may be defined in a parameter set and SEI message in the bitstream as follows.

According to embodiments, the bitstream may contain a sequence parameter set, a geometry parameter set, an attribute parameter set, a geometry slice header (also referred to as a geometry data unit header), and an attribute slice header (also referred to as an attribute data unit header). Depending on the application or system, it may be defined at corresponding or separate locations, resulting in different scopes and application methods. That is, it may have different meanings depending on the position where the signal is delivered. When defined in the SPS, it may be constantly applied to the entire sequence. When defined in the GPS, it may be used for geometry reconstruction. When defined in the APS, it may be used for attribute reconstruction. When defined in the TPS, the signaling may be applied only to points within the tile. When delivered per slice, the signaling may be applied only to the slice. Depending on the application or system, it may be defined at corresponding or separate locations, resulting in different scopes and application methods. Additionally, syntax elements defined below may apply not only to the current point cloud data stream but also to multiple point cloud data streams, and may be transmitted through higher-level parameter sets.

Each abbreviation has the following meaning. SPS: Sequence Parameter Set, GPS: Geometry Parameter Set, APS: Attribute Parameter Set, TPS: Tile Parameter Set, Geom: Geometry bitstream = geometry slice header+ geometry slice data, Attr: Attribute bitstream = attribute slice header + attribute slice data.

Embodiments define the following information independently of coding techniques, but the information may also be defined in conjunction with a coding method. To support locally different scalability, it may be defined in a tile parameter set (TPS) in the bitstream. Further, when the syntax elements defined below are applicable not only to the current point cloud data stream but also to multiple point cloud data streams, they may be delivered through a higher-level parameter set.

Alternatively, a bitstream may be selected at the system level by defining a network abstract layer (NAL) unit for the bitstream and delivering relevant information for layer selection, such as a layer_id.

According to embodiments, parameters necessary for encoding and/or decoding of point cloud data may be newly defined in parameter sets (e.g., SPS, GPS, APS, and TPS (or tile inventory)) and/or the header of a corresponding slice (i.e., data unit header or slice header). For example, parameters may be added to the GPS when performing geometry encoding and/or decoding, or to the tile and/or data unit header when performing tile-based encoding and/or decoding.

According to embodiments, layer-group-based slicing related information may be signaled in the SPS, and/or GPS, and/or APS, and/or LGSI.

According to embodiments, the layer-group-based slicing related information may be signaled in the TPS, and/or geometry data unit header, and/or attribute data unit header, and/or LGSI.

According to embodiments, when the syntax elements defined below are applicable to multiple point cloud data streams as well as the current stream, layer-group-based slicing related information may be delivered through a higher-level parameter set.

According to embodiments, layer-group-based slicing related information may be defined in corresponding or separate locations depending on the application or system, allowing for different scopes and methods of application. The term "field" used in the syntaxes described hereafter may have the same meaning as "parameter" or "syntax element."

Hereinafter, parameters (which may be referred to as metadata, signaling information, or the like) according to embodiments may be generated during the process of the transmitter and delivered to a receiver so as to be used in the reconstruction process.

According to embodiments, parameters containing layer-group-based slicing related information may be generated by the metadata processor (or metadata generator) or the signaling processor of the transmission device and delivered to the reception device for use in decoding/reconstruction. For example, parameters generated and transmitted by the transmission device may be acquired by the metadata parser of the reception device.

According to embodiments, parameters describing the layer group structure (e.g., parameters containing layer-group-based slicing related information) are signaled at various levels. For example, common structural information is described in the SPS, while details of each layer group or sub-group are signaled in the slice header (or data unit header). Additionally, an LGSI and a dependent slice header (or dependent data unit header) are provided to describe the overall layer group structure. The definition of G-PCC slices and the signaling method for fine-granularity slicing are described below.

1) Definition of G-PCC Slices.

Slice: A set of points coded into one independent fine-granularity slice and zero or more dependent fine-granularity slices. For example, a slice may include multiple FGSs, and an FGS may be referred to as a segmented slice or a subdivided slice.

Dependent Fine-Granularity Slice: A data unit of a slice that depends on a previous data unit within the same slice.

Independent Fine-Granularity Slice: The first [geometry] data unit of a slice.

2) A fine-granularity slice is enabled in the SPS

3) Essential information required to decode a dependent fine-granularity slice, including context inheritance and slice-specific bounding boxes, is carried in the dependent data unit header.

4) A layer-group structure inventory is defined to describe the relationships between fine-granularity slices.

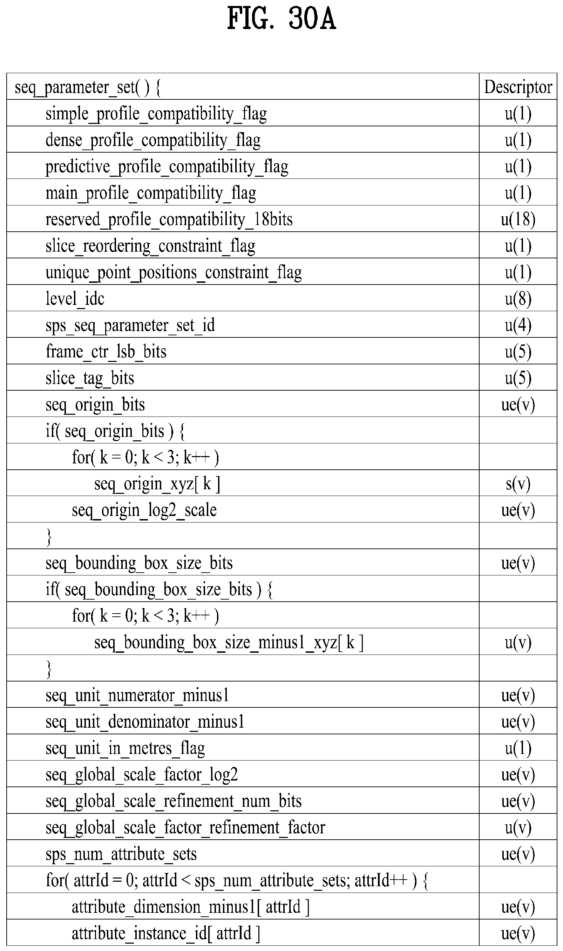

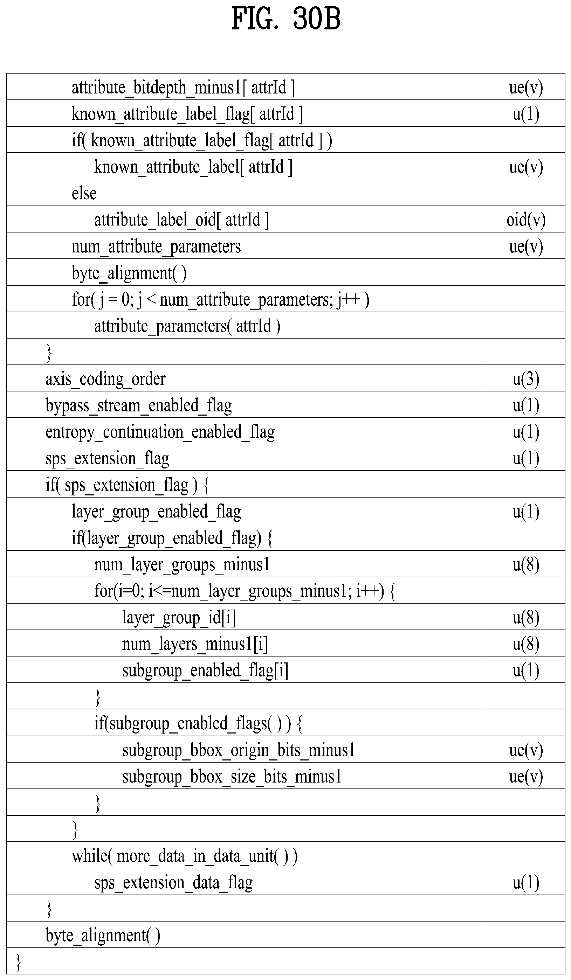

FIGS. 30A and 30B illustrate a sequence parameter set (SPS) according to embodiments. The SPS may contain sequence information of the point cloud data bitstream. Specifically, in the example, it contains layer-group-based slicing related information.

The syntaxes in FIGS. 30A and 30B may be contained in the bitstream of FIG. 29, generated by a point cloud encoder, and decoded by a point cloud decoder according to embodiments.

simple_profile_compatibility_flag: Indicates whether the bitstream conforms to the simple profile (when it is 1) or not (when it is 0).

dense_profile_compatibility_flag: Indicates whether the bitstream conforms to the dense profile (when it is 1) or not (when it is 0).

predictive_profile_compatibility_flag: Indicates whether the bitstream conforms to the predictive profile (when it is 1) or not (when it is 0).

main_profile_compatibility_flag: Indicates whether the bitstream conforms to the main profile (when it is 1) or not (when it is 0).

slice_reordering_constraint_flag: Indicates whether the bitstream is sensitive to the reordering or removal of slices within a coded point cloud frame (when it is 1) or not (when it is 0). When slice_reordering_constraint_flag is 1, the resulting bitstream may not be fully decodable if slices are reordered or removed.

unique_point_positionsconstraint_flag: When equal to 1, it indicates that every point should have a unique position in each coded point cloud frame. unique_point_positionsconstraint_flag equal to 0 indicates that two or more points may have the same position.

sps_seq_parameter_set_id: Identifies the SPS for reference by other data units (DUs).

seq_origin_bits: Indicates the length, in bits, of each seq_origin_xyz syntax element, excluding the sign bit.

seq_origin_xyz[k] and seq_origin_log2_scale: Together indicate the XYZ origin and the coding coordinates of the sequence in sequence coordinate system units from the application-specific coordinate system origin. When seq_origin_bits is 0, seq_origin_xyz[k] and seq_origin_log2_scale are inferred to be 0.

seq_bounding_box_size_bits: Indicates the length, in bits, of each seq_bbox_size_minus1_xyz syntax element.

seq_bounding_box_size_minus1_xyz[ k ]: Plus 1 indicates the k-th XYZ component of the coded volume dimension in the sequence coordinate system.

seq_unit_numerator_minus1, seq_unit_denominator_minus1, and seq_unit_is_metres: Together, indicate the length represented with a unit vector in the sequence coordinate system.

sps_num_attribute_sets: Indicates the number of attributes listed in the SPS attribute list.

attribute_instance_id[ attrId ]: Indicates the instance identifier for the identified attribute.

attribute_bitdepth_minus1[ attrId ]: Plus 1 specifies the bit depth for all components of the identified attribute.

layer_group_enabled_flag: When equal to 1, it indicates that the geometry bitstream of the slice is contained in multiple slices matching groups of coding layers or corresponding sub-groups. When equal to 0, layer_group_enabled_flag specifies that the geometry bitstream is contained in a single slice.

num layer_groups_minus1 + 1 indicates the number of layer groups, where a layer group represents a group of consecutive tree layers that are part of a geometry coding tree structure. num_layer_groups_minus1 is in the range of 0 to the total number of coding tree layers.

layer_group_id indicates the layer group ID of a slice (or the indicator of a layer-group of a slice). layer_group_id is in the range of 0 to num_layer_groups_minus1.

numlayers_minus1 + 1 indicates the number of coding layers included in the i-th layer group. The total number of layer groups may be derived by adding all (num_layers_minus1[i] + 1) to num_layer_groups_minus1 when i is 0.

subgroup_enabled_flag equal to 1 specifies the i-th layer-group is divided into two or more subgroups where the set of points in the subgroups of a layer-group is identical to the set of points in the layer-group. When subgroup_enabled_flag of the i-th layer-group is equal to 1, subgroup enabled_flag of the j-th layer-group shall be equal to 1 when j is larger than or equal to i. subgroup_enabled_flag equal to 0 specifies that the current layer-group is not sub-divided into multiple subgroups and contained in a single slice.

subgroup_bbox_origin_bits_minus1 + 1 indicates the bit length of the subgroup_bbox_origin field (or syntax element).

subgroup_bbox_size_bits_minus1 + 1 indicates the bit length of the subgroup bbox_size field.

In the present disclosure, layer-group-based slicing-related information may include at least one of layer_group_enabled_flag, num_layer_groups_minus1, layer_group_id[i], num_layers_minus1[i], subgroup_enabled_flag[i], subgroup_bbox_origin_bits _minus1, and subgroup_bbox_size_bits _minus1.

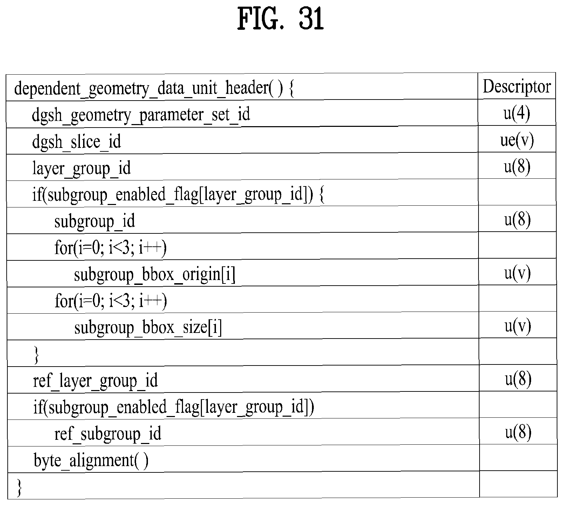

FIG. 31 illustrates an example of a syntax structure of a dependent geometry data unit header according to embodiments. FIG. 31 shows an example in which the dependent geometry data unit header contains layer-group-based slicing-related information.

The syntaxes in FIG. 31 may be contained in the bitstream of FIG. 29. They may be generated by a point cloud encoder and decoded by a point cloud decoder according to embodiments.

According to embodiments, the dependent geometry data unit header may be included in a geometry data unit. The term "geometry data unit" may be used interchangeably with "dependent geometry data unit" or "geometry slice."

dgsh_geometry_parameter_set_id indicates the active GPS identified by gps_geom_parameter_set_id. The value of dgsi_geometry_parameter_set_id is identical to the value of gdu_geometry_parameter_set_id for the corresponding slice.

dgsi_slice_id specifies the geometry slice to which the current dependent geometry data unit belongs.

layer_group_id may indicate an indicator of the layer group of the slice. The range of layer_group_id may be from 0 to num layer_groups _minus1. When not present, it is inferred to be 0.

subgroup_id indicates the indicator of a subgroup of the layer group referenced by layer_group_id. The range of subgroup_id may be from 0 to num_subgroups_minus1[layer_group_id]. Here, subgroup_id may indicate the order of slices within the same layer_group _id. When not present, it is inferred to be 0.

subgroup bbox_origin indicates the origin position of the subgroup bounding box of the i-th subgroup indicated by subgroup_id of the j-th layer group indicated by layer_group_id.

subgroup_bbox_size indicates the size of the subgroup bounding box of the i-th subgroup indicated by subgroup_id of the j-th layer group indicated by layer_group_id.

According to embodiments, the bounding box of points in a subgroup is described by subgroup_bbox_origin and subgroup_bbox_size. In this case, the region in the bounding box of the i-th subgroup does not overlap with the bounding box of the j-th subgroup when i is not equal to j.

ref_layer_group_id indicates the indicator of the layer group identifier for the context reference of the current dependent data unit. ref_layer_group_id is in the range of 0 to layer_group_id of the current dependent data unit.

ref_subgroup_id indicates the indicator for the reference subgroup of the layer group indicated by ref_layer_group _id. ref_subgroup_id is in the range of 0 to num_subgroup_id_minus1 of the layer group indicated by ref_layer_group_id.

A bitstream according to embodiments may include at least one slice or subdivided slices, and may contain a geometry data unit and an attribute data unit. Each data unit includes a header. Additionally, the data units include an independent data unit and a dependent data unit. The dependent data unit may represent an inclusion relationship based on dependency between parent and child nodes. FIG. 31 shows the syntax of a dependent geometry data unit header. Similarly, the syntax of a geometry data unit header may be the same as in FIG. 31.

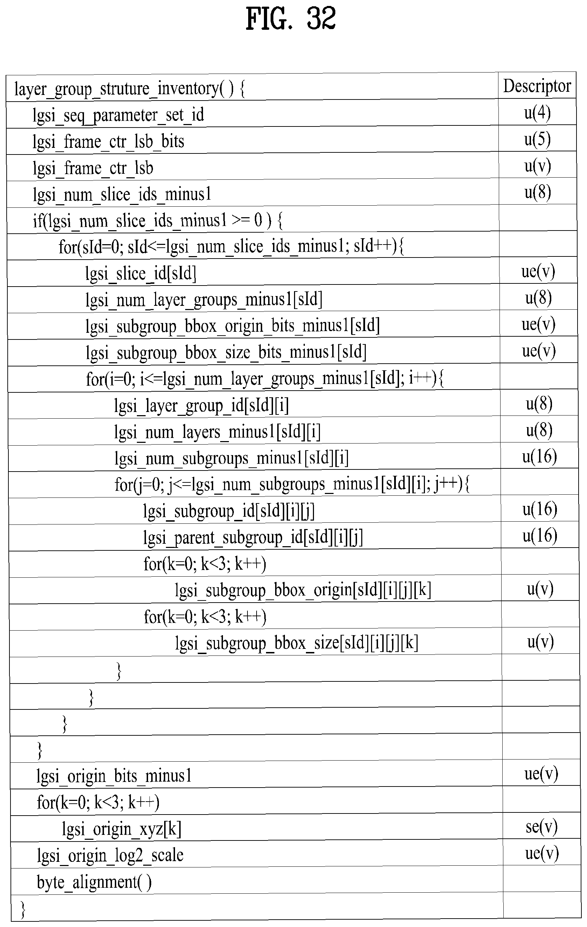

FIG. 32 illustrates a layer group structure inventory (LGSI) according to embodiments. That is, the LGSI in FIG. 32 describes the relationships between fine-granularity slices as follows.

lgsi_seq_parameter_set_id indicates the value of sps_seq_parameter_set_id.

lgsi_frame_ctr_lsb_bits indicates the length of the lgsi_frame_ctr_lsb field (or syntax element) in bits.

lgsi_frame_ctr_lsb indicates the least significant bits (lgsi_frame_ctr_lsb_bits) of FrameCtr for which the LGSI is valid. The LGSI remains valid until it is replaced by another LGSI.

lgsi_num_slice_ids_minus1 + 1 indicates the number of slices in the LGSI.

lgsi_slice_id indicates the slice ID of the sid-th slice within the LGSI.

lgsi_num_layer_groups_minus1 + 1 indicates the number of layer groups.

lasi_subgroup_bbox_origin bits _minus1 + 1 indicates the length of the lgsi_subgroup_bbox_origin field in bits.

lgsi_subgroup_bbox_size_bits_minus1 + 1 indicates the length of the lgsi_subgroup_bbox_size field in bits.

lgsi_layer_group_id indicates the indicator of the layer group.

lgsi_numlayers_minus1 + 1 indicates the number of coded layers in the i-th layer group of the sid-th slice. The total number of coded layers required to decode the n-th layer group is equal to the sum of lgsi_num_layers_minus1[sid][i] + 1, where i is from 0 to n.

lgsi_num_subgroups_minus1 + 1 indicates the number of subgroups in the i-th layer group of the sid-th slice.

lgsi_subgroup_id indicates the ID (or indicator) of a layer group (or subgroup). The value of lgsi_subgroup_id is between 0 and lgsi_num_subgroups_minus1.

lgsi_parent_subgroup_id indicates the indicator of a subgroup in the layer group indicated by lgsi_subgroup_id. The value of lgsi_parent_subgroup_id is between 0 and gi_num_subgroups_minus1 within the layer group indicated by lgsi_subgroup_id.

lgsi_subgroup_bbox_origin indicates the origin of the subgroup bounding box of the subgroup indicated by lgsi_subgroup_id of the layer group indicated by lgsi_layer_group_id.

lgsi_subgroup_bbox_size indicates the size of the subgroup bounding box of the subgroup indicated by lgsi_subgroup_id of the layer group indicated by lgsi_layer_group_id.

lgsi_origin_bits_minus1 + 1 indicates the length of the lgsi_origin _xyz field in bits.

lgsi_origin xyz indicates the origin of all partitions. The value of lgsi_origin_xyz[ k ] is equal to sps_bounding_box_offset[k].

lgsi_origin_log2_scale indicates the scaling factor for scaling the lgsi_origin _xyz field. The value of lgsi_origin_log2_scale is equal to sps_bounding_box_offset_log2_scale.

As described above, coding (i.e., compression) of geometry information may be performed based on an octree. In this case, the planar mode used in octree-based geometry coding probabilistically determines whether each node is planar. This imposes a burden of updating probabilities every time and tracking the local node density of each node. As a method to alleviate this, whether to use the planar mode may be determined based on the density at each octree level.

According to embodiments, the density condition for determining whether to use the planar mode may be calculated as shown in Equation 1. That is, planar eligibility is determined for each tree depth based on the density as shown in Equation 1.

[Equation 1]

$$realDensity_{i+1} = \frac{numPoints - numPointsCodedByIdcm_i}{numSubnodes_i}$$

*numPoints:* The number of points within the point cloud

*numPointsCodedByIdcm$_i$:* The number of IDCM nodes (also referred to as direct coding mode nodes) from the root to the i-th octree layer. That is, *numPointsCodedByIdcm$_i$* indicates the number of points coded using IDCM from the root node layer to the i-th octree layer.

*numSubnodes$_i$:* The number of occupied sub-nodes (i.e., the number of child nodes) generated at the i-th octree layer. That is, *numSubnodes$_i$* indicates the number of occupied sub-nodes generated by the nodes included in the i-th octree layer. Additionally, realDensity$_{i+1}$ indicates the real density of points for the (i+1)-th octree layer.

According to embodiments, whether to use the planar mode in the (i+1)-th octree layer may be determined as follows. Specifically, prior to the coding process of the (i+1)-th octree layer, the eligibility of all nodes for the xyz-planar mode in the (i+1)-th octree layer is determined as follows:

$$planarEligibleKOctreeDepth_{i+1} = \begin{cases} 1, & realDensity_{i+1} < th \\ 0, & otherwise \end{cases}$$

planarEligibleKOctreeDepth(i+1) may be independently derived and applied by both the encoder and the decoder. Here, th is a predefined threshold, which may be set to 1.3 as an example.

For example, when the density ($realDensity_{i+1}$) calculated by applying Equation 1 in the (i+1)-th octree layer is less than the threshold, planarEligibleKOctreeDepth$_{i+1}$ is 1, indicating that the planar mode is used in the (i+1)-th octree layer. Conversely, when the density ($realDensity_{i+1}$) is not less than the threshold, planarEligibleKOctreeDepth$_{i+1}$ is 0, indicating that the planar mode is not used in the (i+1)-th octree layer.

As described above, when layer-group slicing is used, Equation 1 for realDensity may be modified into Equation 2 given below for the m-th subgroup belonging to the n-th layer group.

[Equation 2]

$$realDensity_{i+1}(n,m) = \frac{numPoints(n,m) - numPointsCodedByIdcm_i(n,m)}{numSubnodes_i(n,m)}$$

*numPoints(n,m):* The number of final points included in the bounding box corresponding to the m-th subgroup belonging to the n-th layer group.

*numPointsCodedByIdcm$_i$(n, m):* The number of points, among the points coded using idem from the root to the i-th octree layer, that are included in the bounding box corresponding to the m-th subgroup belonging to the n-th layer group.

*numSubnodes$_i$(n, m)*: The number of occupied sub-nodes (i.e., the number of child nodes) generated at the i-th octree layer for the m-th subgroup belonging to the n-th layer group.

Based on the above, whether to use the planar mode in the (i+1)-th octree layer for the m-th subgroup belonging to the n-th layer group may be determined as follows:

$$planarEligibleKOctreeDepth_{i+1}(n,m) = \begin{cases} 1, & realDensity_{i+1}(n,m) < th \\ 0, & otherwise \end{cases}$$

In other words, while the region is divided into subgroups due to layer-group slicing, the planar mode may be adaptively applied according to the characteristics of the region using the equation above.

However, in the case of layer-group slicing, the octree depth may be divided into different slices, making it difficult to apply the above method directly to upper layer groups. For example, in the last layer group, numPoints may be estimated because the number of points generated in the subgroups included in the slice is signaled in the header. However, since the number of points signaled in the header refers to the number of final points generated in each slice, it is difficult to estimate numPoints for the upper layer groups. To address this issue, the following methods may be considered according to embodiments:

1) Signaling the number of final points generated at the leaf layer-group level:
For dependent slices in layer-group slicing, the encoder may transmit the number of final points generated at the leaf layer-group level to the decoder.
2) Using an arbitrary number of points:

When numPoints is unknown, a predefined arbitrary number of points may be used identically by both the encoder and the decoder.

In this context, numPoints(n, m) may indicate the number of final points included in the bounding box corresponding to the m-th subgroup of the n-th layer group. If any child subgroup is not present (i.e., it belongs to the last layer group), numSlicePoint carried in the header may be used. If a child subgroup is present (i.e., it belongs to an upper layer group), a pre-agreed arbitrary number of points may be used by the encoder and decoder.

For example, a fixed value such as the maximum number of points that may be included in each slice (MaxSlicePoint) may be used.

As another example, a predicted value may be used. Equation 3 below illustrates an example of prediction using coefficients (e.g., coeff_a, coeff_b). That is, numPoints(n, m) may be estimated by a linear function as shown in Equation 3.

[Equation 3]

$$\text{estimated numPoints(n,m)} = \text{number of parent Subgroup nodes} \ X \ \text{coeff\_a} + \text{coeff\_b}$$

Here, coeff_a and coeff_b represent the coefficients of a linear function. coeff_a and coeff_b may be predefined or directly delivered to the decoder as needed.

Specifically, the number of final points included in the bounding box corresponding to the m-th subgroup of the n-th layer group (numPoints(n, m)) may be obtained by adding coeff_a and coeff_b, which are the coefficients of the linear function, to the number of parent subgroup nodes.

3) Direct transmission of planarEligibleKOctreeDepth

Since the encoder of the transmission device knows the number of final points for each subgroup, it may calculate planarEligibleKOctreeDepth$_{i+1}$(n, m) based on the same and transmit this value directly to the decoder of the reception device. In this case, the decoder does not need to calculate the planar eligibility, and therefore the complexity of the decoder may be reduced.

According to embodiments, the encoder of the transmission device may signal the planar mode-related information described above in the dependent geometry data unit header to transmit the same to the decoder of the reception device.

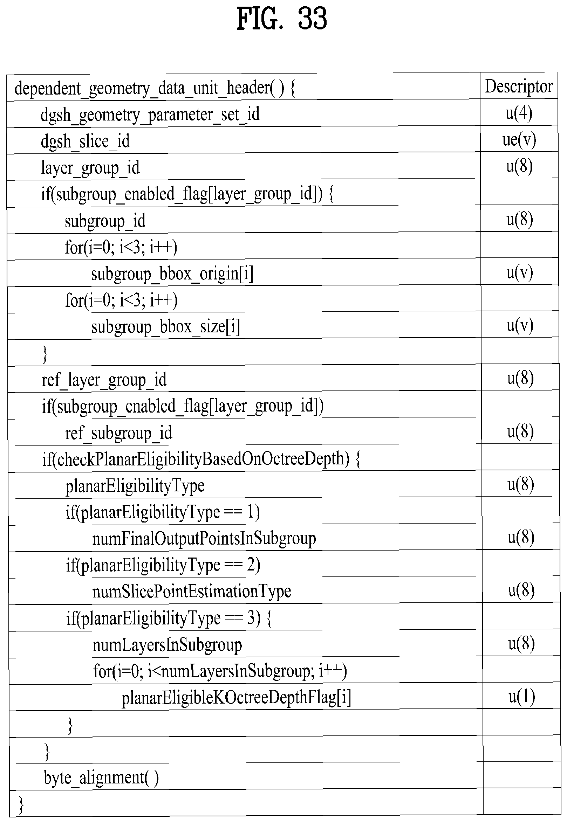

FIG. 33 illustrates another example of a syntax structure of a dependent geometry data unit header according to embodiments. FIG. 33 shows an example in which the dependent geometry data unit header contains layer-group-based slicing-related information and planar mode-related information.

The syntaxes in FIG. 33 may be contained in the bitstream of FIG. 29. They may be generated by a point cloud encoder and decoded by a point cloud decoder according to embodiments.

Since details of the layer-group-based slicing-related information signaled in the dependent geometry data unit header of FIG. 33 has been described above with reference to FIG. 31, the description of FIG. 31 will be referred to, and it will be omitted below to avoid redundancy. In FIG. 33, planar mode-related information is described.

In FIG. 33, when checkPlanarEligibilityBasedOnOctreeDepth is true, it indicates that the planar mode is used in the corresponding layer group. In this case, the dependent geometry data unit header may include planarEligibilityType.

planarEligibilityType may indicate the method of using the planar mode. For example, among the values of planarEligibilityType, 0 indicates the existing node-adaptive planar mode application; 1 indicates signaling the number of final points generated at the leaf layer-group level, 2 indicates using an arbitrary number of points, and 3 indicates directly signaling planarEligibleKOctreeDepth.

Specifically, when the value of planar Eligibility Type is 1, the dependent geometry data unit header includes the number of final points in the subgroup (numFinalOutputPointsInSubgroup). When the value of planarEligibilityType is 2, the header includes a predicted value for the number of points in the slice (numSlicePointEstimationType). When the value of planarEligibilityType is 3, the header includes planar mode eligible octree depth flags (planarEligibleKOctreeDepthFlag) as many as the number of layers in the subgroup (numLayersInSubgroup).

The number of final points in the subgroup (numFinalOutputPointsInSubgroup) may represent the number of final output points included within the subgroup bounding box of the current slice.

The predicted value of the number of points in the slice (numSlicePointEstimationType) may indicate the method of estimating numSlicePoint (or numPoints) for obtaining realDensity. For example, numSlicePointEstimationType equal to 0 may indicate a pre-determined value (e.g., maxSlicePoint, i.e., the maximum number of points that may be contained in a slice). numSlicePointEstimationType equal to 1 may indicate that the number is estimated by a linear function. In this case, the coefficients coeff_a and coeff_b of the linear function may be predefined or directly transmitted as needed.

numLayersInSubgroup: May indicate the number of octree depths included in the current slice.

When the value of planarEligibleKOctreeDepthFlag, which is repeated as many times as the value of numLayersInSubgroup, is 1, it may indicate that planar mode is used for the i-th octree depth among the octree depths included in the current slice. When the value is 0, it may indicate that the planar mode is not used for the i-th octree depth among the octree depths included in the current slice. The planarEligibleKOctreeDepthFlag may correspond to planarEligibleKOctreeDepth_(i+1) (n,m) generated in the method of directly signaling the planarEligibleKOctreeDepth.

Equation 4 below is another example for obtaining the density condition for determining whether to use the planar mode.

[Equation 4]

$$realDensity_{i+1}(s) = \frac{numPoints(s) - numPointsCodedByIdcm_i(s)}{numSubnodes_i(s)}$$

numPoints(s) indicates the number of points within subgroup s.

numPointsCodedByIdcm$_i$(s) indicates the number of points that are coded using IDCM from the root node layer to the i-th octree layer and within the subgroup boundary of subgroup s.

numSubnodes$_i$(s) indicates the number of occupied sub-nodes generated by the nodes included in the i-th octree layer of subgroup s.

And, realDensity$_{i+1}$(s) indicates the real density of points for the (i+1)-th octree layer of subgroup s.

According to embodiments, whether to use the planar mode in the (i+1)-th octree layer may be determined as follows. That is, before the coding process of the (i+1)-th octree layer, the eligibility of all nodes for the xyz-planar mode in the (i+1)-th octree layer of subgroup s is determined as follows:

$$planarEligibleKOctreeDepth_{i+1}(s) = \begin{cases} 1, & realDensity_{i+1}(s) < th \\ 0, & otherwise \end{cases}$$

Here, th is a predefined threshold, which may be set to 1.3 as an example.

In this regard, when subgroup adaptive planar eligibility is used based on the density, the number of points in each subgroup remains unknown to the decoder until the subgroups belonging to the last layer group are delivered. The present disclosure may resolve this issue by signaling information that identifies the planar eligibility (e.g., planarEligibleKOctreeDepth $_{i+1}$(s)) in the data unit header or the dependent geometry data unit header of each geometry data unit to match the encoder and the decoder.

In the present disclosure, an IDCM node may be referred to as a direct compression node. That is, when the hierarchical structure for geometry decoding is in a tree form, some subgroups may include at least one IDCM node.

According to embodiments, the present disclosure defines a node satisfying the following conditions as an IDCM node, and some subgroups may include at least one IDCM node satisfying these conditions.

Parent-based eligibility condition: From the perspective of the parent node of the current node (point), there is only one occupied child (the current node). From the perspective of the grandparent, there is at most one occupied child (i.e., the parent has at most one occupied sibling, meaning there are at most two occupied children for the grandparent).

6N eligibility condition: From the perspective of the parent node, there is only one occupied child (the current node), and the six neighbors (nodes sharing a face) are not occupied.

In the present disclosure, a node satisfying the above conditions is referred to as an IDCM node (or point) and a node failing to satisfy the conditions is referred to as a non-IDCM node (or point). In each subgroup, a single layer may include zero or one or more IDCM nodes.

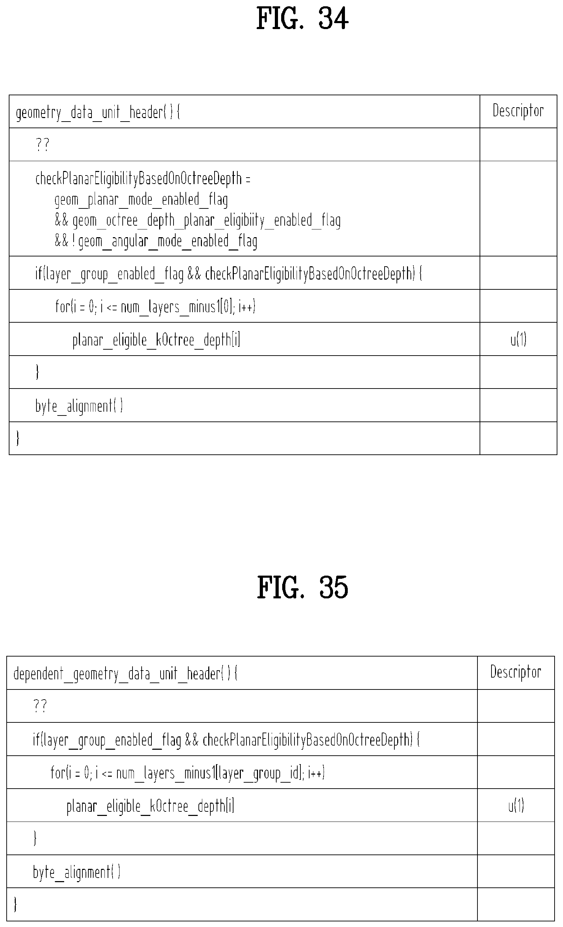

FIG. 34 illustrates an example of a syntax structure of a geometry data unit header according to embodiments. FIG. 34 shows an example in which planar_eligible_kOctree_depth[i] (i.e., planarEligibleKOctreeDepth$_{i+1}$(s)) is contained in the geometry data unit header.

The syntaxes in FIG. 34 may be contained in the bitstream of FIG. 29. They may be generated by a point cloud encoder and decoded by a point cloud decoder according to embodiments.

In FIG. 34, checkPlanarEligibilityBasedOnOctreeDepth may determine whether the geometry data unit header is to contain planar_eligible_kOctree_depth (i.e., planarEligibleKOctreeDepth$_{i+1}$(s)).

For example, when geom_planar_mode_enabled_flag and geom_octree_depth_planar_eligibility_enabled_flag both indicate "enabled" and geom_angular_mode_enabled_flag indicates "disabled," checkPlanarEligibilityBasedOnOctreeDepth is true.

The geom_planar_mode_enabled_flag may indicate whether the planar mode is enabled.

The geom_octree_depth_planar_eligibility_enabled_flag may indicate whether octree depth planar eligibility is enabled.

The geom angular_mode_enabled_flag may indicate whether the angular mode is enabled.

The geom_planar_mode_enabled_flag, geom_octree_depth_planar_eligibility_enabled_flag, and geom_angular_mode_enabled_flag may be signaled in at least one of the SPS, GPS, or geometry data unit.

According to embodiments, when layer_group_enabled_flag indicates "enabled" and checkPlanarEligibilityBasedOnOctreeDepth is true, the geometry data unit includes planar_eligible_kOctree_depth[i], repeating as many times as the number of octree depths of the first layer group (or current subgroup) (num_layers_minus1).

When the value of layer_group_enabled_flag indicates "enabled," it indicates that the geometry bitstream of the slice is included in a group of coding layers or multiple slices matching the corresponding subgroup. When the value of layer_group_enabled_flag indicates "disabled," it specifies that the geometry bitstream is included in a single slice.

The num_layers_minus1 [0] indicates the number of octree depths (i.e., coding layers) included in the first layer group (or the current subgroup).

In one embodiment, the num_layers_minus1 and layer_group_enabled_flag may be signaled in the SPS.

When the value of planar_eligible_kOctree_depth[i] is 1, it indicates that the planar eligibility flag is enabled for the i-th depth of the first layer group (or current subgroup). That is, it indicates that the planar mode is used for the i-th depth. When the value of planar_eligible_kOctree_depth[i] is 0, it indicates that the planar eligibility flag is disabled for the i-th depth of the first layer group (or current subgroup). That is, it indicates that the planar mode is not used for the i-th depth.

As such, FIG. 34 may signal whether planar eligibility is enabled for each coding layer (i.e., octree depth) of the first layer group. In this case, the decoder of the reception device may use subgroup adaptive planar eligibility based on density even when the number of points in each subgroup is not known. That is, it may be known whether the planar mode is used for each coding layer (i.e., octree depth) of the first layer group.

FIG. 35 illustrates an example of a syntax structure of a dependent geometry data unit header according to embodiments. FIG. 35 shows an example in which planar_eligible_kOctree_depth[i] (i.e., planarEligibleKOctreeDepth$_{i+1}$ (s)) is contained in the dependent geometry data unit header.

The syntaxes in FIG. 35 may be contained in the bitstream of FIG. 29. They may be generated by a point cloud encoder and decoded by a point cloud decoder according to embodiments. In the present disclosure, planar_eligible_kOctree_depth[i] may be signaled in the syntax of either FIG. 31 or FIG. 33 instead of FIG. 35.

In FIG. 35, checkPlanarEligibilityBasedOnOctreeDepth may determine whether the geometry data unit header is to contain planar_eligible_kOctree_depth (i.e., planarEligibleKOctreeDepth$_{i+1}$(s)).

For example, when geom_planar_mode_enabled_flag and geom_octree_depth_planar_eligibility_enabled_flag both indicate "enabled" and geom_angular_mode_enabled_flag indicates "disabled," checkPlanarEligibilityBasedOnOctreeDepth is true.

The geom_planar_mode_enabled_flag may indicate whether the planar mode is enabled.

The geom_octree_depth_planar_eligibility_enabled_flag may indicate whether octree depth planar eligibility is enabled.

The geom_angular_mode_enabled_flag may indicate whether the angular mode is enabled.

The geom_planar_mode_enabled_flag, geom_octree_depth_planar_eligibility_enabled_flag, and geom_angular_mode_enabled_flag may be signaled in at least one of the SPS, GPS, or geometry data unit.

According to embodiments, when layer_group_enabled_flag indicates "enabled" and checkPlanarEligibilityBasedOnOctreeDepth is true, the geometry data unit contains planar_eligible_kOctree_depth[i], repeating as many times as the number of octree depths of the layer group (or current subgroup) indicated (identified) by layer_group_id (i.e., num_layers_minus1[layer_group_id]).

When the value of layer_group_enabled_flag indicates "enabled," it indicates that the geometry bitstream of the slice is included in a group of coding layers or multiple slices matching the corresponding subgroup. When the value of layer_group_enabled_flag indicates "disabled," it specifies that the geometry bitstream is included in a single slice.

The num_layers_minus1[layer_group_id] indicates the number of octree depths (i.e., coding layers) included in the layer group (or current subgroup) indicated (or identified) by layer_group _id.

In one embodiment, the num_layers_minus1, layer_group_enabled_flag, and layer_group_id may be signaled in the SPS.

When planar_eligible_kOctree_depth[i] is equal to 1, it indicates that the planar eligibility flag is enabled for the i-th depth of the layer group (or current subgroup) identified by layer_group _id. That is, it indicates that the planar mode is used for the i-th depth. When planar_eligible_kOctree_depth[i] is equal to 0, it indicates that the planar eligibility flag is disabled for the i-th depth of the layer group (or current subgroup) indicated (or identified) by layer_group_id. That is, it indicates that the planar mode is not used for the i-th depth.

As such, FIG. 35 may signal whether planar eligibility is enabled for each coding layer (i.e., octree depth) of the layer group identified (or indicated) by layer group_id. In this case, the decoder of the reception device may use subgroup adaptive planar eligibility based on density even when it does not know the number of points in each subgroup. That is, it may be known whether the planar mode is used for each coding layer (i.e., octree depth) of the layer group identified (or indicated) by layer_group_id.

According to the present disclosure, a subgroup boundary may be used instead of the root bounding box boundary to restrict geometry neighbors within the same subgroup boundary of the current node.

In particular, when generating a neighbor search/neighbor pattern based on a geometry occupancy atlas, a boundary is required to prevent neighbors from exceeding the atlas boundary. Here, the neighbor search is a process of finding neighbor points (or nodes) adjacent to the point (or node) to be encoded/decoded, and the neighbor pattern is a bit pattern indicating the occupancy status of the neighbors found through the neighbor search. In the present disclosure, the K-nearest neighbor (K-NN) algorithm, octree search, and grid-based search may be used as neighbor search methods. For example, when nodes in six directions (front, back, left, right, top, bottom) based on the current node to be encoded/decoded are selected as neighbors, the neighbor pattern indicates the occupancy status of the six selected nodes (e.g., 001101). This requires an occupancy map, which is referred to as a geometry atlas in the present disclosure. In the present disclosure, geometry atlas is used with the same meaning as geometry occupancy atlas or atlas. In one embodiment, the geometry occupancy atlas may be generated for each depth of the octree. This is merely one embodiment, and the size of the geometry occupancy atlas (e.g., cubesize) may be greater or less than the depth. That is, the geometry occupancy atlas is a bit pattern representing the occupancy status of nodes within the range of the geometry occupancy atlas. For a specific node, 1 is assigned when the node includes at least one point, and 0 is assigned when it does not include any points. In the present disclosure, the geometry occupancy atlas is created as a Look-Up Table (LUT) of the occupancy status of neighbor nodes within a certain range to improve the speed of neighbor search. When the position of the current node is outside the atlas range (or atlas boundary), the atlas boundary is newly updated and used.

As an example, when the encoder of the transmission device compresses geometry information on a subgroup-by-subgroup basis, it searches for neighbors of the current node to be encoded and generates a neighbor pattern based on the boundary of the subgroup and the atlas boundary to which the subgroup belongs. When the atlas boundary and the subgroup boundary do not match, the atlas boundary is updated based on the boundary of the bounding box of the subgroup, and the neighbor search/neighbor pattern is conducted within the updated atlas boundary. Then, the current node to be encoded is compressed based on the neighbor pattern.

As another example, when the decoder of the reception device decodes geometry information on a subgroup-by-subgroup basis, it searches for neighbors of the current node to be decoded and generates a neighbor pattern based on the boundary of the subgroup and the atlas boundary to which the subgroup belongs. When the atlas boundary and the subgroup boundary do not match, the atlas boundary is updated based on the boundary of the bounding box of the subgroup, and the neighbor search/neighbor pattern is conducted within the updated atlas boundary. Then, the current node to be decoded is decoded based on the neighbor pattern.

The following code represents a method (makeGeometryNeighPattern()) for generating the neighbor pattern of a geometry encoded/decoded node (or point). That is, depending on whether the node (or point) is between the maximum and minimum ranges of the geometry occupancy atlas, a different neighbor pattern method (e.g., occupancyAtlas.get or occupancyAtlas.getWithCheck) is used to generate the neighbor pattern. In the code below, occupancyAtlas._minRange (also referred to as _minRange) indicates the minimum range of the geometry occupancy atlas, and occupancyAtlas._maxRange (also referred to as _maxRange) indicates the maximum range of the geometry occupancy atlas. The code below generates the neighbor pattern in the same or similar manner even when planar mode (planarEligibleKOctreeDepth) is used.

```
makeGeometryNeighPattern(
bool adjacent_child_contextualization_enabled_flag,
const Vec3<int32_t>& position,
int codedAxesPrevLvl,
const MortonMap3D & occupancyAtlas,
const bool& planarEligibleKOctreeDepth)
{
const int mask=occupancyAtlas.cubeSize()-1;
const int cubeSizeMinusone = mask;
const int32_t x = position [0] & mask;
const int32_t y = position [1] & mask;
const int32_t z = position [2] & mask;
uint8_t neighPattern;
const int sx = codedAxesPrevLvl & 4 ? 1: 0;
const int sy = codedAxesPrevLvl & 2 ? 1:0;
const int sz = codedAxesPrevLvl & 1 ? 1: 0;
```

```
if (
x > occupancyAtlas._minRange [0] && x < occupancyAtlas._maxRange[0]-1
&& y > occupancyAtlas._minRange [1] && y < occupancyAtlas._maxRange [1] – 1 && z > occupancyAtlas._minRange
[2] && z < occupancyAtlas. maxRange [2] -1) {
    neighPattern = occupancyAtlas.get(x+1, y, z, sx, sy, sz);
    neighPattern = occupancyAtlas.get(x-1, y, z, sx, sy, sz) << 1;
    neighPattern = occupancyAtlas.get(x, y-1, z, sx, sy, sz) << 2;
    neighPattern |= occupancyAtlas.get(x, y+1, z, sx, sy, sz) << 3;
    neighPattern = occupancyAtlas.get(x, y, z-1, sx, sy, sz) << 4;
    neighPattern = occupancyAtlas.get(x, y, z+1, sx, sy, sz) << 5;
} else {
    neighPattern occupancyAtlas.getWithCheck(x+1, y, z, sx, sy, sz);
    neighPattern = occupancyAtlas.getWithCheck (x-1, y, z, sx, sy, sz) << 1;
    neighPattern = occupancyAtlas.getWithCheck(x, y-1, z, sx, sy, sz) << 2;
    neighPattern = occupancyAtlas.getWithCheck(x, y+1, z, sx, sy, sz) << 3;
    neighPattern = occupancyAtlas.getWithCheck(x, y, z-1, sx, sy, sz) << 4;
    neighPattern = occupancyAtlas.getWithCheck(x, y, z+1, sx, sv, sz) << 5;
    if (planarEligibleKOctreeDepth) {
    if (
x > occupancyAtlas._minRange[0] && x < occupancyAtlas.maxRange[0]-1
&& y > occupancyAtlas. minRange[1] && y < occupancyAtlas._maxRange[1]-1
&& z > occupancyAtlas._minRange[2] && z < occupancyAtlas._maxRange[2]-1{
    if (occupancyAtlas.get(x-1, y-1, z, sx, sy, sz))
    gnp.adjNeigh0cc [3] = occupancyAtlas.getChild0cc(x-1, y-1, z);
    if (occupancyAtlas.get(x-1, y, z-1, sx, sy, sz)) gnp.adjNeigh0cc [4] = occupancyAtlas.getChild0cc(x-1, y, z-1);
    if (occupancyAtlas.get(x, y-1,z-1, sx, sy, sz))
    gnp.adjNeigh0cc [5] = occupancyAtlas.getChild0cc(x, y-1, z-1);
    if (occupancyAtlas.get(x-1, y-1,z 1, sx, sy, sz))
    gnp.adjNeigh0cc [6] = occupancyAtlas.getChild0cc(x-1, y-1, z-1);
    }
    else{
    if (occupancyAtlas.getWithCheck(x-1, y-1, z, sx, sy, sz))
    gnp.adjNeigh0cc [3] = occupancyAtlas.getChild0cc(x-1, y-1, z);
    if (occupancyAtlas.getWithCheck(x-1, y, z-1, sx, sy, sz))
    gnp.adjNeigh0cc [4] = occupancyAtlas.getChild0cc(x-1, y, z-1);
    if (occupancyAtlas.getWithCheck(x, y-1, z-1, sx, sy, sz))
    gnp.adjNeighOcc [5] = occupancyAtlas.getChild0cc(x, y-1, z-1);
    if (occupancyAtlas.getWithCheck(x-1, y-1, z-1, sx, sy, sz))
    gnp.adjNeigh0cc [6] = occupancyAtlas.getChild0cc(x-1, y-1, z-1);
    }
    //<If the advanced neighbor occupancy is not available
    if (!neighAvailable) {
    auto& neighOccu = gnp.neighboroccu;
    neighOccu = (!! (gnp.neighPattern & 1) << 11)
    | (!!(gnp.neighPattern & 8) << 10) | (!! (gnp.neighPattern & 32) << 9);
    if (x > occupancyAtlas._minRange[0] && x < occupancyAtlas._maxRange[0]-1
```

```
                && y > occupancyAtlas._minRange[1] && y < occupancyAtlas._maxRange[1]-1 && z > occupancyAtlas._minRange
[2] && z < occupancyAtlas._maxRange [2]-1)
                for (int n = 0; n < 9; n++) {
                neighOccu |= occupancyAtlas.get(
                x + LUTLineardx[n], y + LUTLineardy [n], z+ LUTLineardz [n], sx, sy, sz) << n;
                }
                else
                for (int n = 0; n < 9; n++) {
                neighOccu |= occupancyAtlas.getWithCheck(
                x + LUTLineardx[n], y + LUTLineardy [n], z+ LUTLineardz[n], sx, sy, sz) << n;
                }
                }
                }
```

The code below is another example for generating a neighbor pattern, specifically an example of generating a neighbor pattern for 20 neighbors. That is, the following code represents a method (prepareGeometryAdvancedNeigh-Pattern()) for generating the neighbor pattern of a geometry encoded/decoded node (or point). In this code as well, a neighbor pattern for 20 neighbors (nodes or points) is generated using different neighbor pattern methods (e.g., occupancyAtlas.get or occupancyAtlas.getWithCheck) depending on whether the node of the encoded/decoded node (or point) is between the maximum and minimum ranges of the geometry occupancy atlas. In the code below, occupancyAtlas._minRange (also referred to as _minRange) indicates the minimum range of the geometry occupancy atlas, and occupancyAtlas._maxRange (also referred to as _maxRange) indicates the maximum range of the geometry occupancy atlas. The code below generates the neighbor pattern in the same or similar manner even when planar mode (planarEligibleKOctreeDepth) is used.

```
void prepareGeometryAdvancedNeighPattern(
OctreeNeighours& octreeNeighours,
const GeometryNeighPattern& gnp,
const Vec3<int32_t>& position,
int atlasShift,
const MortonMap3D& occupancyAtlas,
const bool& planarEligibleKOctreeDepth)
{
// prepare neighbours
const int neighPattern = gnp.neighPattern;
const int mask = occupancyAtlas.cubeSize()-1;
const int32_t x = position [0] & mask;
const int32_t y = position [1] & mask;
const int32_t z = position [2] & mask;
const int sx = atlasShift & 4 ? 1:0;
const int sy = atlasShift & 2? 1:0;
const int sz= atlasShift & 1 ? 1:0;
const int cubeSizeMinusone = mask;
// prepare 20 neighbours
int neighb20 = 0;
if (x > occupancyAtlas.minRange.x() && x < occupancyAtlas._maxRange.x()-1
&& y > occupancyAtlas._minRange.y() && y < occupancyAtlas._maxRange.y()-1
&& z > occupancyAtlas._minRange.z() && z < occupancyAtlas._maxRange.z()-1)
for (int n = 0; n < 20; n++)


neighb20 | occupancyAtlas.get(
x + LUTdx[n], y + LUTdy [n], z + LUTdz[n], sx, sy, sz) << n;
else
for (int n = 0; n < 20; n++)
neighb20 |= occupancyAtlas.getWithCheck(
x + LUTdx[n], y + LUTdy [n], z + LUTdz[n], sx, sy, sz) << n;
```

As described, the maximum and minimum ranges of the geometry occupancy atlas are used when performing a neighbor search or generating a neighbor pattern.

In this process, the geometry occupancy atlas is updated by considering not only the atlas boundary but also the subgroup boundary to restrict neighbor nodes such that they belong to the same subgroup as the current node. According to embodiments of the present disclosure, the maximum and minimum ranges of the geometry occupancy atlas are updated based on the subgroup boundary. At this time, the size of the geometry occupancy atlas remains unchanged. For simplicity, the updated maximum and minimum ranges of the geometry occupancy atlas shall be referred to as the effective range of the geometry occupancy atlas. The update of the geometry occupancy atlas is performed by the geometry encoder of the transmission device or the geometry decoder of the reception device. In particular, this method allows the decoder to decode nodes of the current subgroup independently, without requiring node information related to neighbor subgroups.

That is, in the case of layer-based slicing, the atlas boundary and the subgroup boundary may or may not coincide. For example, the origin and size of the atlas may differ from the origin and size of the subgroup. In another example, a single subgroup may contain a plurality of atlases, or conversely, a single subgroup may be contained within a plurality of atlases. In one embodiment of the present disclosure, the minimum and/or maximum ranges of the geometry occupancy atlas may be updated based on the subgroup boundary and neighbor search and neighbor pattern generation may be performed based on the updated geometry occupancy atlas.

The following code demonstrates a method of setting or updating the maximum and minimum ranges of the geometry occupancy atlas in consideration of the subgroup boundary.

```
Vec3<int> _maxRange = {_cubeSize, _cubeSize, _cubeSize};
Vec3<int> _minRange = {0, 0, 0};


int setRange(Vec3<int> bbox_max, Vec3<int> bbox_min, Vec3<int> atlasOrigin, Vec3<int> nodeSizeLog2)
{
int changedFlag = 0;
auto bboxSize = bbox_max - bbox_min;
bool setRangeEnabledFlag = !!bboxSize[0] || !!bboxSize[1] || !!bboxSize[2];
if (setRangeEnabledFlag) {
for (int m = 0; m < 3; m++) {
int bboxMaxShift = bbox_max[m] >> nodeSizeLog2[m];
int bboxMinShift = bbox_min[m] >> nodeSizeLog2[m];
int atlasOriginShift = atlasOrigin[m] << _cubeSizeLog2;


//_maxRange (Maximum range of atlas)
if (atlasOriginShift + _cubeSize > bboxMaxShift) {
_maxRange[m] = bboxMaxShift - atlasOriginShift;
changedFlag = 1;
}
Else
_maxRange[m] = _cubeSize;


//_minRange(Minimum range of atlas)
if (bboxMinShift > atlasOriginShift) {
_minRange[m] = bboxMinShift - atlasOriginShift;
changedFlag = 1;
}
Else
_minRange[m] = 0;
}
}
return changedFlag;
}
In the code above,
```

_maxRange indicates the maximum range (or maximum value) of the atlas boundary. Its initial value is set to { cubeSize, _cubeSize, _cubeSize}. Here, cubeSize indicates the size of the atlas, and atlasOrigin indicates the origin coordinates (i.e., the starting position) of the geometry occupancy atlas.

_minRange indicates the minimum range (or minimum value) of the atlas boundary, and its initial value is set to {0, 0, 0}. That is, _minRange and _maxRange indicate the minimum and maximum values of the actually usable range within the geometry occupancy atlas, respectively.

bbox_min and bbox_max indicate the minimum and maximum values of the position of the bounding box of the subgroup, respectively.

nodeSizeLog2 indicates the node size, and changedFlag indicates whether the range of the geometry occupancy atlas has been updated.

bboxSize indicates the size of the bounding box of the subgroup and may be obtained by subtracting bbox_min from bbox max.

setRangeEnabledFlag indicates whether the size of the subgroup bounding box is not 0.

In the present disclosure, the encoder may signal the starting position and/or the size (cubeSize) of the geometry occupancy atlas in signaling information (e.g., SPS, GPS, LGSI, dependent geometry data unit header, geometry data unit, etc.) and transmit the same to the decoder of the reception device. Additionally, the encoder may signal identification information, origin information (bbox_origin), and size (bbox_size) of each subgroup in the signaling information (e.g., SPS, GPS, LGSI, dependent geometry data unit header, geometry data unit, etc.) and transmit the same to the decoder of the reception device.

In the present disclosure, the update of the range of the geometry occupancy atlas is repeatedly performed for each axis (x, y, z).

bboxMaxShift and bboxMinShift are values obtained by performing a shift operation by nodeSizeLog2, and atlasOriginShift is a value obtained by performing a shift operation on the value of atlasOrigin by _cubeSizeLog2.

The following is an update method for _maxRange.

If (atlasOriginShift + _cubeSize) is greater than bboxMaxShift, that is, if the maximum value of the atlas boundary is greater than the maximum value of the bounding box of the subgroup, _maxRange is updated to bboxMaxShift - atlasOriginShift. In other words, the maximum range of the atlas boundary is changed to the position corresponding to the maximum value of the bounding box of the subgroup.

If (atlasOriginShift + _cubeSize) is not greater than bboxMaxShift, that is, if the maximum value of the atlas boundary is not greater than the maximum value of the bounding box of the subgroup, no update is performed.

The following is an update method for _minRange.

If bboxMinShift is greater than atlasOriginShift, that is, if the minimum value of the subgroup bounding box is greater than the minimum value (or origin coordinate/starting position) of the atlas boundary, _minRange is updated to bboxMinShift - atlasOriginShift. In other words, the minimum range of the atlas boundary is changed to the position corresponding to the minimum value of the bounding box of the subgroup.

If bboxMinShift is not greater than atlasOriginShift, that is, if the minimum value of the subgroup bounding box is not greater than the minimum value (or origin coordinate/starting position) of the atlas boundary, no update is performed.

In brief, when the minimum and maximum ranges of the atlas are defined as _minRange and _maxRange, respectively, _minRange is initially set to 0 and _maxRange is set to the edge length of the cube. In this case, when the minimum boundary of the subgroup is greater than the minimum value of the atlas, the minimum range of the atlas (_minRange) is updated to the minimum value of the subgroup. When the maximum boundary of the subgroup is less than the maximum value of the atlas, the maximum range of the atlas (_maxRange) is updated to the maximum value of the subgroup.

In neighbor search and neighbor pattern generation based on the geometry occupancy atlas, the present disclosure ensures that neighbor nodes (or points) do not exceed the atlas boundary. That is, nodes exceeding the atlas boundary are not selected as neighbors of the current node. Further, in the case of layer-group slicing, instances occur where the subgroup boundary does not coincide with the atlas boundary. In this case, by updating the atlas boundary to the subgroup boundary, a neighbor pattern may be generated by searching for neighbors based on the subgroup boundary.

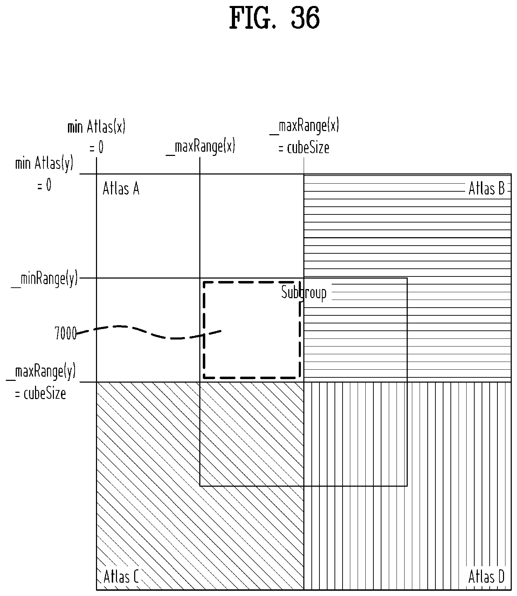

FIG. 36 is a diagram illustrating an example of updating an atlas range according to embodiments. Specifically, FIG. 36 shows an example in which the atlas boundary and the subgroup boundary do not coincide.

In particular, FIG. 36 illustrates an example case where the subgroup boundary spans across four geometry occupancy atlases. That is, it illustrates a case where a part of the subgroup is present in one geometry occupancy atlas. This is merely one embodiment; a single atlas may contain one subgroup, or a single subgroup may contain a plurality of geometry occupancy atlases. Additionally, there may be cases where the boundary of the subgroup and the boundary of the geometry occupancy atlas coincide.

That is, when the boundary of the subgroup and the boundary of the geometry occupancy atlas do not coincide, nodes outside the subgroup boundary may be referenced during neighbor search if the minimum and maximum ranges of the geometry occupancy atlas are not updated. In this case, an incorrect node value may be retrieved, leading to improper encoding, which consequently may result in the decoder being unable to perform decoding.

To prevent this case in the present disclosure, the range of the geometry occupancy atlas is adjusted based on the boundary of the subgroup.

Hereinafter, the process of updating the minimum and maximum ranges of geometry occupancy atlas A based on the subgroup boundaries is described.

In geometry occupancy atlas A, the initial minimum values (min Atlas (x), min Atlas (y)) of the atlas boundary are set to 0, and the initial maximum values are set to cubeSizeMinusOne (or cubeSize). In this case, based on the x-axis, since the minimum value of the atlas boundary is less than the minimum value of the subgroup boundary, the minimum value of the atlas boundary is updated to the minimum value (_minrange_x) of the subgroup boundary. Similarly, based on the y-axis, since the minimum value of the atlas boundary is less than the minimum value of the subgroup boundary, the minimum value of the atlas boundary is updated to the minimum value (_minRange_y) of the subgroup boundary. Further, based on the x-axis, since the maximum value of the atlas boundary and the maximum value of the subgroup boundary coincide, the maximum value of the atlas boundary is not updated. Similarly, based on the y-axis, since the maximum value of the atlas boundary and the maximum value of the subgroup boundary coincide, the maximum value of the atlas boundary is not updated. Through this process, the range of atlas A is adjusted as 7000 in FIG. 36. In the present disclosure, the adjusted range of the geometry occupancy atlas is referred to as an effective range of the atlas or a meaningful region of the atlas. That is, in the present disclosure, the size of the geometry occupancy atlas does not change, and only the effective range (or meaningful region) of the geometry occupancy atlas changes according to the subgroup boundary. This operation is applied identically to the z-axis. Further, the update method in geometry occupancy atlas A is applied identically to the remaining geometry occupancy atlases B-D.

That is, the atlas boundary minimum value (=0) may be changed to the subgroup boundary minimum value (_minRange), and/or the atlas boundary maximum value (=cubeSizeMinusOne) may be changed to the subgroup boundary maximum value (maxRange).

The reception method/device according to embodiments may provide the following effects.

The present disclosure has described a method of dividing and transmitting compressed data for point cloud data based on certain criteria. In particular, when layered coding (or hierarchical coding) is used as one application of the present disclosure, compressed data may be divided and transmitted according to layers, which may increase the storage and transmission efficiency on the transmitting side.

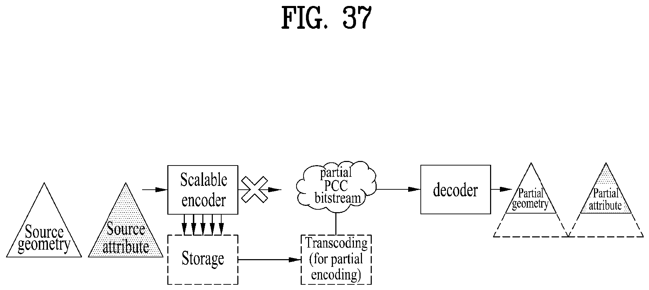

FIG. 37 is a diagram illustrating an example of providing a service by compressing geometry and attributes of point cloud data according to embodiments. Specifically, in a point cloud compression (PCC) based service, the compression rate or the number of data points may be adjusted according to receiver performance or the transmission environment. As shown in FIG. 37, when point cloud data is bundled in a single slice, if the receiver performance or transmission environment changes: 1) bitstreams suitable for each environment should be pre-converted and stored separately to be selected during transmission, or 2) transcoding is required prior to transmission. In this case, if the number of receiver environments to be supported increases or the transmission environment changes frequently, issues may arise in relation to storage space or delays caused by conversion.

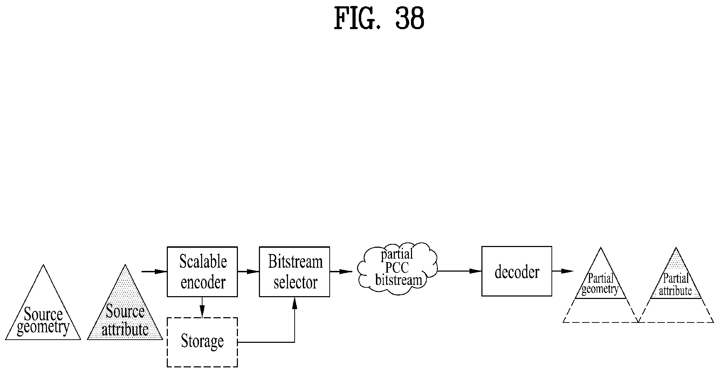

FIG. 38 is a diagram illustrating another example of providing a service by compressing geometry and attributes of point cloud data according to embodiments.

As proposed in the present disclosure, when compressed data is divided and delivered according to layers, there is an advantage that only necessary parts may be selectively delivered through a bitstream selector at the bitstream stage for precompressed data without an additional conversion process. This scheme is efficient in terms of storage space because only one storage space is required per stream. In addition, since the bitstream selector selects only the necessary layers before transmission, efficient transmission may be implemented in terms of bandwidth.

Regarding the effects of the features of the present disclosure from the receiver's perspective, when layered coding (or hierarchical coding) is used as one application, compressed data may be divided and transmitted according to layers. In this case, the efficiency at the receiving side may be increased. In particular, while applying scalable attribute coding causes delays and computational burden on the receiver because the entire coded geometry data should be received and decoded, the proposal of the present disclosure allows only the geometry layers matching the tree levels used in scalable attribute coding to be decoded, thereby reducing delay factors and increasing decoder efficiency by saving the computing power required for decoding.

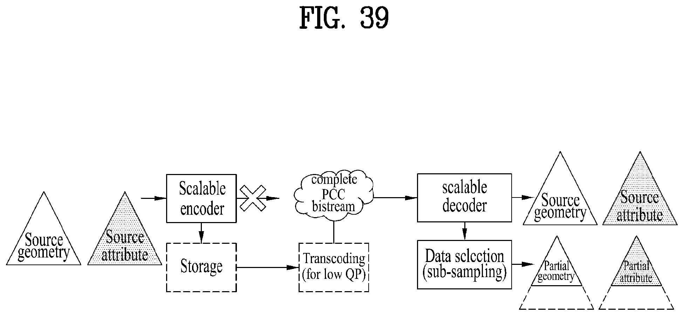

FIG. 39 is a diagram illustrating the operations at the transmitting side and receiving side when point cloud data composed of layers is transmitted. In this regard, if information for reconstructing the entire point cloud data is delivered regardless of the performance of receiver, the receiver needs a process (e.g., data selection or sub-sampling) to select only the point cloud data corresponding to the necessary layers after reconstructing the point cloud data through decoding. Since the delivered bitstream is decoded in this case, it may cause delays in receivers aiming for low latency, or decoding may not be performed depending on the performance of the receiver.

However, as proposed, when only the compressed data of the necessary layers is received according to the layers, the receiver is allowed to perform selective decoding of specific layers. Accordingly, decoder efficiency may be increased and decoders with various performance levels may be supported.

FIG. 40 is a flowchart illustrating a point cloud data transmission method according to embodiments.

The point cloud data transmission method according to embodiments may include acquiring point cloud data (71001), encoding the point cloud data (71002), and transmitting the encoded point cloud data and signaling information (71003). In this case, a bitstream containing the encoded point cloud data and the signaling information may be encapsulated into a file and transmitted.

In the operation of acquiring point cloud data (71001), part or all of the operations of the point cloud video acquisition unit 10001 of FIG. 1 may be performed or part or all of the operations of the data input unit 8000 of FIG. 8 may be performed.

In the operation of encoding the point cloud data (71002), part or all of the operations of the point cloud video encoder 10002 of FIG. 1, the encoding 20001 of FIG. 2, the point cloud video encoder of FIG. 3, the point cloud video encoder of FIG. 8, the encoder of FIG. 24, the attribute encoding of FIG. 25, and the geometry and attribute encoders of FIG. 27 may be performed to encode geometry information and attribute information.

The operation of encoding the point cloud data (71002) according to embodiments may include compressing geometry information related to the input point cloud data and compressing attribute information.

According to embodiments, the operation of compressing the geometry information may include compressing the geometry information on a per layer group and/or subgroup basis. When compressing the geometry information on a per subgroup basis, neighbor search and neighbor pattern generation may be performed based on a geometry occupancy atlas. In this case, the minimum and maximum ranges of the geometry occupancy atlas are updated based on the minimum and maximum ranges of the corresponding subgroup. Neighbor nodes (or points) of the current node (or point) to be encoded are selected within the updated minimum and maximum ranges of the geometry occupancy atlas, and a neighbor pattern of the selected neighbor nodes (or points) is generated. Since the compression of geometry information and the update of the geometry occupancy atlas have been described in detail above, a description thereof is omitted below to avoid redundancy.

The compressed geometry information is entropy-encoded and then output in the form of a geometry bitstream.

According to embodiments, the operation of compressing the attribute information includes compressing the attribute information based on positions where geometry encoding has not performed and/or based on reconstructed geometry information. In one embodiment, the attribute information may be coded using any one or a combination of RAHT coding, LOD-based predictive transform coding, and lifting transform coding.

The compressed attribute information is entropy-encoded and then output in the form of an attribute bitstream.

In the present disclosure, the signaling information may include layer-group-based slicing related information for encoding the geometry and attribute information in units of layer groups and/or subgroups and for decoding the same at the receiving side.

The layer-group-based slicing related information may be contained in at least one of the SPS, APS, LGSI, and/or the geometry data unit header (or dependent geometry data unit header) and transmitted to the receiving side. For detailed information included in the layer-group-based slicing related information, whose descriptions are omitted below, refer to FIG. 29 to FIG. 35.

FIG. 41 is a flowchart illustrating a point cloud data reception method according to embodiments.

The point cloud data reception method according to embodiments may include receiving encoded point cloud data and signaling information (81001), decoding the point cloud data based on the signaling information (81002), and rendering the decoded point cloud data (81003).

The operation of receiving the point cloud data and signaling information (81001) according to the embodiments may be performed by the receiver 10005 of FIG. 1, the transmission 20002 or decoding 20003 of FIG. 2, or the receiver 9000 or reception processor 9001 of FIG. 9.

The operation of decoding the point cloud data (81002) according to the embodiments may perform part or all of the operations of the point cloud video decoder 10006 of FIG. 1, the decoding 20003 of FIG. 2, the point cloud video encoder of FIG. 8, the point cloud video decoder of FIG. 9, the decoder of FIG. 24, the decoding of FIG. 26, and the geometry and attribute decoders of FIG. 28 to decode geometry and attribute information.

The operation of decoding the point cloud data (81002) according to the embodiments includes decoding geometry information and decoding attribute information.

The decoding of the geometry information may include decoding (i.e., reconstructing) the geometry information on a per layer group and/or subgroup basis based on the layer-group-based slicing related information included in the signaling information. When decoding the geometry information on a per subgroup basis, neighbor search and neighbor pattern generation may be performed based on a geometry occupancy atlas. In this case, the minimum and maximum ranges of the geometry occupancy atlas are updated based on the minimum and maximum ranges of the corresponding subgroup. Neighbor nodes (or points) of the current node (or point) to be decoded are selected within the updated minimum and maximum ranges of the geometry occupancy atlas, and a neighbor pattern of the selected neighbor nodes (or points) is generated. Since the decoding of geometry information and the update of the geometry occupancy atlas have been described in detail above, a description thereof is omitted below to avoid redundancy.

The operation of decoding the attribute information includes decoding (i.e., decompressing) the attribute information in on a per layer group and/or subgroup basis based on the reconstructed geometry information and the layer-group-based slicing related information included in the signaling information. In one embodiment, the attribute information may be decoded using any one or a combination of RAHT coding, LOD-based predictive transform coding, and lifting transform coding.

The rendering (81003) according to the embodiments may include reconstructing the point cloud data based on the reconstructed geometry and attribute information and performing rendering according to various rendering methods. For example, points of the point cloud content may be rendered as vertices with a certain thickness, cubes with a specific minimum size centered at the vertex position, or circles centered at the vertex position. All or part of the regions of the rendered point cloud content is provided to the user through a display (e.g., a VR/AR display, a general display, etc.). The operation of rendering the point cloud data (81003) according to the embodiments may be performed by the renderer 10007 of FIG. 1, the rendering 20004 of FIG. 2, or the renderer 9011 of FIG. 9.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in the present disclosure should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of the present disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the point cloud data transmission/reception device and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1. A method of decoding point cloud data, the method comprising:

   receiving geometry data, attribute data, and signaling information;
   decoding the geometry data based on the signaling information; and
   decoding the attribute data based on the signaling information and the decoded geometry data.

2. The method of claim 1, wherein the decoding of the geometry data comprises:

   receiving the geometry data on a sub-group basis; and
   reconstructing geometry data within a sub-group to be decoded based on the signaling information and occupancy map information corresponding to the sub-group.

3. The method of claim 2, wherein the reconstructing comprises:

   based on that a boundary of a bounding box of the sub-group mismatches a boundary of the occupancy map information, updating the boundary of the occupancy map information based on the boundary of the bounding box of the sub-group;
   searching for neighbor nodes of a current node to be decoded within the sub-group based on the updated boundary of the occupancy map information and generating a neighbor pattern; and
   reconstructing geometry data of the current node based on the neighbor pattern.

4. The method of claim 3, wherein the updating comprises:

   based on that a minimum value of the boundary of the bounding box of the sub-group is greater than a minimum value of the boundary of the occupancy map information, updating the minimum value of the boundary of the occupancy map information to the minimum value of the boundary of the bounding box of the sub-group, and

based on a maximum value of the boundary of the bounding box of the sub-group is less than a maximum value of the boundary of the occupancy map information, updating the maximum value of the boundary of the occupancy map information to the maximum value of the boundary of the bounding box of the sub-group.

5. A device for decoding point cloud data, comprising:

a receiver configured to receive geometry data, attribute data, and signaling information;
a geometry decoder configured to decode the geometry data based on the signaling information; and
an attribute decoder configured to decode the attribute data based on the signaling information and the decoded geometry data.

6. The device of claim 5, wherein the geometry decoder is configured to:

receive the geometry data on a sub-group basis; and
reconstruct geometry data within a sub-group to be decoded based on the signaling information and occupancy map information corresponding to the sub-group.

7. The device of claim 5, wherein the geometry decoder is configured to:

update, based on that a boundary of a bounding box of the sub-group mismatches a boundary of the occupancy map information, the boundary of the occupancy map information based on the boundary of the bounding box of the sub-group;
search for neighbor nodes of a current node to be decoded within the sub-group based on the updated boundary of the occupancy map information and generate a neighbor pattern; and
reconstruct geometry data of the current node based on the neighbor pattern.

8. The device of claim 7, wherein the geometry decoder is configured to:

update, based on that a minimum value of the boundary of the bounding box of the sub-group is greater than a minimum value of the boundary of the occupancy map information, the minimum value of the boundary of the occupancy map information to the minimum value of the boundary of the bounding box of the sub-group, and update, based on a maximum value of the boundary of the bounding box of the sub-group is less than a maximum value of the boundary of the occupancy map information, the maximum value of the boundary of the occupancy map information to the maximum value of the boundary of the bounding box of the sub-group.

9. A method of encoding point cloud data, the method comprising:

encoding geometry data;
encoding attribute data; and
transmitting the encoded geometry data, the encoded attribute data, and signaling information.

10. The method of claim 9, wherein the encoding of the geometry data comprises:

partitioning the geometry data on a sub-group basis; and
compressing geometry data within a sub-group to be encoded based on occupancy map information corresponding to the sub-group.

11. The method of claim 10, wherein the compressing comprises:

based on that a boundary of a bounding box of the sub-group mismatches a boundary of the occupancy map information, updating the boundary of the occupancy map information based on the boundary of the bounding box of the sub-group;
searching for neighbor nodes of a current node to be encoded within the sub-group based on the updated boundary of the occupancy map information and generating a neighbor pattern; and
compressing geometry data of the current node based on the neighbor pattern.

12. The method of claim 11, wherein the updating comprises:

based on that a minimum value of the boundary of the bounding box of the sub-group is greater than a minimum value of the boundary of the occupancy map information, updating the minimum value of the boundary of the occupancy map information to the minimum value of the boundary of the bounding box of the sub-group, and based on a maximum value of the boundary of the bounding box of the sub-group is less than a maximum value of the boundary of the occupancy map information, updating the maximum value of the boundary of the occupancy map information to the maximum value of the boundary of the bounding box of the sub-group.

13. A device for encoding point cloud data, comprising:

a geometry encoder configured to encode geometry data;
an attribute encoder configured to encode attribute data; and
a transmitter configured to transmit the encoded geometry data, the encoded attribute data, and signaling information.

14. The device of claim 13, wherein the geometry encoder is configured to:

partition the geometry data on a sub-group basis; and
compress geometry data within a sub-group to be encoded based on occupancy map information corresponding to the sub-group.

15. The device of claim 14, wherein the geometry encoder is configured to:

update, based on that a boundary of a bounding box of the sub-group mismatches a boundary of the occupancy map information, the boundary of the occupancy map information based on the boundary of the bounding box of the sub-group;
search for neighbor nodes of a current node to be encoded within the sub-group based on the updated boundary of the occupancy map information and generate a neighbor pattern; and
compress geometry data of the current node based on the neighbor pattern.

16. The device of claim 15, wherein the geometry encoder is configured to:

update, based on that a minimum value of the boundary of the bounding box of the sub-group is greater than a minimum value of the boundary of the occupancy map information, the minimum value of the boundary of the occupancy map information to the minimum value of the boundary of the bounding box of the sub-group, and update, based on a maximum value of the boundary of the bounding box of the sub-group is less than a maximum value of the boundary of the occupancy map information, the maximum value of the boundary of the occupancy map information to the maximum value of the boundary of the bounding box of the sub-group.

# FIG. 1

TRANSMISSION DEVICE

Point Cloud Video Acquisition

Point Cloud Video Encoder

Transmitter (Communication module)

RECEPTION DEVICE

Renderer

Point Cloud Video Decoder

Receiver (Communication module)

(Compressed) Bitstream

Feedback Information

FIG. 2

# FIG. 3

# FIG. 4

FIG. 5

Level of details

# FIG. 6

# FIG. 7

# FIG. 8

# FIG. 9

Reception

9000 — Receiver

9001 — Reception processor

9006

Geometry bitstream

Attribute bitstream

Set value, etc.

9002 — Arithmetic decoder

Metadata parser

Arithmetic decoder — 9007

9003 — Occupancy code-based octree reconstruction processor

Inverse quantization processor — 9008

9004 — Surface model processor (triangle reconstruction, up-sampling, voxelization)

Prediction /lifting/RAHT inverse transform processor — 9009

9005 — Inverse quantization processor

Color inverse transform processor — 9010

Sharing reconstructed position values

Renderer — 9011

# FIG. 10

FIG. 11

# FIG. 12

# FIG. 13

# FIG. 14

(a) Geo data

| G | LoD(0)~LoD(N) |
|---|---|

(b) Attr data

| A | LoD(0)~LoD(N) |
|---|---|

# FIG. 15

| Geo data | G | LoD0 | G | R1 | G | R2 |

| Attr data | A | LoD0 | A | R1 | A | R2 |

← LoD 0 →

← LoD 1 →

← LoD 2 →

FIG. 16

# FIG. 17

# FIG. 18

(a) bitstream

| G | LoD0 | A | LoD0 | G | R1 | A | R1 |
|---|------|---|------|---|----|---|----|

(b) discarded

| G | R2 | A | R2 |
|---|----|---|----|

0 (root)
1
2
3
4
5
6
7 (leaf)

LOD 0
LOD 1

(c)

# FIG. 19

(a) bitstream

| G | LoD0 | A | LoD0 | G | R1 | A | R1 | G | R2 |
|---|------|---|------|---|----|---|----|---|----|

(b) discarded

| A | R2 |
|---|-----|

(c)

0 (root)
1
2
3
4
5
6
7 (leaf)

LOD 0

LOD 1

FIG. 20

(a)

(b)

(c)

Slices :

41001  41002  41003  41004  41005

41002

41003

41000

41004

41005

# FIG. 21

Geometry coding layer structure(encoder)

0 (root)
1
2
3
4
5
6
7 (leaf)

} group 1

} group 2

group 3

| Slice1<br>(group 1) | Slice2<br>(group 2) | Slice3<br>(group 3) |
|---|---|---|

(a)

Geometry coding layer structure(decoder)

0 (root)
1
2
3
4
5
6 -----------------------
7 (leaf) -----------------------

} group 1

} group 2

| Slice1 | Slice2 | Slice3 |
|---|---|---|

(b)

# FIG. 22

Geometry tree structure

45000 — 0 (root)

45001 → Layer-group 1 — 45004

1
2
3
4

45002 — group 2-1 | group 2-2 → Layer-group 2
45003 — 5

6

7 (leaf)

Layer-group 3

group 3-1  group 3-2  group 3-3  group 3-4

| Slice1 | Slice2 | Slice3 | Slice4 | Slice5 | Slice6 | Slice7 |

group 1        group 2                    group 3

EP 4 753 261 A1

FIG. 23

(a) High-level view (coarse detail)

(b) Mid-level view (medium level detail)

(c) Low-level view (fine-grained detail)

# FIG. 24

Encoder (layer-group sliceing)
47001

47002

Slice selector
47003

Layer-group1    Layer-group2    Layer-group3

decoder
47004

High-level view (Layer-group1)    Mid-level view (layer-group1 + layer-group2)    Low-level view (layer-group1 + layer-group2 + layer-group3)

# FIG. 25

generate SPS, GPS, LGSI

Determine layer-group — S2501

Determine subgroup — S2502

Subgroup changed? — S2503
No
Yes

Save and load encdoer — S2504

update geometry occupancy atlas — S2505

Encode node — S2506

No
node++
End of nodes? — S2507
Yes

No
depth++
End of tree? — S2508
Yes

generate data unit headers

generate geometry bistreams

End of encoding

# FIG. 26

Parsing SPS, GPS, LGSI

↓

Parsing data unit header

↓

Parsing data unit

↓

Layer-group slicing enabled? — S2601

No

Yes ↓

update buffers & layer-group parameters — S2602

↓

Parsing dependent data unit header — S2603

↓

Parent subgroup detection — S2604

↓

input parent node selection — S2605

↓

Parsing dependent data unit — S2606

↓

End of geometry bitstream? — S2607

No

Yes ↓

Generate output point cloud — S2608

↓

End of decoding

# FIG. 27

# FIG. 28

# FIG. 29

slice 0 · · · slice n

| SPS | GPS | APS $_0$ | APS $_1$ | TPS | Geom $_0^0$ | Attr $_0^0$ | Attr $_1^0$ | · · · | Geom $_0^n$ | Attr $_0^n$ | Attr $_1^n$ |

| Geom_slice_header | Geom_slice_data |

| Attr_slice_header | Attr_slice_data |

EP 4 753 261 A1

# FIG. 30A

| seq_parameter_set( ) { | Descriptor |
|---|---|
| simple_profile_compatibility_flag | u(1) |
| dense_profile_compatibility_flag | u(1) |
| predictive_profile_compatibility_flag | u(1) |
| main_profile_compatibility_flag | u(1) |
| reserved_profile_compatibility_18bits | u(18) |
| slice_reordering_constraint_flag | u(1) |
| unique_point_positions_constraint_flag | u(1) |
| level_idc | u(8) |
| sps_seq_parameter_set_id | u(4) |
| frame_ctr_lsb_bits | u(5) |
| slice_tag_bits | u(5) |
| seq_origin_bits | ue(v) |
| if( seq_origin_bits ) { | |
| for( k = 0; k < 3; k++ ) | |
| seq_origin_xyz[ k ] | s(v) |
| seq_origin_log2_scale | ue(v) |
| } | |
| seq_bounding_box_size_bits | ue(v) |
| if( seq_bounding_box_size_bits ) { | |
| for( k = 0; k < 3; k++ ) | |
| seq_bounding_box_size_minus1_xyz[ k ] | u(v) |
| } | |
| seq_unit_numerator_minus1 | ue(v) |
| seq_unit_denominator_minus1 | ue(v) |
| seq_unit_in_metres_flag | u(1) |
| seq_global_scale_factor_log2 | ue(v) |
| seq_global_scale_refinement_num_bits | ue(v) |
| seq_global_scale_factor_refinement_factor | u(v) |
| sps_num_attribute_sets | ue(v) |
| for( attrId = 0; attrId < sps_num_attribute_sets; attrId++ ) { | |
| attribute_dimension_minus1[ attrId ] | ue(v) |
| attribute_instance_id[ attrId ] | ue(v) |

# FIG. 30B

| | |
|---|---|
| attribute_bitdepth_minus1[ attrId ] | ue(v) |
| known_attribute_label_flag[ attrId ] | u(1) |
| if( known_attribute_label_flag[ attrId ] ) | |
|     known_attribute_label[ attrId ] | ue(v) |
| else | |
|     attribute_label_oid[ attrId ] | oid(v) |
| num_attribute_parameters | ue(v) |
| byte_alignment( ) | |
| for( j = 0; j < num_attribute_parameters; j++ ) | |
|     attribute_parameters( attrId ) | |
|   } | |
| axis_coding_order | u(3) |
| bypass_stream_enabled_flag | u(1) |
| entropy_continuation_enabled_flag | u(1) |
| sps_extension_flag | u(1) |
| if( sps_extension_flag ) { | |
|     layer_group_enabled_flag | u(1) |
|     if(layer_group_enabled_flag) { | |
|       num_layer_groups_minus1 | u(8) |
|       for(i=0; i<=num_layer_groups_minus1; i++) { | |
|         layer_group_id[i] | u(8) |
|         num_layers_minus1[i] | u(8) |
|         subgroup_enabled_flag[i] | u(1) |
|       } | |
|       if(subgroup_enabled_flags( ) ) { | |
|         subgroup_bbox_origin_bits_minus1 | ue(v) |
|         subgroup_bbox_size_bits_minus1 | ue(v) |
|       } | |
|     } | |
|     while( more_data_in_data_unit( ) ) | |
|       sps_extension_data_flag | u(1) |
|   } | |
|   byte_alignment( ) | |
| } | |

# FIG. 31

| dependent_geometry_data_unit_header( ) { | Descriptor |
|---|---|
| dgsh_geometry_parameter_set_id | u(4) |
| dgsh_slice_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| byte_alignment( ) | |
| } | |

# FIG. 32

| layer_group_struture_inventory( ) { | Descriptor |
|---|---|
| lgsi_seq_parameter_set_id | u(4) |
| lgsi_frame_ctr_lsb_bits | u(5) |
| lgsi_frame_ctr_lsb | u(v) |
| lgsi_num_slice_ids_minus1 | u(8) |
| if(lgsi_num_slice_ids_minus1 >= 0 ) { | |
| for(sId=0; sId<=lgsi_num_slice_ids_minus1; sId++){ | |
| lgsi_slice_id[sId] | ue(v) |
| lgsi_num_layer_groups_minus1[sId] | u(8) |
| lgsi_subgroup_bbox_origin_bits_minus1[sId] | ue(v) |
| lgsi_subgroup_bbox_size_bits_minus1[sId] | ue(v) |
| for(i=0; i<=lgsi_num_layer_groups_minus1[sId]; i++){ | |
| lgsi_layer_group_id[sId][i] | u(8) |
| lgsi_num_layers_minus1[sId][i] | u(8) |
| lgsi_num_subgroups_minus1[sId][i] | u(16) |
| for(j=0; j<=lgsi_num_subgroups_minus1[sId][i]; j++){ | |
| lgsi_subgroup_id[sId][i][j] | u(16) |
| lgsi_parent_subgroup_id[sId][i][j] | u(16) |
| for(k=0; k<3; k++) | |
| lgsi_subgroup_bbox_origin[sId][i][j][k] | u(v) |
| for(k=0; k<3; k++) | |
| lgsi_subgroup_bbox_size[sId][i][j][k] | u(v) |
| } | |
| } | |
| } | |
| } | |
| lgsi_origin_bits_minus1 | ue(v) |
| for(k=0; k<3; k++) | |
| lgsi_origin_xyz[k] | se(v) |
| lgsi_origin_log2_scale | ue(v) |
| byte_alignment( ) | |
| } | |

# FIG. 33

| dependent_geometry_data_unit_header( ) { | Descriptor |
|---|---|
| dgsh_geometry_parameter_set_id | u(4) |
| dgsh_slice_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| if(checkPlanarEligibilityBasedOnOctreeDepth) { | |
| planarEligibilityType | u(8) |
| if(planarEligibilityType == 1) | |
| numFinalOutputPointsInSubgroup | u(8) |
| if(planarEligibilityType == 2) | |
| numSlicePointEstimationType | u(8) |
| if(planarEligibilityType == 3) { | |
| numLayersInSubgroup | u(8) |
| for(i=0; i<numLayersInSubgroup; i++) | |
| planarEligibleKOctreeDepthFlag[i] | u(1) |
| } | |
| } | |
| byte_alignment( ) | |
| } | |

# FIG. 34

| geometry_data_unit_header( ) { | Descriptor |
|---|---|
| ?? | |
| checkPlanarEligibilityBasedOnOctreeDepth = <br>    geom_planar_mode_enabled_flag <br>    && geom_octree_depth_planar_eligibiity_enabled_flag <br>    && ! geom_angular_mode_enabled_flag | |
| if(layer_group_enabled_flag && checkPlanarEligibilityBasedOnOctreeDepth) { | |
|     for(i = 0; i <= num_layers_minus1[0]; i++) | |
|         planar_eligible_kOctree_depth[i] | u(1) |
|     } | |
|     byte_alignment( ) | |
| } | |

# FIG. 35

| dependent_geometry_data_unit_header( ) { | Descriptor |
|---|---|
| ?? | |
|     if(layer_group_enabled_flag && checkPlanarEligibilityBasedOnOctreeDepth) { | |
|         for(i = 0; i <= num_layers_minus1[layer_group_id]; i++) | |
|             planar_eligible_kOctree_depth[i] | u(1) |
|     } | |
|     byte_alignment( ) | |
| } | |

# FIG. 36

# FIG. 37

# FIG. 38

FIG. 39

# FIG. 40

Acquire point cloud data — 71001

Encode point cloud data — 71002

Transmit encoded point cloud data and signaling information — 71003

# FIG. 41

Receive point cloud data and signaling information — 81001

Decode point cloud data — 81002

Render point cloud data — 81003

## INTERNATIONAL SEARCH REPORT

| International application No. |
| --- |
| **PCT/KR2024/010947** |

| A. | CLASSIFICATION OF SUBJECT MATTER |
| --- | --- |

**H04N 19/30**(2014.01)i; **H04N 19/597**(2014.01)i; **H04N 19/70**(2014.01)i; **H04N 19/174**(2014.01)i

According to International Patent Classification (IPC) or to both national classification and IPC

| B. | FIELDS SEARCHED |
| --- | --- |

Minimum documentation searched (classification system followed by classification symbols)

H04N 19/30(2014.01); G01S 7/481(2006.01); G01S 7/497(2006.01); G06T 17/20(2006.01); G06T 9/00(2006.01); G06T 9/40(2006.01); H04N 19/124(2014.01); H04N 19/54(2014.01); H04N 19/597(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 시그널링(signaling), 어큐판시 맵(occupancy map), 서브 그룹(sub-group), 업데이트(update)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023-287213 A1 (LG ELECTRONICS INC.) 19 January 2023 (2023-01-19)<br>See paragraphs [0099]-[0101], [0212]-[0255], [0661]-[0662] and [0928]-[0955]. | 1,5,9,13 |
| Y |  | 2-4,6-8,10-12,14-16 |
| Y | WO 2020-190097 A1 (LG ELECTRONICS INC.) 24 September 2020 (2020-09-24)<br>See paragraphs [0335]-[0336]. | 2-4,6-8,10-12,14-16 |
| X | WO 2023-080635 A1 (LG ELECTRONICS INC.) 11 May 2023 (2023-05-11)<br>See paragraphs [0085]-[0225] and claims 1, 7 and 13. | 1,5,9,13 |
| X | WO 2023-068754 A1 (LG ELECTRONICS INC.) 27 April 2023 (2023-04-27)<br>See paragraphs [0095]-[0235] and claims 1, 6 and 11. | 1,5,9,13 |
| A | US 2022-0210472 A1 (TENCENT AMERICA LLC) 30 June 2022 (2022-06-30)<br>See paragraphs [0041]-[0162] and claims 1-20. | 1-16 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 November 2024** | **15 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** |  |
| Facsimile No. **+82-42-481-8578** | Telephone No. |

Form PCT/ISA/210 (second sheet) (July 2022)

# EP 4 753 261 A1

**INTERNATIONAL SEARCH REPORT**

International application No.

**PCT/KR2024/010947**

**C. DOCUMENTS CONSIDERED TO BE RELEVANT**

| Category* | Citation of document, with indication, where appropriate, of the relevant passages | Relevant to claim No. |
|---|---|---|
| A | US 2021-0407144 A1 (QUALCOMM INCORPORATED) 30 December 2021 (2021-12-30)<br>See paragraphs [0029]-[0154]. | 1-16 |

Form PCT/ISA/210 (second sheet) (July 2022)

## INTERNATIONAL SEARCH REPORT
### Information on patent family members

International application No.

**PCT/KR2024/010947**

| Patent document cited in search report | | | Publication date (day/month/year) | Patent family member(s) | | | Publication date (day/month/year) |
|---|---|---|---|---|---|---|---|
| WO | 2023-287213 | A1 | 19 January 2023 | CN | 117730539 | A | 19 March 2024 |
| | | | | EP | 4373096 | A1 | 22 May 2024 |
| WO | 2020-190097 | A1 | 24 September 2020 | | None | | |
| WO | 2023-080635 | A1 | 11 May 2023 | CN | 118202655 | A | 14 June 2024 |
| | | | | EP | 4429248 | A1 | 11 September 2024 |
| WO | 2023-068754 | A1 | 27 April 2023 | CN | 118103731 | A | 28 May 2024 |
| | | | | EP | 4421529 | A1 | 28 August 2024 |
| | | | | KR | 10-2024-0099307 | A | 28 June 2024 |
| US | 2022-0210472 | A1 | 30 June 2022 | AU | 2021-246918 | A1 | 18 November 2021 |
| | | | | CA | 3137933 | A1 | 07 October 2021 |
| | | | | CN | 113796014 | A | 14 December 2021 |
| | | | | EP | 4128540 | A1 | 08 February 2023 |
| | | | | JP | 2022-530765 | A | 01 July 2022 |
| | | | | KR | 10-2021-0144880 | A | 30 November 2021 |
| | | | | SG | 11202111636 | A | 29 November 2021 |
| | | | | US | 2021-0306664 | A1 | 30 September 2021 |
| | | | | WO | 2021-202003 | A1 | 07 October 2021 |
| US | 2021-0407144 | A1 | 30 December 2021 | AU | 2021-296460 | A1 | 08 December 2022 |
| | | | | BR | 112022025630 | A2 | 17 January 2023 |
| | | | | CA | 3180956 | A1 | 30 December 2021 |
| | | | | CN | 115769262 | A | 07 March 2023 |
| | | | | EP | 4172942 | A1 | 03 May 2023 |
| | | | | JP | 2023-533163 | A | 02 August 2023 |
| | | | | KR | 10-2023-0027048 | A | 27 February 2023 |
| | | | | MX | 2022015409 | A | 11 January 2023 |
| | | | | TW | 202205863 | A | 01 February 2022 |
| | | | | US | 12026922 | B2 | 02 July 2024 |
| | | | | WO | 2021-262936 | A1 | 30 December 2021 |

Form PCT/ISA/210 (patent family annex) (July 2022)